(19) Europäisches Patentamt / European Patent Office / Office européen des brevets

(11) EP 4 432 636 A1

(12) **EUROPEAN PATENT APPLICATION**
published in accordance with Art. 153(4) EPC

(43) Date of publication:
**18.09.2024 Bulletin 2024/38**

(21) Application number: **22906518.0**

(22) Date of filing: **12.12.2022**

(51) International Patent Classification (IPC):
***H04L 69/323*** *(2022.01)*

(52) Cooperative Patent Classification (CPC):
**H04L 69/16; H04L 69/322; H04L 69/323;**
Y02D 30/70

(86) International application number:
**PCT/CN2022/138442**

(87) International publication number:
**WO 2023/109773 (22.06.2023 Gazette 2023/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **13.12.2021 CN 202111521474**

(71) Applicant: **Huawei Technologies Co., Ltd.**
**Shenzhen, Guangdong 518129 (CN)**

(72) Inventors:
- **DU, Rui**
  **Shenzhen, Guangdong 518129 (CN)**
- **ZHOU, Zhengchun**
  **Chengdu, Sichuan 611756 (CN)**
- **SHEN, Bingsheng**
  **Chengdu, Sichuan 611756 (CN)**
- **TANG, Xiaohu**
  **Chengdu, Sichuan 611756 (CN)**
- **LIU, Chenchen**
  **Shenzhen, Guangdong 518129 (CN)**
- **HAN, Xiao**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) SIGNAL PROCESSING METHOD AND APPARATUS

(57) Embodiments of this application disclose a signal processing method and an apparatus, to effectively improve sequence sending efficiency. The method includes: A first communication apparatus generates a PPDU, and then sends the PPDU. Correspondingly, a second communication apparatus receives the PPDU, and performs processing based on M sequences in a first field included in the PPDU. The PPDU includes the first field, the first field includes the M sequences, cross correlation energy between one of the M sequences and each of m sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2.

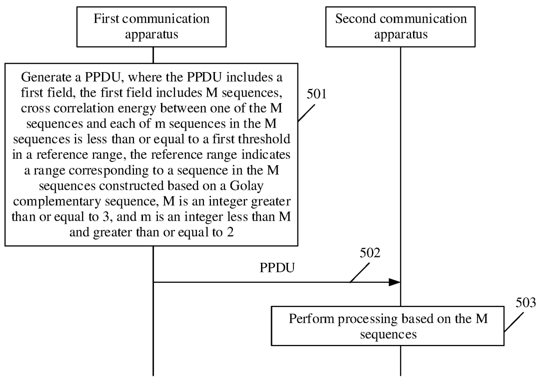


FIG. 5

EP 4 432 636 A1

## Description

This application claims priority to Chinese Patent Application No. 202111521474.7, filed with the China National Intellectual Property Administration on December 13, 2021 and entitled "SIGNAL PROCESSING METHOD AND APPARATUS", which is incorporated herein by reference in its entirety.

## TECHNICAL FIELD

This application relates to the field of communication technologies, and in particular, to a signal processing method and an apparatus.

## BACKGROUND

Currently, the institute of electrical and electronics engineers (institute of electrical and electronics engineers, IEEE) series standards include low frequency band (for example, 2.4 GHz and 5 GHz) related standards (such as 802.11n, 802.11ac, 802.11ax, and 802.11be) and high frequency band (for example, 60 GHz) related standards (such as 802.11ad and 802.11ay).

In addition, because a high-frequency signal (for example, 60 GHz) has many advantages, for example, a short wavelength, sensitivity to a moving target, a large transmission bandwidth, and high distance resolution, a related operation is usually performed by using the high-frequency signal. For example, the related operation may include channel estimation or target sensing. For example, a transmit end device sends a physical layer (physical, PHY) protocol data unit (PHY protocol data unit, PPDU) to a receive end device, so that the receive end device can perform channel estimation, target sensing, or the like based on a sequence carried in the PPDU.

Therefore, how to improve sequence sending efficiency needs to be urgently resolved.

## SUMMARY

This application provides a signal processing method and an apparatus, to effectively improve sequence sending efficiency.

According to a first aspect, an embodiment of this application provides a signal processing method. The method includes:

generating a physical layer (physical, PHY) protocol data unit (PHY protocol data unit, PPDU), where the PPDU includes a first field, the first field includes M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and sending the PPDU.

According to a second aspect, an embodiment of this application provides a signal processing method. The method includes:

receiving a physical layer protocol data unit PPDU, where the PPDU includes a first field, the first field includes M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and performing processing based on the M sequences.

In this embodiment of this application, a first communication apparatus may send the M sequences at one sending time, so that a sending time in which the first communication apparatus sends the sequences can be reduced, and sequence sending efficiency can be improved. In addition, the first communication apparatus may send the M sequences at the sending time, so that a second communication apparatus can receive the M sequences at the same time. Therefore, efficiency of performing processing based on the M sequences by the second communication apparatus is further effectively improved.

With reference to the first aspect or the second aspect, in a possible implementation, that cross correlation energy between one of the M sequences and each of m sequences in the M sequences is less than or equal to a first threshold in a reference range includes any one or more of the following: when m=3 or m=2, the cross correlation energy between one of the M sequences and each of the m sequences in the M sequences is zero in the reference range; cross correlation energy between any two of at least four sequences in the M sequences is zero in the reference range; and cross correlation energy between any two of at least eight sequences in the M sequences is less than or equal to the first threshold in the reference range

Optionally, when the first field includes four sequences, cross correlation energy between any two of the four sequences, for example, a first sequence to a fourth sequence, is zero in the reference range. Therefore, the first communication apparatus may send the four sequences at one sending time. This effectively shortens the time at which the first communication apparatus sends the sequences. Optionally, when the first field includes eight sequences, cross correlation energy between one of a first sequence to a fourth sequence and one of a fifth sequence to an eighth sequence is less than or equal to the first threshold in the reference range. In addition, cross correlation energy between any two of the first sequence to the fourth sequence is zero in the reference range, and cross correlation energy between any two of the fifth sequence to the eighth sequence is zero in the reference range. Therefore, the first communication apparatus may send the eight sequences at one sending time. Therefore, the time at which the first communication apparatus sends the sequences is further shortened. Optionally, when the first field includes the eight sequences, each of the eight sequences may be a sequence obtained based on the Golay complementary sequence and the matrix P. Therefore, in combination with the matrix P, it can be ensured that cross correlation energy between any two of the eight sequences is zero in the reference range.

For example, the second communication apparatus may perform channel estimation, target sensing, synchronization (for example, time domain synchronization and/or frequency domain synchronization), or the like based on the M sequences.

With reference to the first aspect or the second aspect, in a possible implementation, the M sequences include a first sequence, a second sequence, a third sequence, and a fourth sequence. A partial sequence in the first sequence, a partial sequence in the second sequence, a partial sequence in the third sequence, and a partial sequence in the fourth sequence respectively meet the following conditions:

$$\mathrm{CE1}=(p_{0,0}G_e^i, p_{0,1}G_e^i, p_{0,2}G_f^i, p_{0,3}G_f^i, p_{0,4}G_e^i, p_{0,5}G_e^i, p_{0,6}G_f^i, p_{0,7}G_f^i)$$

$$\mathrm{CE2}=(p_{0,0}G_e^j, p_{0,1}G_e^j, p_{0,2}G_f^j, p_{0,3}G_f^j, p_{0,4}G_e^j, p_{0,5}G_e^j, p_{0,6}G_f^j, p_{0,7}G_f^j)$$

$$\mathrm{CE3}=(p_{1,0}G_e^i, p_{1,1}G_e^i, p_{1,2}G_f^i, p_{1,3}G_f^i, p_{1,4}G_e^i, p_{1,5}G_e^i, p_{1,6}G_f^i, p_{1,7}G_f^i),$$

or

$$\mathrm{CE4}=(p_{1,0}G_e^j, p_{1,1}G_e^j, p_{1,2}G_f^j, p_{1,3}G_f^j, p_{1,4}G_e^j, p_{1,5}G_e^j, p_{1,6}G_f^j, p_{1,7}G_f^j)$$

$$\mathrm{CE1}=(p_{0,0}G_e^i, p_{0,1}G_f^i, p_{0,2}G_e^i, p_{0,3}G_f^i, p_{0,4}G_e^i, p_{0,5}G_f^i, p_{0,6}G_e^i, p_{0,7}G_f^i)$$

$$\mathrm{CE2}=(p_{0,0}G_e^j, p_{0,1}G_f^j, p_{0,2}G_e^j, p_{0,3}G_f^j, p_{0,4}G_e^j, p_{0,5}G_f^j, p_{0,6}G_e^j, p_{0,7}G_f^j)$$

$$\mathrm{CE3}=(p_{1,0}G_e^i, p_{1,1}G_f^i, p_{1,2}G_e^i, p_{1,3}G_f^i, p_{1,4}G_e^i, p_{1,5}G_f^i, p_{1,6}G_e^i, p_{1,7}G_f^i),$$

where

$$\mathrm{CE4}=(p_{1,0}G_e^j, p_{1,1}G_f^j, p_{1,2}G_e^j, p_{1,3}G_f^j, p_{1,4}G_e^j, p_{1,5}G_f^j, p_{1,6}G_e^j, p_{1,7}G_f^j)$$

CE1 represents the partial sequence in the first sequence, CE2 represents the partial sequence in the second sequence, CE3 represents the partial sequence in the third sequence, CE4 represents the partial sequence in the fourth sequence, a value of $P_{0,\,n}$ is +1 or -1, a value of $P_{1,\,n}$ is +1 or -1, n is an integer greater than or equal to 0 and less than or equal to 7, and $G_e^i$ and $G_f^i$ are Golay complementary sequences; and j=i+1, where a value of i is one of 1, 3, 5, or 7.

With reference to the first aspect or the second aspect, in a possible implementation, values of $P_{0,\,0}$, $P_{0,\,1}$, $P_{0,\,2}$, $P_{0,\,3}$, $P_{0,\,4}$, $P_{0,\,5}$, $P_{0,\,6}$, and $P_{0,\,7}$ are any one of the following groups:

-1, -1, 1, 1, 1, 1, 1, 1;
-1, -1, 1, 1, 1, 1, 1, 1;
1, 1, -1, -1, 1, 1, 1, 1;
1, 1, -1, -1, 1, 1, 1, 1;
1, 1, 1, 1, -1, -1, 1, 1;
1, 1, 1, 1, -1, -1, 1, 1;
-1, -1, -1, -1, -1, -1, 1, 1;
-1, -1, -1, -1, -1, -1, 1, 1;
1, -1, -1, 1, -1, 1, -1, 1;
-1, 1, 1, -1, -1, 1, -1, 1;
-1, 1, -1, 1, 1, -1, -1, 1;
1, -1, 1, -1, 1, -1, -1, 1;
-1, 1, -1, 1, -1, 1, 1, -1;
1, -1, 1, -1, -1, 1, 1, -1;
1, -1, -1, 1, 1, -1, 1, -1; and
-1, 1, 1, -1, 1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, 1, -1, 1;
-1, 1, 1, -1, 1, -1, 1, -1;
-1, 1, 1, -1, -1, 1, -1, 1;
1, -1, -1, 1, 1, -1, 1, -1;
-1, 1, -1, 1, 1, -1, -1, 1;
1, -1, 1, -1, -1, 1, 1, -1;
1, -1, 1, -1, 1, -1, -1, 1;
-1, 1, -1, 1, -1, 1, 1, -1;
1, 1, -1, -1, -1, -1, -1, -1;
-1, -1, 1, 1, -1, -1, -1, -1;
-1, -1, -1, -1, 1, 1, -1, -1;
1, 1, 1, 1, 1, 1, -1, -1;
1, 1, 1, 1, 1, 1, -1, -1;
-1, -1, -1, -1, 1, 1, -1, -1;
-1, -1, 1, 1, -1, -1, -1, -1; and
1, 1, -1, -1, -1, -1, -1, -1.

In this embodiment of this application, the foregoing corresponding groups may be understood as that the values of $P_{0,0}$, $P_{0,1}$, $P_{0,2}$, $P_{0,3}$, $P_{0,4}$, $P_{0,5}$, $P_{0,6}$, and $P_{0,7}$ correspond to the values of $P_{1,0}$, $P_{1,1}$, $P_{1,2}$, $P_{1,3}$, $P_{1,4}$, $P_{1,5}$, $P_{1,6}$, and $P_{1,7}$. For example, if the values of $P_{0,0}$, $P_{0,1}$, $P_{0,2}$, $P_{0,3}$, $P_{0,4}$, $P_{0,5}$, $P_{0,6}$, and $P_{0,7}$ are the first group shown above (namely, a first group of values of $P_{0,0}$, $P_{0,1}$, $P_{0,2}$, $P_{0,3}$, $P_{0,4}$, $P_{0,5}$, $P_{0,6}$, and $P_{0,7}$), the values of $P_{1,0}$, $P_{1,1}$, $P_{1,2}$, $P_{1,3}$, $P_{1,4}$, $P_{1,5}$, $P_{1,6}$, and $P_{1,7}$ are also the first group shown above (second group of values of $P_{1,0}$, $P_{1,1}$, $P_{1,2}$, $P_{1,3}$, $P_{1,4}$, $P_{1,5}$, $P_{1,6}$, and $P_{1,7}$). For example, if the values of $P_{0,0}$, $P_{0,1}$, $P_{0,2}$, $P_{0,3}$, $P_{0,4}$, $P_{0,5}$, $P_{0,6}$, and $P_{0,7}$ are the second group shown above (namely, a second group of values of $P_{0,0}$, $P_{0,1}$, $P_{0,2}$, $P_{0,3}$, $P_{0,4}$, $P_{0,5}$, $P_{0,6}$, and $P_{0,7}$), the values of $P_{1,0}$, $P_{1,1}$, $P_{1,2}$, $P_{1,3}$, $P_{1,4}$, $P_{1,5}$, $P_{1,6}$, and $P_{1,7}$ are also the second group shown above (second group of values of $P_{1,0}$, $P_{1,1}$, $P_{1,2}$, $P_{1,3}$, $P_{1,4}$, $P_{1,5}$, $P_{1,6}$, and $P_{1,7}$). For another example, if the values of $P_{0,0}$, $P_{0,1}$, $P_{0,2}$, $P_{0,3}$, $P_{0,4}$, $P_{0,5}$, $P_{0,6}$, and $P_{0,7}$ are the sixteenth group shown above (namely, a sixteenth group of values of $P_{0,0}$, $P_{0,1}$, $P_{0,2}$, $P_{0,3}$, $P_{0,4}$, $P_{0,5}$, $P_{0,6}$, $P_{0,7}$), the values of $P_{1,0}$, $P_{1,1}$, $P_{1,2}$, $P_{1,3}$, $P_{1,4}$, $P_{1,5}$, $P_{1,6}$, and $P_{1,7}$ are also the sixteenth group shown above (sixteenth group of values of $P_{1,0}$, $P_{1,1}$, $P_{1,2}$, $P_{1,3}$, $P_{1,4}$, $P_{1,5}$, $P_{1,6}$, and $P_{1,7}$). It may be understood that the descriptions of the corresponding groups are also applicable to the following descriptions.

It may be understood that the values of $P_{0,0}$, $P_{0,1}$, $P_{0,2}$, $P_{0,3}$, $P_{0,4}$, $P_{0,5}$, $P_{0,6}$, and $P_{0,7}$ and the values of $P_{1,0}$, $P_{1,1}$, $P_{1,2}$, $P_{1,3}$, $P_{1,4}$, $P_{1,5}$, $P_{1,6}$, and $P_{1,7}$ are all illustrated by using a table as an example. However, this should not be construed as a limitation on this embodiment of this application.

With reference to the first aspect or the second aspect, in a possible implementation, values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

-1, 1, -1, 1, 1, 1, 1, 1;
-1, 1, -1, 1, 1, 1, 1, 1;
-1, 1, -1, 1, 1, 1, 1, 1;

-1, 1, -1, 1, 1, 1, 1, 1;
1, -1, 1, -1, 1, 1, 1, 1;
1, -1, 1, -1, 1, 1, 1, 1;
1, -1, 1, -1, 1, 1, 1, 1;
1, -1, 1, -1, 1, 1, 1, 1;
1, 1, -1, 1, -1, 1, 1, 1;
1, 1, -1, 1, -1, 1, 1, 1;
1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, 1, -1, -1, 1, 1, 1;
-1, -1, 1, -1, -1, 1, 1, 1;
-1, -1, -1, 1, 1, -1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
1, 1, 1, -1, 1, -1, 1, 1;
1, -1, -1, 1, -1, -1, 1, 1;
1, -1, -1, 1, -1, -1, 1, 1;
1, -1, -1, 1, -1, -1, 1, 1;
-1, 1, 1, -1, -1, -1, 1, 1;
-1, 1, 1, -1, -1, -1, 1, 1;
-1, 1, 1, -1, -1, -1, 1, 1;
-1, 1, 1, 1, 1, 1, -1, 1;
-1, 1, 1, 1, 1, 1, -1, 1;
-1, 1, 1, 1, 1, 1, -1, 1;
1, -1, -1, -1, 1, 1, -1, 1;
1, -1, -1, -1, 1, 1, -1, 1;
1, -1, -1, -1, 1, 1, -1, 1;
1, 1, 1, 1, -1, 1, -1, 1;
1, 1, 1, 1, -1, 1, -1, 1;
1, 1, 1, 1, -1, 1, -1, 1;
-1, -1, -1, -1, -1, 1, -1, 1;
-1, -1, -1, -1, -1, 1, -1, 1;
-1, -1, -1, -1, -1, 1, -1, 1;
-1, -1, 1, 1, 1, -1, -1, 1;
-1, -1, 1, 1, 1, -1, -1, 1;
1, 1, -1, -1, 1, -1, -1, 1;
1, 1, -1, -1, 1, -1, -1, 1;
1, -1, 1, 1, -1, -1, -1, 1;
1, -1, 1, 1, -1, -1, -1, 1;
-1, 1, -1, -1, -1, -1, -1, 1;
-1, 1, -1, -1, -1, -1, -1, 1;
1, -1, 1, 1, 1, 1, 1,-1;
1, -1, 1, 1, 1, 1, 1, -1;
-1, 1, -1, -1, 1, 1, 1, -1;
-1, 1, -1, -1, 1, 1, 1, -1;
-1, -1, 1, 1, -1, 1, 1, -1;
-1, -1, 1, 1, -1, 1, 1, -1;
1, 1, -1, -1, -1, 1, 1, -1;
1, 1, -1, -1, -1, 1, 1, -1;
1, 1, 1, 1, 1, -1, 1, -1;
-1, -1, -1, -1, 1, -1, 1, -1;
-1, 1, 1, 1, -1, -1, 1, -1;
1, -1, -1, -1, -1, -1, 1, -1;
1, -1, -1, 1, 1, 1, -1, -1;

-1, 1, 1, -1, 1, 1, -1, -1;
-1, -1, -1, 1, -1, 1, -1, -1; and
1, 1, 1, -1, -1, 1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, -1, 1, 1;
-1, -1, 1, 1, 1, -1, -1, 1;
1, 1, -1, -1, -1, 1, 1, -1;
-1, 1, 1, -1, 1, 1, -1, -1;
-1, 1, 1, -1, -1, -1, 1, 1;
1, 1, -1, -1, 1, -1, -1, 1;
-1, -1, 1, 1, -1, 1, 1, -1;
1, -1, -1, 1, 1, 1, -1, -1;
-1, -1, -1, 1, 1, -1, 1, 1;
1, -1, 1, 1, -1, -1, -1, 1;
-1, 1, -1, -1, 1, 1, 1, -1;
1, 1, 1, -1, -1, 1, -1, -1;
1, 1, 1, -1, 1, -1, 1, 1;
-1, 1, -1, -1, -1, -1, -1, 1;
1, -1, 1, 1, 1, 1, 1, -1;
-1, -1, -1, 1, -1, 1, -1, -1;
-1, 1, 1, 1, 1, 1, -1, 1;
1, -1, -1, -1, -1, -1, 1, -1;
-1, -1, 1, -1, 1, -1, -1, -1;
1, -1, -1, -1, 1, 1, -1, 1;
-1, 1, 1, 1, -1, -1, 1, -1;
1, 1, -1, 1, 1, -1, -1, -1;
1, 1, 1, 1, -1, 1, -1, 1;
-1, -1, -1, -1, 1, -1, 1, -1;
1,-1, 1, -1, -1, -1, -1, -1;
-1, -1, -1, -1, -1, 1, -1, 1;
1, 1, 1, 1, 1, -1, 1, -1;
-1, 1, -1, 1, -1, -1, -1, -1;
1, -1, 1, 1, -1, -1, -1, 1;
-1, 1, -1, -1, 1, 1, 1, -1;
1, 1, 1, -1, -1, 1, -1, -1;
-1, 1, -1, -1, -1, -1, -1, 1;
1, -1, 1, 1, 1, 1, 1, -1;
-1, -1, -1, 1, -1, 1, -1, -1;
-1, -1, 1, 1, 1, -1, -1, 1;
1, 1, -1, -1, -1, 1, 1, -1;
-1, 1, 1, -1, 1, 1, -1, -1;
1, 1, -1, -1, 1, -1, -1, 1;
-1, -1, 1, 1, -1, 1, 1, -1;
1, -1, -1, 1, 1, 1, -1, -1;
-1, -1, -1, -1, 1, -1, 1, -1;
1,-1, 1, -1, -1, -1, -1, -1;
1, 1, 1, 1, 1, -1, 1, -1;
-1, 1, -1, 1, -1, -1, -1, -1;
1, -1, -1, -1, -1, -1, 1, -1;
-1, -1, 1, -1, 1, -1, -1, -1;
-1, 1, 1, 1, -1, -1, 1, -1;
1, 1, -1, 1, 1, -1, -1, -1;
-1, 1, 1, 1, -1, -1, 1, -1;
1, 1, -1, 1, 1, -1, -1, -1;
1, -1, -1, -1, -1, -1, 1, -1;
-1, -1, 1, -1, 1, -1, -1, -1;

1, 1, 1, 1, 1, -1, 1, -1;
-1, 1, -1, 1, -1, -1, -1, -1;
-1, -1, -1, -1, 1, -1, 1, -1;
1, -1, 1, -1, -1, -1, -1, -1;
1, -1, -1, 1, 1, 1, -1, -1;
-1, 1, 1, -1, 1, 1, -1, -1;
-1, -1, -1, 1, -1, 1, -1, -1;
1, 1, 1, -1, -1, 1, -1, -1;
-1, 1, -1, 1, -1, -1, -1, -1;
1, -1, 1, -1, -1, -1, -1, -1;
1, 1, -1, 1, 1, -1, -1, -1; and
-1, -1, 1, -1, 1, -1, -1, -1.

With reference to the first aspect or the second aspect, in a possible implementation, values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
-1, 1, 1, 1, 1, 1, -1, 1;
1, -1, -1, -1, 1, 1, -1, 1;
1, -1, 1, 1, -1, -1, -1, 1;
-1, 1, -1, -1, -1, -1, -1, 1;
1, -1, 1, 1, 1, 1, 1, -1;
-1, 1, -1, -1, 1, 1, 1, -1;
-1, 1, 1, 1, -1, -1, 1, -1; and
1, -1, -1, -1, -1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, 1, 1, -1, -1, -1, 1;
-1, 1, -1, -1, 1, 1, 1, -1;
-1, 1, -1, -1, -1, -1, -1, 1;
1, -1, 1, 1, 1, 1, 1, -1;
-1, 1, 1, 1, 1, 1, -1, 1;
1, -1, -1, -1, -1, -1, 1, -1;
1, -1, -1, -1, 1, 1, -1, 1;
-1, 1, 1, 1, -1, -1, 1, -1;
1, 1, 1, -1, -1, 1, -1, -1;
-1, -1, -1, 1, -1, 1, -1, -1;
-1, -1, 1, -1, 1, -1, -1, -1;
1, 1, -1, 1, 1, -1, -1, -1;
1, 1, -1, 1, 1, -1, -1, -1;
-1, -1, 1, -1, 1, -1, -1, -1;
-1, -1, -1, 1, -1, 1, -1, -1; and
1, 1, 1, -1, -1, 1, -1, -1.

With reference to the first aspect or the second aspect, in a possible implementation, values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

1, -1, 1, 1, -1, 1, 1, 1;
1, -1, 1, 1, -1, 1, 1, 1;
1, -1, 1, 1, -1, 1, 1, 1;

1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
1, 1, 1, -1, 1, 1, -1, 1;
1, 1, 1, -1, 1, 1, -1, 1;
1, 1, 1, -1, 1, 1, 1, -1, 1;
1, 1, 1, -1, 1, 1, 1, -1, 1;
1, 1, 1, -1, 1, 1, 1, -1, 1;
1, 1, -1, 1, -1, -1, -1, 1
1, 1, -1, 1, -1, -1, -1, 1;
1, 1, -1, 1, -1, -1, -1, 1;
1, 1, -1, 1, -1, -1, -1, 1;
1, 1, -1, 1, -1, -1, -1, 1;
-1, -1, 1, -1, -1, -1, -1, 1;
-1, -1, 1, -1, -1, -1, -1, 1;
-1, -1, 1, -1, -1, -1, -1, 1;
-1, -1, 1, -1, -1, -1, -1, 1;
1, 1, -1, 1, 1, 1, 1, -1;
1, 1, -1, 1, 1, 1, 1, -1;
1, 1, -1, 1, 1, 1, 1, -1;
1, 1, -1, 1, 1, 1, 1, -1;
-1, -1, 1, -1, 1, 1, 1, -1;
-1, -1, 1, -1, 1, 1, 1, -1;
-1, -1, 1, -1, 1, 1, 1, -1;
-1, -1, -1, 1, -1, -1, 1, -1;
-1, -1, -1, 1, -1, -1, 1, -1;
-1, -1, -1, 1, -1, -1, 1, -1;
1, 1, 1, -1, -1, -1, 1, -1;
1, 1, 1, -1, -1, -1, 1, -1;
-1, 1, 1, 1, -1, 1, -1, -1;

-1, 1, 1, 1, -1, 1, -1, -1;
1, -1, -1, -1, -1, 1, -1, -1; and
1, -1, 1, 1, 1, -1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

-1, 1, -1, -1, -1, 1, 1, 1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, 1, 1, 1, 1, -1, 1, 1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, 1, 1, -1, 1, 1, -1, 1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;

-1, -1, -1, 1, -1, -1, 1, -1;
-1, 1, 1, 1, -1, 1, -1, -1;
1,-1, 1, 1, 1, -1, -1, -1;
1, 1, 1, -1, -1, -1, 1, -1;
1, -1, -1, -1, -1, 1, -1, -1;
-1, 1, -1, -1, 1, -1, -1, -1;
-1, 1, 1, 1, -1, 1, -1, -1;
1, -1, 1, 1, 1, -1, -1, -1;
1, -1, -1, -1, -1, 1, -1, -1;
-1, 1, -1, -1, 1, -1, -1, -1;
1, -1, 1, 1, 1, -1, -1, -1; and
-1, 1, -1, -1, 1, -1, -1, -1.

With reference to the first aspect or the second aspect, in a possible implementation, the sequence $p_{0,0}G_e^i, p_{0,1}G_e^i, p_{0,2}G_f^i, p_{0,3}G_f^i$ and the sequence $p_{0,4}G_e^i, p_{0,5}G_e^i, p_{0,6}G_f^i, p_{0,7}G_f^i$ constitute a Golay complementary pair; the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair; the sequence $p_{0,0}G_e^j, p_{0,1}G_e^j, p_{0,2}G_f^j, p_{0,3}G_f^j$ and the sequence $p_{0,4}G_e^j, p_{0,5}G_e^j, p_{0,6}G_f^j, p_{0,7}G_f^j$ constitute a Golay complementary pair; the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair; the sequence $p_{0,0}G_e^i, p_{0,1}G_f^i, p_{0,2}G_e^i, p_{0,3}G_f^i$ and the sequence $p_{0,4}G_e^i, p_{0,5}G_f^i, p_{0,6}G_e^i, p_{0,7}G_f^i$ constitute a Golay complementary pair; the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair; the sequence $p_{0,0}G_e^j, p_{0,1}G_f^j, p_{0,2}G_e^j, p_{0,3}G_f^j$ and the sequence $p_{0,4}G_e^j, p_{0,5}G_f^j, p_{0,6}G_e^j, p_{0,7}G_f^j$ constitute a Golay complementary pair; and/or the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair.

It may be understood that the Golay complementary pair shown in this embodiment of this application may alternatively be understood as a Golay complementary sequence or a Golay complementary sequence pair. A name of the Golay complementary pair is not limited in this embodiment of this application.

With reference to the first aspect or the second aspect, in a possible implementation, the M sequences further include a fifth sequence, a sixth sequence, a seventh sequence, and an eighth sequence. A partial sequence in the fifth sequence, a partial sequence in the sixth sequence, a partial sequence in the seventh sequence, and a partial sequence in the eighth sequence respectively meet the following conditions:

$$\mathrm{CE5} = \mathrm{circshift}(\mathrm{CE1}, N \cdot r)$$

$$\mathrm{CE6} = \mathrm{circshift}(\mathrm{CE2}, N \cdot r)$$

$$\mathrm{CE7} = \mathrm{circshift}(\mathrm{CE3}, N \cdot r)$$

where

$$\mathrm{CE8} = \mathrm{circshift}(\mathrm{CE4}, N \cdot r)$$

CE5 represents the partial sequence in the fifth sequence, CE6 represents the partial sequence in the sixth sequence, CE7 represents the partial sequence in the seventh sequence, CE8 represents the partial sequence in the eighth sequence, CE1 represents the partial sequence in the first sequence, CE2 represents the partial sequence in the second sequence, CE3 represents the partial sequence in the third sequence, CE4 represents the partial sequence in the fourth sequence, circshift(-) represents a left cyclic shift, N represents a length of the Golay complementary sequence, and a value of r is one of 1 to 7.

For example, the value of r is 1, 2, 3, 4, 5, 6, or 7. For example, r=2 or r=6. It may be understood that, in consideration of values of cross correlation energy between different sequences in the reference range, when r=2 or r=6, cross correlation energy between the first sequence and the fifth sequence is small in the reference range, or cross correlation energy between the first sequence and the seventh sequence is small in the reference range. The first sequence and the fifth sequence that are shown herein, and the first sequence and the seventh sequence that are shown herein are merely examples. For descriptions of cross correlation energy between different sequences in the reference range when r=2 or r=6, refer to the method embodiments shown below.

With reference to the first aspect or the second aspect, in a possible implementation, M is less than or equal to 8.

With reference to the first aspect or the second aspect, in a possible implementation, the M sequences are used for any one or more of channel estimation, target sensing, or synchronization.

With reference to the first aspect or the second aspect, in a possible implementation, the PPDU further includes any one or more of the following fields: legacy short training field (legacy short training field, L-STF), legacy long training field (legacy long training field, L-LTF), legacy header (legacy header, L header), enhanced directional multi-gigabit-header-A (EDMG-header-A), enhanced directional multi-gigabit short training field (EDMG-STF), enhanced directional multi-gigabit channel estimation field (EDMG channel estimation field, EDMG-CEF), enhanced directional multi-gigabit-header-B (EDMG-header-B), short training field (short training field, STF), and long training field (long training field, LTF).

For example, the first field shown in this embodiment of this application may be referred to as a training field, a synchronization field, or the like. A name of the first field is not limited in this embodiment of this application.

According to a third aspect, an embodiment of this application provides a communication apparatus, configured to perform the method in any one of the first aspect or the possible implementations of the first aspect. The communication apparatus includes units that perform the method in any one of the first aspect or the possible implementations of the first aspect.

For example, the communication apparatus may be a first communication apparatus, or a chip in the first communication apparatus.

According to a fourth aspect, an embodiment of this application provides a communication apparatus, configured to perform the method in any one of the second aspect or the possible implementations of the second aspect. The communication apparatus includes units that perform the method in any one of the second aspect or the possible implementations of the second aspect.

For example, the communication apparatus may be a second communication apparatus, or a chip in the second communication apparatus.

In the third aspect or the fourth aspect, the communication apparatus may include a transceiver unit and a processing unit. For specific descriptions of the transceiver unit and the processing unit, refer to apparatus embodiments shown below.

According to a fifth aspect, an embodiment of this application provides a communication apparatus. The communication apparatus includes a processor, configured to perform the method shown in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal. For example, the transceiver may be further configured to send a PPDU.

In this embodiment of this application, the communication apparatus may be a first communication apparatus, a chip in the first communication apparatus, or the like.

According to a sixth aspect, an embodiment of this application provides a communication apparatus. The communication apparatus includes a processor, configured to perform the method shown in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one component. In other words, the processor and the memory may alternatively be integrated together.

In a possible implementation, the communication apparatus further includes a transceiver. The transceiver is configured to receive or send a signal. For example, the transceiver may be configured to receive a PPDU.

In this embodiment of this application, the communication apparatus may be a second communication apparatus, a chip in the second communication apparatus, or the like.

According to a seventh aspect, an embodiment of this application provides a communication apparatus. The communication apparatus includes a logic circuit and an interface, and the logic circuit is coupled to the interface. The logic circuit is configured to generate a PPDU, and the interface is configured to output the PPDU.

It may be understood that the interface and the logic circuit may further be understood as follows:

For example, the logic circuit is configured to obtain processed data (for example, the PPDU), and the interface is configured to output the data (for example, the PPDU) processed by the logic circuit.

It may be understood that for descriptions of the PPDU, M sequences, and a Golay complementary sequence, refer to the descriptions in the first aspect or the second aspect, or refer to various embodiments shown below. Details are not described herein again.

According to an eighth aspect, an embodiment of this application provides a communication apparatus. The communication apparatus includes a logic circuit and an interface, and the logic circuit is coupled to the interface. The interface is configured to input a PPDU, and the logic circuit is configured to process the PPDU (for example, process M sequences carried in the PPDU).

It may be understood that the interface and the logic circuit may further be understood as follows:

For example, the interface is configured to input to-be-processed data (for example, the PPDU), and the logic circuit is configured to process the to-be-processed data (for example, the PPDU).

It may be understood that for descriptions of the PPDU, the M sequences, and a Golay complementary sequence, refer to the descriptions in the first aspect or the second aspect, or refer to various embodiments shown below. Details are not described herein again.

According to a ninth aspect, an embodiment of this application provides a computer-readable storage medium. The computer-readable storage medium is configured to store a computer program. When the computer program is run on a computer, the method shown in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method shown in any one of the second aspect or the possible implementations of the second aspect is performed.

According to an eleventh aspect, an embodiment of this application provides a computer program product. The computer program product includes a computer program or computer code. When the computer program or computer code is run on a computer, the method shown in any one of the first aspect or the possible implementations of the first aspect is performed.

According to a twelfth aspect, an embodiment of this application provides a computer program product. The computer program product includes a computer program or computer code. When the computer program or computer code is run on a computer, the method shown in any one of the second aspect or the possible implementations of the second aspect is performed.

According to a thirteenth aspect, an embodiment of this application provides a computer program. When the computer program is run on a computer, the method shown in any one of the first aspect or the possible implementations of the first aspect is performed.

According to a fourteenth aspect, an embodiment of this application provides a computer program. When the computer program is run on a computer, the method shown in any one of the second aspect or the possible implementations of the second aspect is performed.

According to a fifteenth aspect, an embodiment of this application provides a wireless communication system. The wireless communication system includes a first communication apparatus and a second communication apparatus. The first communication apparatus is configured to perform the method shown in any one of the first aspect or the possible implementations of the first aspect, and the second communication apparatus is configured to perform the method shown in any one of the second aspect or the possible implementations of the second aspect.

## BRIEF DESCRIPTION OF DRAWINGS

FIG. 1 is a schematic diagram of structures of an access point and a station according to an embodiment of this application;

FIG. 2 is a schematic diagram of an architecture of a communication system according to an embodiment of this application;

FIG. 3a and FIG. 3b are schematic diagrams of structures of PPDUs according to embodiments of this application;

FIG. 4a is a schematic diagram of a structure of a CE sequence according to an embodiment of this application;

FIG. 4b is a schematic diagram of a structure of CE sequence autocorrelation according to an embodiment of this application;

FIG. 4c is a schematic diagram of sending sequences corresponding to a plurality of streams according to an embodiment of this application;

FIG. 4d is a schematic diagram of a structure of a CE sequence according to an embodiment of this application;

FIG. 5 is a schematic flowchart of a signal processing method according to an embodiment of this application;

FIG. 6a to FIG. 6d are schematic diagrams of structures of CE sequences according to embodiments of this application;

FIG. 7a and FIG. 7b are schematic diagrams of structures of CE sequences according to embodiments of this application;

FIG. 8a and FIG. 8b are schematic diagrams of structures of CE sequences according to embodiments of this application; and

FIG. 9 to FIG. 11 are schematic diagrams of structures of communication apparatuses according to embodiments of this application.

## DESCRIPTION OF EMBODIMENTS

To make objectives, technical solutions, and advantages of this application clearer, the following further describes this application with reference to accompanying drawings.

In the specification, claims, and the accompanying drawings of this application, terms such as "first" and "second" are only intended to distinguish between different objects but do not describe a particular order. In addition, terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe an association relationship between associated objects and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items. For example, at least one of a, b, and c may indicate a, b, c, "a and b", "a and c", "b and c", or "a, b, and c".

A method provided in this application may be applied to various communication systems, for example, an internet of things (internet of things, IoT) system, a narrowband internet of things (narrowband internet of things, NB-IoT) system, a long term evolution (long term evolution, LTE) system, a 5th generation (5th generation, 5G) communication system, and a new communication system (for example, 6G) emerging in future communication development. The method provided in this application may be further applied to a wireless local area network (wireless local area network, WLAN) system, for example, Wi-Fi.

The method provided in this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, has a function of communicating or sensing with another device (for example, the station or another access point) in a WLAN network, and certainly, may further have a function of communicating or sensing with another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip or a processing system installed in the entire device. The device in which the chip or the processing system is installed may implement the method and a function in embodiments of this application under control of the chip or the processing system. The AP in embodiments of this application is an apparatus that provides a service for a STA, and may support the 802.11 series protocols. For example, the access point may be an access point for a terminal (for example, a mobile phone) to access a wired (or wireless) network, and is mainly deployed in a home, a building, and a park. A typical coverage radius is tens of meters to 100-odd meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and the function in embodiments of this application. The access point in this application may be a high efficiency (high efficiency, HE) AP, an extremely high throughput (extremely high throughput, EHT) AP, or an access point applicable to a future Wi-Fi standard.

The station is an apparatus having a wireless communication function, supports communication or sensing by using a WLAN protocol, and has a capability of communicating or sensing with another station or the access point in the WLAN network. In the WLAN system, the station may be referred to as a non-access point station (non-access point station, non-AP STA). For example, the STA is any user communication device that allows a user to communicate with or sense an AP and further communicate with the WLAN. The apparatus having the wireless communication function may be an entire device, or may be a chip or processing system installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function.

The WLAN system can provide high-speed and low-latency transmission. With continuous evolution of WLAN application scenarios, the WLAN system is to be applied to more scenarios or industries, for example, the internet of things industry, the internet of vehicles industry, the banking industry, enterprise offices, exhibition halls of stadiums, concert halls, hotel rooms, dormitories, wards, classrooms, supermarkets, squares, streets, production workshops, and warehousing. It is clear that a device (for example, an access point or a station) that supports WLAN communication or sensing may be a sensor node (for example, a smart water meter, a smart electricity meter, or a smart air detection node) in smart city, a smart device (for example, a smart camera, a projector, a display, a television, a stereo, a refrigerator, or a washing machine) in smart home, a node in the internet of things, an entertainment terminal (for example, AR, VR, or another wearable device), a smart device (for example, a printer, a projector, a loudspeaker, or a stereo) in smart office, an internet of vehicles device in the internet of vehicles, an infrastructure (for example, a vending machine, a self-service navigation station of a supermarket, a self-service cash register device, or a self-service ordering machine) in daily life scenarios, a device in a large sports and music venue, or the like. For example, the access point and the station may be devices applied to the internet of vehicles, internet of things nodes in the internet of things (IoT, internet of things), or sensors, or may be smart cameras, smart remote controls, or smart water/electricity meters in a smart home, or may be sensors in a smart city. Specific forms of the STA and the AP are not limited in embodiments of this application, and are merely examples for description herein.

Although this application is mainly described by using a network in which IEEE 802.11 is deployed as an example, a person skilled in the art easily understands that various aspects of this application can be expanded to other networks that use various standards or protocols, for example, Bluetooth (Bluetooth), a high performance radio LAN (high performance radio LAN, HIPERLAN) (a wireless standard that is similar to the IEEE 802.11 standard, and is mainly used in Europe), a wide area network (WAN), a wireless local area network (wireless local area network, WLAN), a personal area network (personal area network, PAN), or another known or later developed network.

For example, FIG. 1 is a schematic diagram of structures of an access point and a station according to an embodiment of this application. The AP may have a plurality of antennas, or may have a single antenna. As shown in FIG. 1, the AP includes a physical layer (physical layer, PHY) processing circuit and a media access control (media access control, MAC) processing circuit. The physical layer processing circuit may be configured to process a physical layer signal, and the MAC layer processing circuit may be configured to process a MAC layer signal. The 802.11 standard focuses on the PHY and the MAC. As shown in FIG. 1, FIG. 1 further shows a schematic diagram of a structure of a STA having a single antenna. In an actual scenario, the STA may alternatively have a plurality of antennas, and may be a device having more than two antennas. The STA may include a PHY processing circuit and a MAC processing circuit. The physical layer processing circuit may be configured to process a physical layer signal, and the MAC layer processing circuit may be configured to process a MAC layer signal.

The method provided in this application may be applied to any one or more of the following scenarios: a scenario in which one node performs data transmission with one or more nodes, uplink/downlink transmission of a single user, and/or uplink/downlink transmission of multiple users; device to device (device to device, D2D) transmission; and a scenario in which a target in an environment is sensed, a distance, a speed, an angle, and other information of the target are estimated, an action of the sensed target is identified and imaged based on the relevant information, and synchronization such as time synchronization is performed. For example, WLAN sensing is a technology that uses a WLAN wireless signal to sense a target. This technology may be based on an ability to measure or sample an environment through radio, so that every communication path between two physical devices can obtain information about the surrounding environment.

The node may be an AP or a STA. For ease of description, the following uses communication between the AP and the STA as an example for description.

For example, the communication system to which the method provided in this application may be applied may include an access point (access point, AP) and a station (station, STA). The access point may also be understood as an access point entity, and the station may also be understood as a station entity. For example, this application is applicable to a scenario in which an AP communicates with or senses a STA in the WLAN. Optionally, the AP may communicate with or sense a single STA, or the AP may simultaneously communicate with or sense a plurality of STAs. Specifically, communication between the AP and the plurality of STAs may further be classified into downlink transmission in which the AP simultaneously sends signals to the plurality of STAs, and uplink transmission in which the plurality of STAs send signals to the AP. The AP and the STA may support WLAN communication protocols, and the communication protocols may include the IEEE802.11 series protocols, for example, low frequency band (for example, 2.4 GHz and 5 GHz) protocols such as 802.11n, 802.11ac, and 802.11ax; for another example, high frequency band (for example, 60 GHz) protocols such as 802.11ad/directional multi-gigabit (directional multi-gigabit, DMG), and 802.11ay/enhanced directional multi-gigabit (enhanced directional multi-gigabit, EDMG); and for another example, the 802.11 ay single carrier physical layer (single carrier physical layer, SC PHY) protocol. It is clear that with continuous evolution and development of communication technologies, the communication protocol may further include a next-generation protocol of IEEE 802.11 ay or IEEE802.11ad.

FIG. 2 is a schematic diagram of an architecture of a communication system according to an embodiment of this application. The communication system may include one or more APs and one or more STAs. FIG. 2 shows one access point, for example, an AP, and three stations, for example, a STA 1, a STA 2, and a STA3. It may be understood that FIG. 2 shows only one AP and three STAs as an example. However, there may be more or less APs or STAs. This is not limited in this application.

In a communication apparatus shown below in this application, a first communication apparatus may be an access point or a station, and a second communication apparatus may also be an access point or a station. For example, the first communication apparatus may be an access point, and the second communication apparatus is an access point. For another example, the first communication apparatus is a station, and the second communication apparatus is a station. For another example, the first communication apparatus may be an access point, and the second communication apparatus is a station. For another example, the first communication apparatus may be a station, and the second communication apparatus is an access point. It may be understood that the first communication apparatus and the second communication apparatus shown herein may also be collectively referred to as the communication apparatus.

It may be understood that, in this application, the signal processing method provided in this application is described by using an example in which the first communication apparatus sends a physical layer protocol data unit (PHY protocol data unit, PPDU) to the second communication apparatus. However, the method shown in this application is further applicable to various types of PPDUs. For example, the PPDU may include a multi-user physical layer protocol data unit (multi-user PHY protocol data unit, MU PPDU), a single-user physical layer protocol data unit (single-user PHY protocol data unit, SU PPDU), or a trigger based physical layer protocol data unit (trigger based PHY protocol data unit, TB PPDU). Any PPDU that has a function similar to that of the PPDU shown in embodiments of this application falls within the protection scope of this application. A PPDU shown in FIG. 3a and/or FIG. 3b shown below is merely an example. With standard evolution, a form of the PPDU may also change. However, as long as a field or some fields in the PPDU conforms/conform to a feature of a first field shown in the following descriptions in this application, the PPDU falls within the protection scope of this application.

For example, FIG. 3a is a schematic diagram of a structure of a PPDU. As shown in FIG. 3a, the PPDU may include a legacy short training field (legacy short training field, L-STF), a legacy long training field (legacy long training field, L-LTF), a legacy header (legacy header, L-header) field, an enhanced directional multi-gigabit-header-A (EDMG-header-A) field, an enhanced directional multi-gigabit short training field (EDMG-STF), an enhanced directional multi-gigabit channel estimation field (EDMG channel estimation field, EDMG-CEF), an enhanced directional multi-gigabit-header-B (EDMG-header-B) field, a data (data) field, and training field unit (training field unit, TRN unit) fields. The training field unit may include a sequence (sequence). It may be understood that for specific descriptions of the PPDU shown in FIG. 3a, refer to the 802.11ay EDMG protocol, and details are not described herein again.

For example, FIG. 3b is a schematic diagram of a structure of a PPDU. For example, the PPDU may include a short training field (short training field, STF), a long training field (long training field, LTF), a header (header) field, a data (data) field, and training field unit (TRN unit) fields. It may be understood that for specific descriptions of the PPDU shown in FIG. 3b, refer to the 802.11ad DMG protocol.

The following describes in detail a Golay (Golay) complementary sequence (which may also be referred to as a Golay complementary sequence) in this application.

For example, when binary constant modulus sequences x and y with lengths of N (in other words, the sequence lengths are N, or lengths of Golay complementary sequences are N) satisfy the following formula (1), the binary constant modulus sequences x and y may be referred to as Golay complementary sequences:

$$x(n)\otimes x^{*}(-n)+y(n)\otimes y^{*}(-n)=2N\delta(n) \quad (1),$$

where

the superscript * represents complex conjugation, and the symbol ⊗ represents a convolution operation.

With reference to Golay complementary sequences specified in a related standard, for example, in the section 28.10 of 802.11ay, ( $Ga_N^1$ , $Gb_N^1$ ) and ( $Ga_N^2$ , $Gb_N^2$ ) have a zero cross correlation (zero cross correlation, ZCC) characteristic, as shown in the following formula (2) and formula (3). Similarly, ( $Ga_N^3$ , $Gb_N^3$ ) and ( $Ga_N^4$ , $Gb_N^4$ ), ( $Ga_N^5$ , $Gb_N^5$ ) and ( $Ga_N^6$ , $Gb_N^6$ ), and ( $Ga_N^7$ , $Gb_N^7$ ) and ( $Ga_N^8$ , $Gb_N^8$ ) also have the ZCC characteristic:

$$Ga_N^2(-n)\otimes Ga_N^1(n)+Gb_N^2(-n)\otimes Gb_N^1(n)=0 \quad (2);$$

and

$$Ga_N^1(-n)\otimes Ga_N^2(n)+Gb_N^1(-n)\otimes Gb_N^2(n)=0 \quad (3).$$

It may be understood that superscripts 1 to 8 shown herein may be understood as sequence indexes, sequence numbers, or the like. For example, a CE1 sequence used when the first communication apparatus sends one spatial stream may be formed by $Ga_N^1$ and $Gb_N^1$ , a CE2 sequence used when the first communication apparatus sends two spatial streams may be formed by $Ga_N^2$ and $Gb_N^2$ (the CE1 sequence is also sent when the two spatial streams are sent), a CE3 sequence used when the first communication apparatus sends three spatial streams may be formed by $Ga_N^3$ and $Gb_N^3$ , and so on. Examples are not enumerated herein. n represents an element index, a chip index, or the like, and the symbol ⊗ represents the convolution operation.

It may be understood that the foregoing superscripts 1 to 8 are merely examples. For example, with standard evolution, more Golay complementary sequences such as ( $Ga_N^9$ , $Gb_N^9$ ) may further appear. This is not limited in embodiments of this application.

It should be noted that, the foregoing provides only one type of Golay complementary sequence, that is, ( $Ga_N^i, Gb_N^i$ ), and the description of the Golay complementary sequence shown above is also applicable to another type of Golay complementary sequence, for example, ( $Gc_N^i, Gd_N^i$ ). It is clear that with standard evolution, there may be another type of Golay complementary type having a function similar to that of the foregoing Golay complementary sequence. This is not limited in embodiments of this application. It may be understood that for specific content of the Golay complementary sequence, refer to a related standard or protocol, for example, 802.11ay. Details are not described in embodiments of this application again.

For example, a CE sequence may be used to perform WLAN sensing (sensing). During WLAN sensing, a one-way distance L may satisfy the following formula (4):

$$L = \frac{N \times c}{Chip_rate} \quad (4),$$

where

L represents the distance, N represents the length of the Golay complementary sequence, c represents a speed of light, and *Chip rate* represents a chip rate.

If an example in which a chip rate (which may also be referred to as a symbol rate) specified in the 802. Hay SC PHY standard is 1.76 Gpbs is used, a bit rate sent per second is 1.76 G, and therefore *Chip rate=1.76* Gbps=1.76 Gb/s in the formula (2). For example, when N=128, $L = \frac{128 \times 3.0 \times 10^8 m/s}{1.76 \times 10^9 b/s} = 21.8181$ m. Therefore, a round-trip distance L/2=10.9091 m, and the distance can meet most application scenarios of WLAN sensing.

It should be noted that N shown above is merely an example. N shown below in this application may be equal to 128, 256, 512, or the like. A specific value of the sequence length N is not limited in this application. However, as a value of N changes, the distance L also changes, and a reference range shown below in this application also changes.

Generally, the first communication apparatus may send the PPDU to the second communication apparatus. Therefore, when receiving the PPDU, the second communication apparatus may perform channel estimation, WLAN sensing, synchronization, or the like based on a plurality of sequences included in the PPDU. For example, the plurality of sequences included in the PPDU may be obtained based on a CE sequence and/or a matrix P, and the CE sequence is obtained based on Golay complementary sequences. For example, as shown in FIG. 4d, the CE1 sequence may be obtained based on Golay complementary sequences ( $Ga_{128}^1$, $Gb_{128}^1$ ), and the CE2 sequence may be obtained based on Golay complementary sequences ( $Ga_{128}^2$, $Gb_{128}^2$ ). In addition, the CE1 sequence and the CE2 sequence number have a same symbol sequence, which may be referred to as having a same symbol structure, or may be referred to as having a same construction manner (for example, which is represented by a same row (Row) in FIG. 4c). The symbol sequence shown in this application refers to positive and negative symbols of Golay complementary sequences constituting a CE sequence. For example, a symbol sequence of the CE1 sequence refers to positive and negative symbols of $Ga_{128}^1$ and $Gb_{128}^1$ . For another example, a symbol sequence of the CE2 sequence refers to positive and negative symbols of $Ga_{128}^2$ and $Gb_{128}^2$ . For another example, the CE3 sequence may be obtained based on a Golay complementary sequence ( $Ga_{128}^3$, $Gb_{128}^3$ ), a CE4 sequence may be obtained based on a Golay complementary sequence ( $Ga_{128}^4$, $Gb_{128}^4$ ), a CE5 sequence may be obtained based on a Golay complementary sequence ( $Ga_{128}^5$, $Gb_{128}^5$ ), a CE6 sequence may be obtained based on a Golay complementary sequence ( $Ga_{128}^6$, $Gb_{128}^6$ ), a CE7 sequence may be obtained based on a Golay complementary sequence ( $Ga_{128}^7$, $Gb_{128}^7$ ), and a CE8 sequence may be obtained based on a Golay complementary sequence ( $Ga_{128}^8$, $Gb_{128}^8$ ).

As shown in FIG. 4a, FIG. 4a is a schematic diagram of a structure of a CE sequence constructed by using Golay complementary sequences. The CE sequence is constructed by using the Golay complementary sequences, so that autocorrelation side lobe energy of the CE sequence is zero (zero may also be referred to as 0) in a reference range (for example, -127 to +127 and excluding 0). For example, the CE sequence may include ten units, and a length of each unit is 128. For example, a first unit of the CE sequence may be a cyclic prefix, and the cyclic prefix may be a last unit in Gv. For another example, a last unit of the CE sequence may be a cyclic suffix, and the cyclic suffix may be a first unit in Gu. For another example, the CE sequence may further include Gu and Gv. Gu and Gv constitute a Golay complementary pair. For example, Gu={ $-Gb_{128}$, $-Ga_{128}$, $Gb_{128}$, $-Ga_{128}$} and Gv={ $-Gb_{128}$, $Ga_{128}$, $-Gb_{128}$, $-Ga_{128}$}. It may be understood that a construction manner of the CE sequence shown in FIG. 4a is merely an example, and should not be construed as a limitation on this embodiment of this application.

As shown in FIG. 4b, FIG. 4b is a schematic diagram of an autocorrelation result of a CE sequence. It can be seen from FIG. 4b that autocorrelation side lobe energy is zero in a reference range (for example, -127 to +127 and excluding 0). In FIG. 4b, a horizontal coordinate indicates a delay index (delay index), and a vertical coordinate indicates amplitude (amplitude) energy. It can be seen from FIG. 4b that, in the range from -127 to +127, an autocorrelation result of the CE sequence at a horizontal coordinate 0 may reach 1024 (in other words, autocorrelation main lobe energy is 1024), and an autocorrelation result of the CE sequence is 0 in the range from -127 to +127, excluding 0. Therefore, the reference range shown in this application may include a range in which the autocorrelation side lobe energy of the sequence is zero. It may be understood that the horizontal coordinate in FIG. 4b may alternatively be represented as a symbol, an element, or a bit.

Table 1a shows cross correlation energy values of any two of the CE1 sequence to the CE8 sequence shown in this embodiment of this application in the reference range.

**Table 1a**

| | CE1 | CE2 | CE3 | CE4 | CE5 | CE6 | CE7 | CE8 |
|---|---|---|---|---|---|---|---|---|
| CE1 | 1024 | 0 | 256 | 160 | 256 | 160 | 512 | 128 |
| CE2 | 0 | 1024 | 160 | 256 | 160 | 256 | 128 | 512 |
| CE3 | 256 | 160 | 1024 | 0 | 160 | 288 | 512 | 144 |
| CE4 | 160 | 256 | 0 | 1024 | 288 | 160 | 144 | 512 |
| CE5 | 256 | 160 | 160 | 288 | 1024 | 0 | 512 | 144 |
| CE6 | 160 | 256 | 288 | 160 | 0 | 1024 | 144 | 512 |
| CE7 | 512 | 128 | 512 | 144 | 512 | 144 | 1024 | 0 |
| CE8 | 128 | 512 | 144 | 512 | 144 | 512 | 0 | 1024 |

For example, the matrix P may be shown in the following formula (5):

$$P = \begin{bmatrix} +1 & +1 & +1 & +1 \\ +1 & +1 & +1 & +1 \\ +1 & -1 & +1 & -1 \\ +1 & -1 & +1 & -1 \\ +1 & +1 & -1 & -1 \\ +1 & +1 & -1 & -1 \\ +1 & -1 & -1 & +1 \\ +1 & -1 & -1 & +1 \end{bmatrix} \quad (5).$$

It may be understood that in the foregoing formula (5), the first row is the same as the second row, the third row is the same as the fourth row, the fifth row is the same as the sixth row, and the seventh row is the same as the eighth row. Therefore, the foregoing formula (5) may also be equivalently expressed as the following formula:

$$P = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \quad (6).$$

It may be understood that the formula (5) and the formula (6) show matrices P that need to be used when the first communication apparatus sends eight or less spatial streams. With reference to the formula (5) or the formula (6), FIG. 4c is a schematic diagram of sending a multi-stream CE sequence. In FIG. 4c, a horizontal coordinate may indicate a time (time), and a vertical coordinate may indicate a spatial stream (spatial stream) (which may also be referred to as a stream for short, and is referred to as a stream for short in FIG. 4c). In addition, FIG. 4c is a schematic diagram of sending a CE sequence combined with the matrix P. As shown in FIG. 4c, values of the first row in the formula (5) correspond to positive and negative symbols of the first row (namely, a row corresponding to a stream #1) shown in FIG. 4c, values of the second row in the formula (5) correspond to positive and negative symbols of the second row (namely, a row corresponding to a stream #2) shown in FIG. 4c, values of the third row in the formula (5) correspond to positive and negative symbols of the third row (namely, a row corresponding to a stream #3) shown in FIG. 4c, values in the fourth row of the formula (5) correspond to positive and negative symbols of the fourth row (namely, a row corresponding to a stream #4) shown in FIG. 4c, and so on. Examples are not enumerated herein.

When the PPDU includes two sequences, for example, a dashed line 1 including CE1 and CE2 shown in FIG. 4c, because cross correlation energy between the CE1 sequence and the CE2 sequence is zero in the reference range, the first communication apparatus may send the CE1 sequence and the CE2 sequence by using the PPDU at one sending time, for example, T1. However, when the PPDU includes more than two sequences, because cross correlation energy between the CE1 sequence and each CE sequence in the CE3 sequence to the CE8 sequence is large in the reference range, when the first communication apparatus needs to send the more than two sequences, the first communication apparatus needs to send the PPDU at two or more sending times, to ensure that the second communication apparatus can effectively perform channel estimation, WLAN sensing, synchronization, or the like. For example, when the PPDU sent by the first communication apparatus includes four sequences, for example, a dashed line 2 including CE1 to CE4 shown in FIG. 4c, the first communication apparatus needs to send the PPDU at a first sending time, for example, T1, and sequence numbers included in the PPDU are CE1 to CE4. In addition, the first communication apparatus further needs to send the PPDU at a second sending time, for example, T2, and sequences included in the PPDU are CE1, CE2, -CE3, and -CE4. The rest can be deduced by analogy, and examples are not enumerated herein. For example, when the PPDU sent by the first communication apparatus includes eight sequences, the first communication apparatus needs to send the eight sequences at four sending times (for example, T1, T2, T3, and T4 shown in FIG. 4c).

It may be understood that the sending time shown in FIG. 4c may also be referred to as a sending time window, a transmitting time, or the like. Specific names of T1, T2, T3, and T4 shown in FIG. 4c are not limited in this embodiment of this application.

As described above, in addition to being used for channel estimation, the sequence in this application may be further used for sensing (for example, WLAN sensing shown above) a target in an environment. When sensing is performed on the target in the environment, channel estimation may be performed according to the foregoing procedure, and then processing such as multi-path elimination and target parameter (time, distance, and angle) estimation is further performed based on a channel estimation result, to sense the target. Alternatively, the sequence in this application may be further used for synchronization, for example, time domain synchronization or frequency domain synchronization, or time synchronization or frequency synchronization.

For a specific procedure or method of channel estimation, target sensing, or synchronization, refer to a related standard or protocol. Details are not described in this application again.

It can be learned from the foregoing analysis that, when the PPDU that needs to be sent by the first communication apparatus includes more than two sequences, the first communication apparatus needs to send the PPDU at a plurality of sending times, so that the second communication apparatus can effectively perform signal processing based on the more than two sequence numbers. In other words, when the more than two sequences are sent by using the foregoing method, the first communication apparatus needs more sending times, to ensure that the second communication apparatus can correctly perform signal processing. For example, the second communication apparatus may perform channel estimation (including MIMO channel estimation), target sensing, or synchronization (including time domain synchronization and/or frequency domain synchronization) based on the plurality of sequences included in the PPDU.

In view of this, this application provides a signal processing method and an apparatus, to reduce a time in which a first communication apparatus sends sequences on a basis that a second communication apparatus can correctly perform channel estimation, target sensing, synchronization, or the like, to improve efficiency of target sensing (including WLAN sensing), MIMO channel estimation, synchronization, and the like.

Before the signal processing method provided in embodiments of this application is described, the following first describes in detail a Golay complementary sequence in embodiments of this application.

A length N of the Golay complementary sequence in embodiments of this application is 128, 256, 512, a quantity greater than 512, 32, 64, or the like. A value of N is not limited in embodiments of this application.

For example, when N=128, a reference range may be -127 to +127 (which may include -127 and/or +127). For example, unit lengths (indicating a length of a unit) of Golay complementary sequences such as $Ga_{128}^{1}$ and $Gb_{128}^{1}$, $Ga_{128}^{2}$ and $Gb_{128}^{2}$, $Ga_{128}^{3}$ and $Gb_{128}^{3}$, $Ga_{128}^{4}$ and $Gb_{128}^{4}$, $Ga_{128}^{5}$ and $Gb_{128}^{5}$, $Ga_{128}^{6}$ and $Gb_{128}^{6}$, $Ga_{128}^{7}$ and $Gb_{128}^{7}$, $Ga_{128}^{8}$ and $Gb_{128}^{8}$ are 128, respectively. For another example, unit lengths (indicating a length of a unit) of Golay complementary sequences such as $Gc_{128}^{1}$ and $Gd_{128}^{1}$, $Gc_{128}^{2}$ and $Gd_{128}^{2}$, $Gc_{128}^{3}$ and $Gd_{128}^{3}$, $Gc_{128}^{4}$ and $Gd_{128}^{4}$, $Gc_{128}^{5}$ and $Gd_{128}^{5}$, $Gc_{128}^{6}$ and $Gd_{128}^{6}$, $Gc_{128}^{7}$ and $Gd_{128}^{7}$, $Gc_{128}^{8}$ and $Gd_{128}^{8}$ are 128, respectively. To be specific, when N=128, a range in which autocorrelation side lobe energy of a CE sequence is zero may be -127 to +127 (including -127 and/or +127, and excluding 0). A range in which cross correlation energy between different CE sequences is zero is -127 to +127 (including -127 and/or +127, and including 0). As shown in Table 1a, a range in which cross correlation energy between CE1 and CE2 is zero (for example, the value 0 in the second row and third column shown in Table 1a and the value 0 in third row and second column shown in Table 1a) is -127 to +127 (including -127 and/or +127, and including 0).

For example, when N=64, a reference range may be -63 to +63 (which may include - 63 and/or +63). To be specific, when N=64, a range in which autocorrelation side lobe energy of a CE sequence is zero may be -63 to +63 (including -63 and/or +63, and excluding 0). A range in which cross correlation energy between different CE sequences is zero may be -63 to +63 (including -63 and/or +63, and including 0). For example, when N=256, a reference range may be -255 to +255 (which may include -255 and/or +255). To be specific, when N=256, a range in which autocorrelation side lobe energy of a CE sequence is zero may be -255 to +255 (including -255 and/or +255, and excluding 0). A range in which cross correlation energy between different CE sequences is zero may be -255 to +255 (including -255 and/or +255, and including 0). For example, when N=512, a reference range may be -511 to +511 (which may include -511 and/or +511). To be specific, when N=512, a range in which autocorrelation side lobe energy of a CE sequence is zero may be -511 to +511 (including -511 and/or +511, and excluding 0). A range in which cross correlation energy between different CE sequences is zero may be -511 to +511 (including -511 and/or +511, and including 0).

Therefore, the reference range shown in embodiments of this application may be understood as a range in which cross correlation energy between two CE sequences is zero, and/or a range in which autocorrelation side lobe energy of one CE sequence is zero. It may be understood that, with reference to M sequences shown in embodiments of this application, the reference range may be understood as any one or more of the following: a range in which autocorrelation side lobe energy of each of the M sequences is zero, a range in which cross correlation energy between any two of a first sequence to a fourth sequence in the M sequences is zero, a range in which cross correlation energy between any two of a fifth sequence to an eighth sequence in the M sequences is zero, and a range in which cross correlation energy between one of the first sequence to the fourth sequence and one of the fifth sequence to the eighth sequence in the M sequences is less than or equal to a first threshold. Similarly, with reference to the M sequences shown in embodiments of this application, the reference range may indicate a range corresponding to a sequence in the M sequences constructed based on the Golay complementary sequence, the reference range may indicate a local range corresponding to each sequence in the M sequences constructed based on the Golay complementary sequence, or the like. For example, the reference range may indicate a range corresponding to each of the first sequence to the eighth sequence constructed based on the Golay complementary sequence. It may be understood that the descriptions of the reference range are also applicable to the following descriptions.

It may be understood that the foregoing eight pairs of Golay complementary sequences are merely examples, and the foregoing types of Golay complementary sequences are merely examples, and should not be construed as limitations on embodiments of this application.

For brevity, in the following method shown in embodiments of this application, lengths of Golay complementary sequences are omitted, and the Golay complementary sequences shown below are represented, for example, by $Ga^1$ and $Gb^1$, $Ga^2$ and $Gb^2$, $Ga^3$ and $Gb^3$, $Ga^4$ and $Gb^4$, $Ga^5$ and $Gb^5$, $Ga^6$ and $Gb^6$, $Ga^7$ and $Gb^7$, $Ga^8$ and $Gb^8$, or $Gc^1$ and $Gd^1$, $Gc^2$ and $Gd^2$, $Gc^3$ and $Gd^3$, $Gc^4$ and $Gd^4$, $Gc^5$ and $Gd^5$, $Gc^6$ and $Gd^6$, $Gc^7$ and $Gd^7$, and $Gc^8$ and $Gd^8$.

FIG. 5 is a schematic flowchart of a signal processing method according to an embodiment of this application. For descriptions of a first communication apparatus and a second communication apparatus in the signal processing method, refer to FIG. 1 and/or FIG. 2. For descriptions of a PPDU, refer to FIG. 3a and/or FIG. 3b. For descriptions of a Golay complementary sequence, refer to FIG. 4a to FIG. 4d. Details are not described below again. As shown in FIG. 5, the method includes the following steps.

501: The first communication apparatus generates the PPDU, where the PPDU includes a first field, the first field includes M sequences, cross correlation energy between one of the M sequences and each of m sequences in the M sequences is less than or equal to a first threshold in a reference range, the reference range indicates a range corresponding to a sequence in the M sequences constructed based on the Golay complementary sequence, M is an integer greater than or equal to 3, and m is an integer less than M and greater than or equal to 2.

It may be understood that the first field includes M sequences may also be understood as follows: The first field is used to carry the M sequences, the first field carries the M sequences, or the like. A description manner between the first field and the M sequences is not limited in this embodiment of this application. For descriptions of the reference range, refer to the foregoing descriptions, and details are not described herein again. For example, the first field may be a TRN in the PPDU, or the first field may be an EDMG-CEF in the PPDU, or the first field may be an LTF in the PPDU. For example, the M sequences may be carried in a TRN in 802.11ay SC PHY, and the TRN may be used for target sensing, beam training, and the like. For another example, the M sequences may be carried in an EDMG-CEF in 802.11ay SC PHY, and the EDMG-CEF may be used for channel estimation (for example, MIMO channel estimation). For another example, the M sequences may be carried in a TRN in 802.11ad, and the TRN may be used for target sensing and beam training. For another example, the M sequences may be carried in a DMG-CEF in 802.11ad, and the DMG-CEF may be used for channel estimation. A specific name of the first field or a specific function of the M sequences is not enumerated herein.

In some examples, the M sequences comply with a rule mentioned in the following implementations.

For example, each of the M sequences may be obtained based on the Golay complementary sequence and/or a symbol sequence, and the symbol sequence indicates positive and negative symbols of the Golay complementary sequence. For example, a sequence included in the first field may be referred to as a CE sequence, a synchronization sequence, or the like. A specific name of the sequence is not limited in this embodiment of this application. It may be understood that for the descriptions of the Golay complementary sequence, refer to the foregoing descriptions, and details are not described herein again. For example, the M sequences may correspond to M spatial streams, and one sequence corresponds to one spatial stream. For another example, the M sequences are sequentially sorted. For example, the M sequences included in the first field may be sequentially sorted in a manner of a first sequence, a second sequence, ..., and an M* sequence. A presentation form of the M sequences in the first field is not limited in this embodiment of this application.

In a possible implementation, M=4, and the four sequences included in the first field may be a first sequence, a second sequence, a third sequence, and a fourth sequence. In this case, cross correlation energy between any two of the first sequence to the fourth sequence is zero in the reference range. It may be understood that this embodiment of this application is also applicable to M=3, and details are not described herein again.

In a possible implementation, M=8, and the eight sequences included in the first field may be a first sequence, a second sequence, ..., and an eighth sequence. Optionally, the first communication apparatus may send the eight sequences at one sending time. Optionally, the first communication apparatus may send the eight sequences at two sending times. In this case, each of the eight sequences may be obtained based on the Golay complementary sequence and a matrix P, or each of the eight sequences may be obtained based on the Golay complementary sequence, a symbol sequence, and a matrix P. It may be understood that this embodiment of this application is also applicable to M=5, M=6, or M=7, and details are not described herein again. It may be understood that when each of the eight sequences is obtained based on the Golay complementary sequence and the matrix P, a specific form of the matrix P is not limited in this embodiment of this application. For example, the matrix P may be the following formula (7):

$$P = \begin{bmatrix} 1 & 1 \\ 1 & -1 \end{bmatrix} \quad (7).$$

The foregoing matrix P is merely an example, and should not be construed as a limitation on this embodiment of this application.

In a possible implementation, when M is greater than 8, the first communication apparatus may send the M sequences at one or more sending times (for example, two sending times or three sending times). When the first communication apparatus sends the M sequences at a plurality of sending times, each of the M sequences may be obtained based on the Golay complementary sequence and the matrix P, or each of the eight sequences may be obtained based on the Golay complementary sequence, the symbol sequence, and the matrix P. For example, when M is greater than 8, the M sequences further include a ninth sequence. For example, the ninth sequence may be obtained based on a Golay complementary sequence. Optionally, the Golay complementary sequence is the same as Golay complementary sequences used by the first sequence to the eighth sequence. Optionally, the Golay complementary sequence is different from the Golay complementary sequences used by the first sequence to the eighth sequence. For example, a length of the ninth sequence may be the same as or different from a length of a sequence in the first sequence to the eighth sequence. This is not limited in this embodiment of this application.

For descriptions of the first sequence to the eighth sequence included in the first field when M is greater than 8 in this embodiment of this application, refer to Example 1 to Example 4 shown below. In addition, another field included in the first field is not limited.

In this embodiment of this application, that cross correlation energy between one of the M sequences and each of m sequences in the M sequences is less than or equal to a first threshold in a reference range may be implemented in the following several manners.

Manner 1: When m is greater than or equal to 2, cross correlation energy between any two of more than two sequences in the M sequences is less than or equal to the first threshold in the reference range.

For example, the first threshold may be any one of 176, 144, 168, 160, 136, 124, 120, 100, 92, 86, 80, 72, 60, and 56. A specific value of the first threshold is not limited in this embodiment of this application. It may be understood that descriptions of the first threshold are also applicable to the following descriptions.

Manner 2: The cross correlation energy between one of the M sequences and each of the m sequences in the M sequences is zero in the reference range, for example, m=3 or m=2. In other words, cross correlation energy between one of the M sequences and each of two or three sequences is zero in the reference range.

For example, cross correlation energy between the first sequence in the M sequences and each of the second sequence to the fourth sequence is zero in the reference range. For another example, cross correlation energy between the second sequence and each of the first sequence, the third sequence, or the fourth sequence is zero in the reference range. For another example, cross correlation energy between the third sequence and each of the first sequence, the second sequence, or the fourth sequence is zero in the reference range. For another example, cross correlation energy between the fourth sequence and each of the first sequence, the second sequence, or the third sequence is zero in the reference range. It may be understood that m=3 is used as an example for description herein. For description of m=2, refer to the descriptions of m=3, and details are not described herein again.

For example, cross correlation energy between the fifth sequence in the M sequences and each of the sixth sequence to the eighth sequence is zero in the reference range. It may be understood that the descriptions of the fifth sequence are also applicable to the sixth sequence to the eighth sequence, and are not enumerated herein.

Manner 3: The cross correlation energy between one of the M sequences and each of the m sequences is less than or equal to the first threshold in the reference range, where m=2, m=3, m=4, m=5, m=6, or m=7.

For example, cross correlation energy between one of the M sequences and each of seven sequences is less than or equal to the first threshold in the reference range. It may be understood that for a relationship between the first sequence and the fourth sequence and a relationship between the fifth sequence and the eighth sequence, refer to the foregoing descriptions, and details are not described herein again. For example, cross correlation energy between the first sequence and each of the fifth sequence to the eighth sequence is less than or equal to the first threshold in the reference range. For another example, cross correlation energy between the third sequence and each of the fifth sequence to the eighth sequence is less than or equal to the first threshold in the reference range.

Manner 4: cross correlation energy between any two of at least four sequences in the M sequences is zero in the reference range.

For example, cross correlation energy between any two of the first sequence to the fourth sequence is zero in the reference range. For another example, cross correlation energy between any two of the fifth sequence to the eighth sequence is zero in the reference range.

Manner 5: cross correlation energy between any two of at least eight sequences in the M sequences is less than or equal to the first threshold in the reference range.

For example, cross correlation energy between the first sequence and the fifth sequence is less than or equal to the first threshold in the reference range. For another example, cross correlation energy between the first sequence and the seventh sequence is less than or equal to the first threshold in the reference range. For another example, cross correlation energy between the third sequence and the fifth sequence is less than or equal to the first threshold in the reference range. For another example, cross correlation energy between the third sequence and the seventh sequence is less than or equal to the first threshold in the reference range.

For example, symbol sequences of at least two of the M sequences are the same. For example, symbol sequences of the first sequence and the second sequence are the same. For another example, symbol sequences of the third sequence and the fourth sequence are the same. For another example, symbol sequences of the fifth sequence and the sixth sequence are the same. For another example, symbol sequences of the seventh sequence and the eighth sequence are the same.

Optionally, each of the M sequences shown in this embodiment of this application may include 10 units. For example, a length of each unit may be 128 (which is only an example), in other words, a length of the sequence may be 1280. For example, a first unit in each of the M sequences is a cyclic prefix, and a last unit in each of the M sequences is a cyclic suffix. The cyclic prefix may be the same as any unit in a second unit to an eighth unit in the sequence, and the cyclic suffix may be the same as any one of the second unit to the eighth unit in the sequence. For example, the cyclic prefix of each of the M sequences may be the same as a ninth unit (which is only an example). For another example, the cyclic suffix of each of the M sequences may be the same as the second unit (which is only an example). Optionally, each of the M sequences may not include the cyclic prefix, in other words, the length of each of the M sequences is 128×9=1152. Optionally, each of the M sequences may not include the cyclic suffix, in other words, the length of each of the M sequences is 1152. In other words, when units in a sequence other than a cyclic prefix and/or a cyclic suffix are determined, the corresponding sequence may be determined. It may be understood that the descriptions of the sequence herein are also applicable to the first sequence to the eighth sequence shown in this embodiment of this application, and the first sequence to the eighth sequence shown in Example 1 to Example 4 shown below. Details are not described below again.

Therefore, for brevity, a sequence shown below is described by using a sequence that does not include a cyclic prefix and/or a cyclic suffix as an example. For example, a sequence (which may also be referred to as a partial sequence in the first sequence) that does not include a cyclic prefix and/or a cyclic suffix in the first sequence is represented by CE1, a sequence (which may also be referred to as a partial sequence in the second sequence) that does not include a cyclic prefix and/or a cyclic suffix in the second sequence is represented by CE2, ..., and a sequence (which may also be referred to as a partial sequence in the eighth sequence) that does not include a cyclic prefix and/or a cyclic suffix in the eighth sequence is represented by CE8. It may be understood that a total length of a sequence that does not include a cyclic prefix and/or a cyclic suffix shown in this embodiment of this application may be 128×8=1024 (when N=128), or a total length is 256×8=2048 (when N=256), or a total length is 64×8=512 (when B=64). For descriptions of the total length of the sequence that does not include the cyclic prefix and/or the cyclic suffix, refer to the descriptions of a value of N in this embodiment of this application. Examples are not enumerated herein. It may be understood that descriptions of the first sequence and CE1, the second sequence and CE2, ..., the eighth sequence and CE8 are also applicable to Example 1 to Example 4 shown below, and details are not described below again.

It may be understood that the descriptions of the cyclic prefix and the cyclic suffix in this embodiment of this application are merely examples. For example, the cyclic prefix and the cyclic suffix may alternatively be agreed upon in a protocol. The cyclic prefix and the cyclic suffix are not limited in this embodiment of this application.

It may be understood that names of the first sequence, CE1, and the like shown in this embodiment of this application are merely examples, and a name of each sequence is not limited in this embodiment of this application. Any relationship or function similar to that of the first sequence and CE1 falls within the protection scope of embodiments of this application.

502: The first communication apparatus sends the PPDU. Correspondingly, the second communication apparatus receives the PPDU.

503: The second communication apparatus performs processing based on the M sequences.

For example, the second communication apparatus performs channel estimation or target sensing based on the M sequences. Details are not described herein again.

For example, the second communication apparatus may perform channel estimation or target sensing based on the M sequences received by the second communication apparatus. For example, the second communication apparatus may perform synchronization (for example, time domain synchronization and/or frequency domain synchronization, or time synchronization and/or frequency synchronization) based on the M sequences received by the second communication apparatus.

Optionally, according to the method provided in this application, a reconstructed sequence is provided, so that cross correlation energy between four sequences is zero in the reference range (which may also be referred to as having a ZCC characteristic), and a time of sending the sequences can be reduced. Optionally, according to the method provided in this application, the sequence is reconstructed, so that it may be further implemented that cross correlation energy between eight sequences is less than or equal to the first threshold in the reference range (which may also be referred to as having a low cross correlation (low cross correlation, LCC) characteristic). Optionally, according to the method provided in this application, when sending eight or less sequences, the first communication apparatus may effectively send the sequences at one sending time. Because a sending time is effectively reduced, a sensing pulse repetition time can be reduced. There is a reciprocal relationship between the pulse repetition time and a pulse repetition frequency. Therefore, according to the method provided in this application, the sensing pulse repetition frequency (pulse repetition frequency, PRF) is effectively improved, a maximum detectable Doppler/velocity in sensing is improved, and sensing performance can be effectively optimized.

According to the method provided in this embodiment of this application, when the first field includes four sequences, cross correlation energy between any two of the four sequences such as the first sequence to the fourth sequence, is zero in the reference range (in other words, any two of the four sequences have the ZCC characteristic). Therefore, the first communication apparatus may send the four sequences at one sending time. This effectively shortens a time at which the first communication apparatus sends the sequences. When the first field includes eight sequences, cross correlation energy between one of the first sequence to the fourth sequence and one of the fifth sequence to the eighth sequence is less than or equal to the first threshold in the reference range (in other words, one of the first sequence to the fourth sequence and one of the fifth sequence to the eighth sequence have the LCC characteristic). In addition, cross correlation energy between any two of the first sequence to the fourth sequence is zero in the reference range, and cross correlation energy between any two of the fifth sequence to the eighth sequence is zero in the reference range. Therefore, the first communication apparatus may send the eight sequences at one sending time. Therefore, a time at which the first communication apparatus sends the sequences is further shortened. Optionally, when the first field includes the eight sequences, each of the eight sequences may be a sequence obtained based on the Golay complementary sequence and a matrix P. Therefore, in combination with the matrix P, it can be ensured that cross correlation energy between any two of the eight sequences is zero in the reference range.

In this embodiment of this application, the first communication apparatus may send the M sequences at one sending time, so that a time in which the first communication apparatus sends the sequences can be reduced, and sequence sending efficiency can be improved. In addition, the first communication apparatus may send the M sequences at the sending time, so that the second communication apparatus can receive the M sequences at the same time. Therefore, efficiency of performing processing based on the M sequences by the second communication apparatus is further effectively improved.

The foregoing describes in detail the method provided in this embodiment of this application. The following describes in detail the M sequences included in the first field in the method shown in FIG. 5. To be specific, the following describes in detail specific construction manners of the first sequence to the eighth sequence in the M sequences shown in FIG. 5. In other words, for the descriptions of the first field shown in FIG. 5, refer to Example 1 to Example 4 shown below. It may be understood that for descriptions of CE1 to CE8 shown in Example 1 to Example 4, refer to the method shown in FIG. 5.

Example 1:

CE1 to CE4 may meet the following conditions, as shown in the following formula (8):

$$\begin{aligned}
\mathrm{CE1} &= (p_{0,0}G_e^i, p_{0,1}G_e^i, p_{0,2}G_f^i, p_{0,3}G_f^i, p_{0,4}G_e^i, p_{0,5}G_e^i, p_{0,6}G_f^i, p_{0,7}G_f^i) \\
\mathrm{CE2} &= (p_{0,0}G_e^j, p_{0,1}G_e^j, p_{0,2}G_f^j, p_{0,3}G_f^j, p_{0,4}G_e^j, p_{0,5}G_e^j, p_{0,6}G_f^j, p_{0,7}G_f^j) \\
\mathrm{CE3} &= (p_{1,0}G_e^i, p_{1,1}G_e^i, p_{1,2}G_f^i, p_{1,3}G_f^i, p_{1,4}G_e^i, p_{1,5}G_e^i, p_{1,6}G_f^i, p_{1,7}G_f^i) \\
\mathrm{CE4} &= (p_{1,0}G_e^j, p_{1,1}G_e^j, p_{1,2}G_f^j, p_{1,3}G_f^j, p_{1,4}G_e^j, p_{1,5}G_e^j, p_{1,6}G_f^j, p_{1,7}G_f^j)
\end{aligned} \quad (8).$$

A value of $P_{0,n}$ is +1 or -1, a value of $P_{1,n}$ is +1 or -1, a value of i is one of 1, 3, 5, or 7, *j* = *i* + 1, $G_e^i$ , and $G_f^i$ are Golay complementary sequences, and $G_e^j$ and $G_f^j$ are Golay complementary sequences. For example, $G_e^i$ and $G_f^i$ may be $G_a^i$ and $G_b^i$ , or may be $G_c^i$ and $G_d^i$ . Similarly, $G_e^j$ and $G_f^j$ may be $G_a^j$ and $G_b^j$ *,* or may be $G_c^j$ and $G_d^j$ . In other words, values of e and f are a and b, or may be c and d, that is, $(e, f) \in \{(a, b),(c, d)\}$. For descriptions of the Golay complementary sequence, refer to the foregoing descriptions, and details are not described herein again.

In a possible implementation, the Golay complementary sequence meets the following condition, as shown in the following formula (9) or formula (10):

$$R_{G_a^i,G_a^j}(\tau)+R_{G_b^i,G_b^j}(\tau)=0,\ 0\le\tau\le127 \quad (9);$$

or

$$R_{G_c^i,G_c^j}(\tau)+R_{G_d^i,G_d^j}(\tau)=0,\ 0\le\tau\le127 \quad (10),$$

where

$R_{G_a^i,G_a^j}(\tau)$ represents an aperiodic cross correlation function between $G_a^i$ and $G_a^j$ , $R_{G_b^i,G_b^j}(\tau)$ represents an aperiodic

cross correlation function between $G_b^i$ and $G_b^j$, $R_{G_c^i,G_c^j}(\tau)$ represents an aperiodic cross correlation function between $G_c^i$ and $G_c^j$, and $R_{G_d^i,G_d^j}(\tau)$ represents an aperiodic cross correlation function between $G_d^i$ and $G_d^j$. In other words, adjacent Golay complementary sequences (for example, $G_a^i$ and $G_a^j$, $G_b^i$ and $G_b^j$, $G_c^i$ and $G_c^j$, and $G_d^i$ and $G_d^j$) constitute complementary mates. It may be understood that the descriptions of the formula (9) and the formula (10) are also applicable to the following embodiments shown below, and details are not described below again. It may be understood that the formula (9) and the formula (10) are illustrated by using N=128 as an example, and should not be understood as limitations on this embodiment of this application.

In a possible implementation, CE5 to CE8 may meet the following condition, as shown in the following formula (11):

$$\begin{aligned} \mathrm{CE5} &= \mathrm{circshift}(\mathrm{CE1}, N \cdot r) \\ \mathrm{CE6} &= \mathrm{circshift}(\mathrm{CE2}, N \cdot r) \\ \mathrm{CE7} &= \mathrm{circshift}(\mathrm{CE3}, N \cdot r) \\ \mathrm{CE8} &= \mathrm{circshift}(\mathrm{CE4}, N \cdot r) \end{aligned} \quad (11),$$

where

circshift(-) represents a left periodic cyclic shift, N represents a length of a Golay complementary sequence, and a value of r is one of 1 to 7, that is, $r \in \{1, 2, 3, 4, 5, 6, 7\}$.

For example, when N=128, CE5 may be obtained by cyclically shifting CE1 leftwards by 128 bits (r=1), or by cyclically shifting CE1 leftwards by 256 bits (r=2), or by cyclically shifting CE1 leftwards by 768 bits (r=6). Examples are not enumerated herein. In other words, CE5 may be obtained by cyclically shifting CE1 leftwards by r units. Alternatively, CE5 may be obtained by cyclically shifting CE1 rightwards by 896 bits (128×(8-1)), or by cyclically shifting CE1 rightwards by 768 bits (128×(8-2)), or by cyclically shifting CE1 rightwards by 256 bits. Examples are not enumerated herein. In other words, CE5 may be obtained by cyclically shifting CE1 rightwards by 8-r units. For example, CE6 is obtained by cyclically shifting CE2 leftwards by $128 \cdot r$ bits, or CE6 may be obtained by cyclically shifting CE2 rightwards by $128 \cdot (8-r)$ bits. For example, CE7 is obtained by cyclically shifting CE3 leftwards by $128 \cdot r$ bits, or CE7 may be obtained by cyclically shifting CE3 rightwards by $128 \cdot (8-r)$ bits. For example, CE8 is obtained by cyclically shifting CE4 leftwards by $128 \cdot r$ bits, or CE8 may be obtained by cyclically shifting CE4 rightwards by $128 \cdot (8-r)$ bits. It may be understood that 8 shown in this embodiment of this application is illustrated by using an example in which CE1 to CE8 are eight units.

It may be understood that CE5 shown in this embodiment of this application is obtained by cyclically shifting CE1 may be understood as follows: A sequence (namely, a partial sequence in the fifth sequence) that does not include a cyclic prefix and/or a cyclic suffix in the fifth sequence may be obtained by cyclically shifting the sequence (namely, the partial sequence in the first sequence) that does not include the cyclic prefix and/or the cyclic suffix in the first sequence. Similarly, that CE6 is obtained by cyclically shifting CE2 may be understood as follows: A sequence (namely, a partial sequence in the sixth sequence) that does not include a cyclic prefix and/or a cyclic suffix in the sixth sequence may be obtained by cyclically shifting the sequence (namely, the partial sequence in the second sequence) that does not include the cyclic prefix and/or the cyclic suffix in the second sequence. That CE7 is obtained by cyclically shifting CE3 may be understood as follows: A sequence (namely, a partial sequence in the seventh sequence) that does not include a cyclic prefix and/or a cyclic suffix in the seventh sequence may be obtained by cyclically shifting a sequence (namely, a partial sequence in the third sequence) that does not include a cyclic prefix and/or a cyclic suffix in the third sequence. That CE8 is obtained by cyclically shifting CE4 may be understood as follows: The sequence (namely, the partial sequence in the eighth sequence) that does not include the cyclic prefix and/or the cyclic suffix in the eighth sequence may be obtained by cyclically shifting a sequence (namely, a partial sequence in the fourth sequence) that does not include a cyclic prefix and/or a cyclic suffix in the fourth sequence.

For example, when N=256, CE5 is obtained by cyclically shifting CE1 leftwards by $256 \cdot r$ bits, or CE5 is obtained by cyclically shifting CE1 rightwards by $256 \cdot (8-r)$ bits. CE6 is obtained by cyclically shifting CE2 leftwards by $256 \cdot r$ bits, or CE6 is obtained by cyclically shifting CE2 rightwards by $256 \cdot (8-r)$ bits. CE7 is obtained by cyclically shifting CE3 leftwards by $256 \cdot r$ bits, or CE7 is obtained by cyclically shifting CE3 rightwards by $256 \cdot (8-r)$ bits. CE8 is obtained by cyclically shifting CE4 leftwards by $256 \cdot r$ bits, or CE8 is obtained by cyclically shifting CE4 rightwards by $256 \cdot (8-r)$ bits. For example, when N=64, CE5 is obtained by cyclically shifting CE1 leftwards by $64 \cdot r$ bits, or CE5 is obtained by cyclically shifting CE1 rightwards by $64 \cdot (8-r)$ bits. CE6 is obtained by cyclically shifting CE2 leftwards by $64 \cdot r$ bits, or CE6 is obtained by cyclically shifting CE2 rightwards by 64·(8-*r*) bits. CE7 is obtained by cyclically shifting CE3 leftwards by 64·*r* bits, or CE7 is obtained by cyclically shifting CE3 rightwards by 64·(8-*r*) bits. CE8 is obtained by cyclically shifting CE4 leftwards by 64-*r* bits, or CE8 is obtained by cyclically shifting CE4 rightwards by 64·(8-*r*) bits. Descriptions of N are not enumerated herein. In other words, CE5 is obtained by cyclically shifting CE1 leftwards by r units, or CE5 may be obtained by cyclically shifting CE1 rightwards by 8-r units. CE6 is obtained by cyclically shifting CE2 to leftwards by r units, or CE6 may be obtained by cyclically shifting CE2 rightwards by 8-r units. CE7 is obtained by cyclically shifting CE3 leftwards by r units, or CE7 may be obtained by cyclically shifting CE3 rightwards by 8-r units. CE8 is obtained by cyclically shifting CE4 to leftwards by r units, or CE8 may be obtained by cyclically shifting CE4 rightwards by 8-r units.

It may be understood that in this embodiment of this application, the value of r is 1, 2, 3, 4, 5, 6, or 7. However, in consideration of values of cross correlation energy between different sequences in the reference range, when r=2 or r=6, the cross correlation energy between the first sequence and the fifth sequence is small in the reference range, or the cross correlation energy between the first sequence and the seventh sequence is small in the reference range. The first sequence and the fifth sequence that are shown herein, and the first sequence and the seventh sequence that are shown herein are merely examples. For descriptions of the first sequence to the eighth sequence, refer to Table 3 to Table 8 shown below.

In a possible implementation, the value of $p_{0,n}$ may be shown in Table 1b, and the value of $p_{1,n}$ may be shown in Table 2.

## Table 1b

| Sequence number \ $p_{0,n}$ | n=0 | n=1 | n=2 | n=3 | n=4 | n=5 | n=6 | n=7 |
|---|---|---|---|---|---|---|---|---|
| 1 | −1 | −1 | 1 | 1 | 1 | 1 | 1 | 1 |
| 2 | −1 | −1 | 1 | 1 | 1 | 1 | 1 | 1 |
| 3 | 1 | 1 | −1 | −1 | 1 | 1 | 1 | 1 |
| 4 | 1 | 1 | −1 | −1 | 1 | 1 | 1 | 1 |
| 5 | 1 | 1 | 1 | 1 | −1 | −1 | 1 | 1 |
| 6 | 1 | 1 | 1 | 1 | −1 | −1 | 1 | 1 |
| 7 | −1 | −1 | −1 | −1 | −1 | −1 | 1 | 1 |
| 8 | −1 | −1 | −1 | −1 | −1 | −1 | 1 | 1 |
| 9 | 1 | −1 | −1 | 1 | −1 | 1 | −1 | 1 |
| 10 | −1 | 1 | 1 | −1 | −1 | 1 | −1 | 1 |
| 11 | −1 | 1 | −1 | 1 | 1 | −1 | −1 | 1 |
| 12 | 1 | −1 | 1 | −1 | 1 | −1 | −1 | 1 |
| 13 | −1 | 1 | −1 | 1 | −1 | 1 | 1 | −1 |
| 14 | 1 | −1 | 1 | −1 | −1 | 1 | 1 | −1 |
| 15 | 1 | −1 | −1 | 1 | 1 | −1 | 1 | −1 |
| 16 | −1 | 1 | 1 | −1 | 1 | −1 | 1 | −1 |

**Table 2**

| $p_{1,n}$ / Sequence number | n=0 | n=1 | n=2 | n=3 | n=4 | n=5 | n=6 | n=7 |
|---|---|---|---|---|---|---|---|---|
| 1 | 1 | –1 | –1 | 1 | –1 | 1 | –1 | 1 |
| 2 | –1 | 1 | 1 | –1 | 1 | –1 | 1 | –1 |
| 3 | –1 | 1 | 1 | –1 | –1 | 1 | –1 | 1 |
| 4 | 1 | –1 | –1 | 1 | 1 | –1 | 1 | –1 |
| 5 | –1 | 1 | –1 | 1 | 1 | –1 | –1 | 1 |
| 6 | 1 | –1 | 1 | –1 | –1 | 1 | 1 | –1 |
| 7 | 1 | –1 | 1 | –1 | 1 | –1 | –1 | 1 |
| 8 | –1 | 1 | –1 | 1 | –1 | 1 | 1 | –1 |
| 9 | 1 | 1 | –1 | –1 | –1 | –1 | –1 | –1 |
| 10 | –1 | –1 | 1 | 1 | –1 | –1 | –1 | –1 |
| 11 | –1 | –1 | –1 | –1 | 1 | 1 | –1 | –1 |
| 12 | 1 | 1 | 1 | 1 | 1 | 1 | –1 | –1 |
| 13 | 1 | 1 | 1 | 1 | 1 | 1 | –1 | –1 |
| 14 | –1 | –1 | –1 | –1 | 1 | 1 | –1 | –1 |
| 15 | –1 | –1 | 1 | 1 | –1 | –1 | –1 | –1 |
| 16 | 1 | 1 | –1 | –1 | –1 | –1 | –1 | –1 |

For example, the value of $p_{0,n}$ shown in Table 1b and the value of $p_{1,n}$ shown in Table 2 correspond to a same sequence number. For example, if a sequence number corresponding to the value of $p_{0,n}$ is 1, a sequence number corresponding to the value of $p_{1,n}$ is also 1. For another example, if a sequence number corresponding to the value of $p_{0,n}$ is 16, a sequence number corresponding to the value of $p_{1,n}$ is also 16.

It may be understood that Table 1b and Table 2 shown in this embodiment of this application are merely examples. In specific implementation, the values of $p_{0,n}$ and $p_{1,n}$ may alternatively be represented in other forms. This is not limited in this embodiment of this application.

Based on the construction manners of the sequences provided in this embodiment of this application, CE1 to the CE8 shown in this embodiment of this application may meet the following conditions:

autocorrelation side lobe energy of each sequence in CE1 to CE8 is zero in the reference range, which may also be referred to as each sequence in CE1 to CE8 autocorrelation having a local region (for example, a region from -127 to +127, excluding 0) zero correlation characteristic;
cross correlation energy between every two sequences in CE1 to CE4 is zero in the reference range, which may also be referred to as every two sequences in CE1 to CE4 having a local region (for example, a region from -127 to +127) zero cross correlation (zero cross correlation, ZCC) characteristic;
cross correlation energy between every two sequences in CE5 to CE8 is zero in the reference range, which may also be referred to as every two sequences in CE5 to CE8 having the local region (for example, the region from -127 to +127) zero cross correlation characteristic; and
cross correlation energy between one sequence in CE1 to CE4 and one sequence in CE5 to CE8 is less than or equal to the first threshold in the reference range, which may also be referred to as one sequence in CE1 to CE4 and one sequence in CE5 to CE8 having low cross correlation (low cross correlation, LCC) in the reference range, or may also be referred to as one sequence in CE1 to CE4 and one sequence in CE5 to CE8 having the local region (for example, the region from -127 to +127) LCC characteristic.

It may be understood that the foregoing conditions met by CE1 to CE8 are also applicable to the first sequence to the eighth sequence. The descriptions of the first sequence to the eighth sequence are not described herein again.

Based on a construction feature of the Golay complementary sequence in the sequences shown in this embodiment of this application, the construction manner of the sequence shown in this embodiment of this application may also be referred to as an AABB-type construction manner.

The sequence number 1 in Table 1b and Table 2 is used as an example, and r=2 is used as an example. The M sequences (M=8) shown in this embodiment of this application may be shown in FIG. 6a. For example, based on a sequence shown in FIG. 6a that does not include a cyclic prefix and/or a cyclic suffix, a sequence adding the cyclic prefix and the cyclic suffix may be shown in FIG. 6b. It may be understood that each of the M sequences may not include the cyclic prefix, or may not include the cyclic suffix. Examples are not enumerated in this embodiment of this application. It may be understood that for a relationship between the sequence shown in FIG. 6a and the sequence shown in FIG. 6b, refer to the foregoing descriptions, and details are not described herein again.

As shown in FIG. 6a and/or FIG. 6b, CE1 and CE2 are constructed in a same manner, CE3 and CE4 are constructed in a same manner, CE5 and CE6 are constructed in a same manner, and CE7 and CE8 are constructed in a same manner. In addition, every two sequences in CE1 to CE4 may have the zero cross correlation characteristic. CE5 to CE8 are obtained by periodically cyclically shifting CE1 to CE4, and therefore also have the zero cross correlation characteristic.

For example, when the Golay complementary sequences are $G_a^i$ and $G_b^i$, the eight sequences included in the first field may be shown in FIG. 6c. When the Golay complementary sequences are $G_c^i$ and $G_d^i$, the eight sequences included in the first field may be shown in FIG. 6d.

The sequence number 1 in Table 1b and Table 2 is used as an example. In addition, when i=1, r=2, and $(e, f) \in \{(a, b)\}$, CE1={$-Ga^1$, $-Ga^1$, $Gb^1$, $Gb^1$, $Ga^1$, $Ga^1$, $Gb^1$, $Gb^1$}, CE2={$-Ga^2$, $-Ga^2$, $Gb^2$, $Gb^2$, $Ga^2$, $Ga^2$, $Gb^2$, $Gb^2$}, CE3={$Ga^1$, $-Ga^1$, $-Gb^1$, $Gb^1$, $-Ga^1$, $Ga^1$, $-Gb^1$, $Gb^1$ }, CE4={ $Ga^2$, $-Ga^2$, $-Gb^2$, $Gb^2$, $-Ga^2$, $Ga^2$, $-Gb^2$, $Gb^2$}, CE5={$Gb^1$, $Gb^1$, $Ga^1$, $Ga^1$, $Gb^1$, $Gb^1$, $-Ga^1$, $-Ga^1$}, CE6={$Gb^2$, $Gb^2$, $Ga^2$, $Ga^2$, $Gb^2$, $Gb^2$, $-Ga^2$, $-Ga^2$}, CE7={$-Gb^1$, $Gb^1$, $-Ga^1$, $Ga^1$, $-Gb^1$, $Gb^1$, $Ga^1$, $-Ga^1$}, and CE8={$-Gb^2$, $Gb^2$, $-Ga^2$, $Ga^2$, $-Gb^2$, $Gb^2$, $Ga^2$, $-Ga^2$}.

An example in which sequences include cyclic prefixes and cyclic suffixes is used. In this case, the first sequence={$Gb^1$, $-Ga^1$, $-Ga^1$, $Gb^1$, $Gb^1$, $Ga^1$, $Ga^1$, $Gb^1$, $Gb^1$, $-Ga^1$}, the second sequence={$Gb^2$, $-Ga^2$, $-Ga^2$, $Gb^2$, $Gb^2$, $Ga^2$, $Ga^2$, $Gb^2$, $Gb^2$, $-Ga^2$}, the third sequence={$Gb^1$, $Ga^1$, $-Ga^1$, $-Gb^1$, $Gb^1$, $-Ga^1$, $Ga^1$, $-Gb^1$, $Gb^1$, $Ga^1$}, the fourth sequence={$Gb^2$, $Ga^2$, $-Ga^2$, $-Gb^2$, $Gb^2$, $-Ga^2$, $Ga^2$, $-Gb^2$, $Gb^2$, $Ga^2$}, the fifth sequence= {$-Ga^1$, $Gb^1$, $Gb^1$, $Ga^1$, $Ga^1$, $Gb^1$, $Gb^1$, $-Ga^1$, $-Ga^1$, $Gb^1$}, the sixth sequence={$-Ga^2$, $Gb^2$, $Gb^2$, $Ga^2$, $Ga^2$, $Gb^2$, $Gb^2$, $-Ga^2$, $-Ga^2$, $Gb^2$}, the seventh sequence={$-Ga^1$, $-Gb^1$, $Gb^1$, $-Ga^1$, $Ga^1$, $-Gb^1$, $Gb^1$, $Ga^1$, $-Ga^1$, $-Gb^1$}, and the eighth sequence={$-Ga^2$, $-Gb^2$, $Gb^2$, $-Ga^2$, $Ga^2$, $-Gb^2$, $Gb^2$, $Ga^2$, $-Ga^2$, $-Gb^2$}.

N=128 is used as an example. In this case, the first sequence={ $Gb_{128}^1, -Ga_{128}^1, -Ga_{128}^1, Gb_{128}^1, Gb_{128}^1, Ga_{128}^1, Ga_{128}^1, Gb_{128}^1, Gb_{128}^1, -Ga_{128}^1$ }, the second sequence={ $Gb_{128}^2, -Ga_{128}^2, -Ga_{128}^2, Gb_{128}^2, Gb_{128}^2, Ga_{128}^2, Ga_{128}^2, Gb_{128}^2, Gb_{128}^2, -Ga_{128}^2$ }, the third sequence={ third sequence={ $Gb_{128}^1,$ $Ga_{128}^1, -Ga_{128}^1, -Gb_{128}^1, Gb_{128}^1, -Ga_{128}^1, Ga_{128}^1, -Gb_{128}^1, Gb_{128}^1, -Ga_{128}^1$ }, the fourth sequence={ $Gb_{128}^2, Ga_{128}^2, -Ga_{128}^2, -Gb_{128}^2, Gb_{128}^2, -Ga_{128}^2, Ga_{128}^2, -Gb_{128}^2, Gb_{128}^2, Ga_{128}^2$ }, the fifth sequence={ $-Ga_{128}^1, Gb_{128}^1, Gb_{128}^1, Ga_{128}^1, Ga_{128}^1, Gb_{128}^1, Gb_{128}^1, -Ga_{128}^1, -Ga_{128}^1, Gb_{128}^1$ }, the sixth sequence={ $-Ga_{128}^2, Gb_{128}^2, Gb_{128}^2, Ga_{128}^2, Ga_{128}^2, Gb_{128}^2, Gb_{128}^2, -Ga_{128}^2, -$

$Ga_{128}^2$, $Gb_{128}^2$ }, the seventh sequence={ $-Ga_{128}^1$, $-Gb_{128}^1$, $Gb_{128}^1$, $-Ga_{128}^1$, $Ga_{128}^1$, $-Gb_{128}^1$, $Gb_{128}^1$, $Ga_{128}^1$, $-Ga_{128}^1$, $-Gb_{128}^1$ }, and the eighth sequence= { $-Ga_{128}^2$, $Gb_{128}^2$, $Gb_{128}^2$, $Ga_{128}^2$, $-Ga_{128}^2$, $-Gb_{128}^2$, $Gb_{128}^2$, $-Ga_{128}^2$, $Ga_{128}^2$, $-Gb_{128}^2$ }.

N=128 is used as an example, and an example in which each of CE1 and CE2 include a cyclic suffix is used. In this case,

$$\mathrm{CE1}(q\frac{T_c}{N_{CB}}) = \Big(-Ga_{128\times N_{CB}}^1(q) - Gb_{128\times N_{CB}}^1(q-128\times N_{CB}) + Ga_{128\times N_{CB}}^1(q-256\times N_{CB}) + Gb_{128\times N_{CB}}^1(q-384\times N_{CB}) + Ga_{128\times N_{CB}}^1(q-512\times N_{CB}) + Gb_{128\times N_{CB}}^1(q-640\times N_{CB}) + Ga_{128\times N_{CB}}^1(q-768\times N_{CB}) + Gb_{128\times N_{CB}}^1(q-896\times N_{CB}) - Ga_{128\times N_{CB}}^1(q-1024\times N_{CB})\Big);$$

and

$$\mathrm{CE2}(q\frac{T_c}{N_{CB}}) = \Big(-Ga_{128\times N_{CB}}^2(q) - Gb_{128\times N_{CB}}^2(q-128\times N_{CB}) + Ga_{128\times N_{CB}}^2(q-256\times N_{CB}) + Gb_{128\times N_{CB}}^2(q-384\times N_{CB}) + Ga_{128\times N_{CB}}^2(q-512\times N_{CB}) + Gb_{128\times N_{CB}}^2(q-640\times N_{CB}) + Ga_{128\times N_{CB}}^2(q-768\times N_{CB}) + Gb_{128\times N_{CB}}^2(q-896\times N_{CB}) - Ga_{128\times N_{CB}}^2(q-1024\times N_{CB})\Big).$$

It may be understood that expression forms of CE3 to CE8 are not enumerated herein.

$T_c$ represents chip time duration (chip time duration), $N_{CB}$ represents an integer number ($N_{CB}$ is the integer number of contiguous 2.16 GHz channels over which the measurement is requested to be taken) of consecutive 2.16 GHz channels when the PPDU is transmitted, and q represents an index corresponding to each unit in CE1. Because N=128, and CE1 includes 9 units, a value of q is 0,1, ..., 1152 × $N_{CB}$ - 1. Alternatively, an expression form of CE1 may be:

$$\mathrm{CE1} = \lfloor -Ga_{128\times N_{CB}}^1 - Gb_{128\times N_{CB}}^1 Ga_{128\times N_{CB}}^1 Gb_{128\times N_{CB}}^1 Ga_{128\times N_{CB}}^1 Gb_{128\times N_{CB}}^1 Ga_{128\times N_{CB}}^1 Gb_{128\times N_{CB}}^1 \rfloor.$$

$$\mathrm{CE2} = \lfloor -Ga_{128\times N_{CB}}^2 - Gb_{128\times N_{CB}}^2 Ga_{128\times N_{CB}}^2 Gb_{128\times N_{CB}}^2 Ga_{128\times N_{CB}}^2 Gb_{128\times N_{CB}}^2 Ga_{128\times N_{CB}}^2 Gb_{128\times N_{CB}}^2 \rfloor.$$

The expression forms of CE3 to CE8 are not enumerated herein.

The sequence number 1 in Table 1b and Table 2 is used as an example. In addition, when i=1, r=6, and ($e$, $f$) ∈ {($a$, $b$)}, CE1={-$Ga^1$, -$G_a^1$, $Gb^1$, $Gb^1$, $Ga^1$, $Ga^1$, $Gb^1$, $Gb^1$}, CE2={-$Ga^2$, -$Ga^2$, $Gb^2$, $Gb^2$, $Ga^2$, $Ga^2$, $Gb^2$, $Gb^2$ }, CE3={ $Ga^1$, -$Ga^1$, -$Gb^1$, $Gb^1$, - $Ga^1$, $Ga^1$, -$Gb^1$, $Gb^1$}, CE4={ $Ga^2$, - $Ga^2$, -$Gb^2$, $Gb^2$, -$Ga^2$, $Ga^2$, -$Gb^2$, $Gb^2$}, CE5={ $Gb^1$, $Gb^1$, -$Ga^1$, -$Ga^1$, $Gb^1$, $Gb^1$, $Ga^1$, $Ga^1$}, CE6={$Gb^2$, $Gb^2$, -$Ga^2$, -$Ga^2$, $Gb^2$, $Gb^2$, $Ga^2$, $Ga^2$}, CE7={-$Gb^1$, $Gb^1$, $Ga^1$, -$Ga^1$, -$Gb^1$, $Gb^1$, -$Ga^1$, $Ga^1$}, and CE8={-$Gb^2$, $Gb^2$, $Ga^2$, -$Ga^2$, -$Gb^2$, $Gb^2$, -$Ga^2$, $Ga^2$}.

An example in which sequences include cyclic prefixes and cyclic suffixes is used. In this case, the first sequence={$Gb^1$, -$Ga^1$, -$Ga^1$, $Gb^1$, $Gb^1$, $Ga^1$, $Ga^1$, $Gb^1$, $Gb^1$, -$Ga^1$}, the second sequence={$Gb^2$, -$Ga^2$, -$Ga^2$, $Gb^2$, $Gb^2$, $Ga^2$, $Ga^2$, $Gb^2$, $Gb^2$, -$Ga^2$}, the third sequence={$Gb^1$, $Ga^1$, -$Ga^1$, -$Gb^1$, $Gb^1$, -$Ga^1$, $Ga^1$, -$Gb^1$, $Gb^1$, $Ga^1$}, the fourth sequence={$Gb^2$, $Ga^2$, - $Ga^2$, - $Gb^2$, $Gb^2$, - $Ga^2$, $Ga^2$, - $Gb^2$, $Gb^2$, $Ga^2$}, the fifth sequence={$Ga^1$, $Gb^1$, $Gb^1$, - $Ga^1$, - $Ga^1$, $Gb^1$, $Gb^1$, $Ga^1$, $Ga^1$, $Gb^1$}, the sixth sequence={$Ga^2$, $Gb^2$, $Gb^2$, - $Ga^2$, - $Ga^2$, $Gb^2$, $Gb^2$, $Ga^2$, $Ga^2$, $Gb^2$}, the seventh sequence={$Ga^1$, -$Gb^1$, $Gb^1$, $Ga^1$, -$Ga^1$, -$Gb^1$, $Gb^1$, -$Ga^1$, $Ga^1$, -$Gb^1$}, and the eighth sequence={$Ga^2$, -$Gb^2$, $Gb^2$, $Ga^2$, -$Ga^2$, -$Gb^2$, $Gb^2$, -$Ga^2$, $Ga^2$, -$Gb^2$}.

N=128 is used as an example. In this case, the first sequence=$\{Gb_{128}^{1}, -Ga_{128}^{1}, -Ga_{128}^{1}, Gb_{128}^{1}, Gb_{128}^{1}, Ga_{128}^{1}, Ga_{128}^{1}, Gb_{128}^{1}, Gb_{128}^{1}, -Ga_{128}^{1}\}$, the second sequence=$\{Gb_{128}^{2}, -Ga_{128}^{2}, -Ga_{128}^{2}, Gb_{128}^{2}, Gb_{128}^{2}, Ga_{128}^{2}, Ga_{128}^{2}, Gb_{128}^{2}, Gb_{128}^{2}, -Ga_{128}^{2}\}$, the third sequence=$\{Gb_{128}^{1}, Ga_{128}^{1}, -Ga_{128}^{1}, -Gb_{128}^{1}, Gb_{128}^{1}, -Ga_{128}^{1}, Ga_{128}^{1}, -Gb_{128}^{1}, Gb_{128}^{1}, Ga_{128}^{1}\}$, the fourth sequence=$\{Gb_{128}^{2}, Ga_{128}^{2}, -Ga_{128}^{2}, -Gb_{128}^{2}, Gb_{128}^{2}, -Ga_{128}^{2}, Ga_{128}^{2}, -Gb_{128}^{2}, Gb_{128}^{2}, Ga_{128}^{2}\}$, the fifth sequence=$\{Ga_{128}^{1}, Gb_{128}^{1}, Gb_{128}^{1}, -Ga_{128}^{1}, -Ga_{128}^{1}, Gb_{128}^{1}, Gb_{128}^{1}, Ga_{128}^{1}, Ga_{128}^{1}, Gb_{128}^{1}\}$, the sixth sequence=$\{Ga_{128}^{2}, Gb_{128}^{2}, Gb_{128}^{2}, -Ga_{128}^{2}, -Ga_{128}^{2}, Gb_{128}^{2}, Gb_{128}^{2}, Ga_{128}^{2}, Ga_{128}^{2}, Gb_{128}^{2}\}$, the seventh sequence=$\{Ga_{128}^{1}, -Gb_{128}^{1}, Gb_{128}^{1}, Ga_{128}^{1}, -Ga_{128}^{1}, -Gb_{128}^{1}, Gb_{128}^{1}, -Ga_{128}^{1}, Ga_{128}^{1}, -Gb_{128}^{1}\}$, and the eighth sequence=$\{Ga_{128}^{2}, -Gb_{128}^{2}, Gb_{128}^{2}, Ga_{128}^{2}, -Ga_{128}^{2}, -Gb_{128}^{2}, Gb_{128}^{2}, -Ga_{128}^{2}, Ga_{128}^{2}, -Gb_{128}^{2}\}$.

The sequence number 1 in Table 1b and Table 2 is used as an example. In addition, wheni=1,r=6,and (*e*, *f*) ∈ {(*c*, *d*)}, CE1=$\{-Gc^1, -Gc^1, Gd^1, Gd^1, Gc^1, Gc^1, Gd^1, Gd^1\}$, CE2=$\{-Gc^2, -Gc^2, Gd^2, Gd^2, Gc^2, Gc^2, Gd^2, Gd^2\}$, CE3=$\{Gc^1, -Gc^1, -Gd^1, Gd^1, -Gc^1, Gc^1, -Gd^1, Gd^1\}$, CE4=$\{Gc^2, -Gc^2, -Gd^2, Gd^2, -Gc^2, Gc^2, -Gd^2, Gd^2\}$, CE5=$\{Gd^1, Gd^1, -Gc^1, -Gc^1, Gd^1, Gd^1, Gc^1, Gc^1\}$, CE6=$\{Gd^2, Gd^2, -Gc^2, -Gc^2, Gd^2, Gd^2, Gc^2, Gc^2\}$, CE7=$\{-Gd^1, Gd^1, Gc^1, -Gc^1, -Gd^1, Gd^1, -Ge^1, Gc^1\}$, and CE8=$\{-Gd^2, Gd^2, Gc^2, -Gc^2, -Gd^2, Gd^2, -Gc^2, Gc^2\}$. It may be understood that for specific descriptions of the sequence, refer to the foregoing descriptions, and details are not described herein again.

The sequence number 1 in Table 1b and Table 2 is used as an example. In addition, when i=1, r=2, and (*e*, *f*) ∈ {(*c*, *d*)}, CE1=$\{-Gc^1, -Gc^1, Gd^1, Gd^1, Gc^1, Gc^1, Gd^1, Gd^1\}$, CE2=$\{-Gc^2, -Gc^2, Gd^2, Gd^2, Gc^2, Gc^2, Gd^2, Gd^2\}$, CE3=$\{Gc^1, -Gc^1, -Gd^1, Gd^1, -Gc^1, Gc^1, -Gd^1, Gd^1\}$, CE4=$\{Gc^2, -Gc^2, -Gd^2, Gd^2, -Gc^2, Gc^2, -Gd^2, Gd^2\}$, CE5=$\{Gd^1, Gd^1, Gc^1, Gc^1, Gd^1, Gd^1, -Gc^1, -Gc^1\}$, CE6=$\{Gd^2, Gd^2, Gc^2, Gc^2, Gd^2, Gd^2, -Gc^2, -Gc^2\}$, CE7=$\{-Gd^1, Gd^1, -Gc^1, Gc^1, -Gd^1, Gd^1, Gc^1, -Gc^1\}$, and CE8=$\{-Gd^2, Gd^2, -Gc^2, Gc^2, -Gd^2, Gd^2, Gc^2, -Gc^2\}$.

The sequence number 1 in Table 1b and Table 2 is used as an example. In addition, when i=3, r=2, and (*e*, *f*) ∈ {(*a*, *b*)}, CE1=$\{-Ga^3, -Ga^3, Gb^3, Gb^3, Ga^3, Ga^3, Gb^3, Gb^3\}$, CE2=$\{-Ga^4, -Ga^4, Gb^4, Gb^4, Ga^4, Ga^4, Gb^4, Gb^4\}$, CE3=$\{Ga^3, -Ga^3, -Gb^3, Gb^3, -Ga^3, Ga^3, -Gb^3, Gb^3\}$, CE4=$\{Ga^4, -Ga^4, -Gb^4, Gb^4, -Ga^4, Ga^4, -Gb^4, Gb^4\}$, CE5=$\{Gb^3, Gb^3, Ga^3, Ga^3, Gb^3, Gb^3, -Ga^3, -Ga^3\}$, CE6=$\{Gb^4, Gb^4, Ga^4, Ga^4, Gb^4, Gb^4, -Ga^4, -Ga^4\}$, CE7=$\{-Gb^3, Gb^3, -Ga^3, Ga^3, -Gb^3, Gb^3, Ga^3, -Ga^3\}$, and CE8=$\{-Gb^4, Gb^4, -Ga^4, Ga^4, -Gb^4, Gb^4, Ga^4, -Ga^4\}$.

The sequence number 1 in Table 1b and Table 2 is used as an example. In addition, when i=5, r=2, and (*e*, *f*) ∈ {(*a*, *b*)}, CE1=$\{-Ga^5, -Ga^5, Gb^5, Gb^5, Ga^5, Ga^5, Gb^5, Gb^5\}$, CE2=$\{-Ga^6, -Ga^6, Gb^6, Gb^6, Ga^6, Ga^6, Gb^6, Gb^6\}$, CE3=$\{Ga^5, -Ga^5, -Gb^5, Gb^5, -Ga^5, Ga^5, -Gb^5, Gb^5\}$, CE4=$\{Ga^6, -Ga^6, -Gb^6, Gb^6, -Ga^6, Ga^6, -Gb^6, Gb^6\}$, CE5=$\{Gb^5, Gb^5, Ga^5, Ga^5, Gb^5, Gb^5, -Ga^5, -Ga^5\}$, CE6=$\{Gb^6, Gb^6, Ga^6, Ga^6, Gb^6, Gb^6, -Ga^6, -Ga^6\}$, CE7=$\{-Gb^5, Gb^5, -Ga^5, Ga^5, -Gb^5, Gb^5, Ga^5, -Ga^5\}$, and CE8=$\{-Gb^6, Gb^6, -Ga^6, Ga^6, -Gb^6, Gb^6, Ga^6, -Ga^6\}$.

The sequence number 1 in Table 1b and Table 2 is used as an example. In addition, when i=7, r=2, and (*e*, *f*) ∈ {(*a*, *b*)}, CE1=$\{-Ga^7, -Ga^7, Gb^7, Gb^7, Ga^7, Ga^7, Gb^7, Gb^7\}$, CE2=$\{-Ga^8, -Ga^8, Gb^8, Gb^8, Ga^8, Ga^8, Gb^8, Gb^8\}$, CE3=$\{Ga^7, -Ga^7, -Gb^7, Gb^7, -Ga^7, Ga^7, -Gb^7, Gb^1\}$, CE4=$\{Ga^8, -Ga^8, -Gb^8, Gb^8, -Ga^8, Ga^8, -Gb^8, Gb^8\}$, CE5=$\{Gb^7, Gb^7, Ga^7, Ga^7, Gb^7, Gb^7, -Ga^7, -Ga^7$, CE6=$\{Gb^8, Gb^8, Ga^8, Ga^8, Gb^8, Gb^8, -Ga^8, -Ga^8\}$, CE7=$\{-Gb^7, Gb^7, -Ga^7, Ga^7, -Gb^7, Gb^7, Ga^7, -Ga^7\}$, and CE8=$\{-Gb^8, Gb^8, -Ga^8, Ga^8, -Gb^8, Gb^8, Ga^8, -Ga^8\}$.

It may be understood that descriptions of other sequence numbers in Table 1b and Table 2 are not enumerated herein. It should be noted that (*e*, *f*) ∈ {(*a*, *b*)} and (*e*, *f*) ∈ {(*c*, *d*)} are used as examples for description above, and this embodiment of this application is also applicable to (*e*, *f*) ∈ {(*b*, *a*)} and/or (*e*, *f*) ∈ {(*d*, *c*)}.

The sequence number 1 in Table 1b and Table 2 is used as an example. In addition, when i=1, r=2, and (*e*, *f*) ∈ {(*b*, *a*)}, CE1=$\{-Gb^1, -Gb^1, Ga^1, Ga^1, Gb^1, Gb^1, Ga^1, Ga^1\}$, CE2=$\{-Gb^2, -Gb^2, Ga^2, Ga^2, Gb^2, Gb^2, Ga^2, Ga^2\}$, CE3=$\{Gb^1, -Gb^1, -Ga^1, Ga^1, -Gb^1, Gb^1, -Ga^1, Ga^1\}$, CE4=$\{Gb^2, -Gb^2, -Ga^2, Ga^2, -Gb^2, Gb^2, -Ga^2, Ga^2\}$, CE5=$\{Ga^1, Ga^1, Gb^1, Gb^1, Ga^1, Ga^1, -Gb^1, -Gb^1\}$, CE6=$\{Ga^2, Ga^2, Gb^2, Gb^2, Ga^2, Ga^2, -Gb^2, -Gb^2\}$, CE7=$\{-Ga^1, Ga^1, -Gb^1, Gb^1, -Ga^1, Ga^1, Gb^1, -Gb^1\}$, and CE8=$\{-Ga^2, Ga^2, -Gb^2, Gb^2, -Ga^2, Ga^2, Gb^2, -Gb^2\}$.

The sequence number 1 in Table 1b and Table 2 is used as an example. In addition, when i=1, r=2, and (*e*, *f*)

$\in$ {(*d*, *c*)}, CE1={-$Gd^1$, -$Gd^1$, $Gc^1$, $Gc^1$, $Gd^1$, $Gd^1$, $Gc^1$, $Gc^1$}, CE2={-$Gd^2$, -$Gd^2$, $Gc^2$, $Gc^2$, $Gd^2$, $Gd^2$, $Gc^2$, $Ge^2$}, CE3={$Gd^1$,-$Gd^1$,-$Ge^1$, $Gc^1$,-$Gd^1$, $Gd^1$, -$Gc^1$, $Gc^1$}, CE4={$Gd^2$, -$Gd^2$, -$Gc^2$, $Gc^2$ , -$Gd^2$, $Gd^2$, -$Gc^2$, $Gc^2$}, CE5={$Gc^1$, $Gc^1$, $Gd^1$, $Gd^1$, $Gc^1$, $Gc^1$, -$Gd^1$, -$Gd^1$,}, CE6={$Gc^2$, $Gc^2$, $Gd^2$, $Gd^2$, $Gc^2$, $GC^2$, -$Gd^2$, -$Gd^2$,}, CE7={-$Gc^1$, $Gc^1$, -$Gd^1$, $Gd^1$, -$Gc^1$, $Gc^1$, $Gd^1$,-$Gd^1$}, and CE8={-$Gd^2$, $Gd^2$,-$Gc^2$, $Gc^2$,-$Gd^2$, $Gd^2$, $Gc^2$, -$Gc^2$}.

It may be understood that the other sequence numbers in Table 1b and Table 2 and other values of i and r are not enumerated herein.

For example, Table 1b and Table 2 shown in this embodiment of this application may be obtained in the following manner:

First, each of the M sequences needs to meet an autocorrelation characteristic, for example, autocorrelation side lobe energy of each sequence needs to be zero in the reference range. Therefore, when $-127 \le \tau \le 127$, $\tau \neq 0$ , each symbol sequence may meet the following conditions, as shown in the following formula (12) and the following formula (13):

$$\begin{aligned}&\left(p_{0,0}p_{0,1}+p_{0,4}p_{0,5}\right)R_{G_e^i}(\tau)+\left(p_{0,0}p_{0,7}+p_{0,3}p_{0,4}\right)R_{G_e^i,G_f^i}(\tau)+\\&\left(p_{0,2}p_{0,3}+p_{0,6}p_{0,7}\right)R_{G_f^i}(\tau)+\left(p_{0,1}p_{0,2}+p_{0,5}p_{0,6}\right)R_{G_f^i,G_e^i}(\tau)=0\end{aligned}\quad(12),$$

and

$$\begin{aligned}&p_{0,0}p_{0,1}+p_{0,4}p_{0,5}=p_{0,2}p_{0,3}+p_{0,6}p_{0,7}\\&p_{0,0}p_{0,7}+p_{0,3}p_{0,4}=0\\&p_{0,1}p_{0,2}+p_{0,5}p_{0,6}=0\end{aligned}\quad(13).$$

For descriptions of related parameters in the formula (12) and the formula (13), refer to the formula (8) to the formula (11), and details are not described herein again.

For example, $p_0=(p_{0,k})_{k=0}^{7}$ and $p_1=(p_{1,k})_{k=0}^{7}$. $p_1=(p_{1,k})_{k=0}^{7}$ also need to meet a same condition as $p_0=(p_{0,k})_{k=0}^{7}$. Details are not enumerated herein.

Based on a property of a Golay complementary mate, for CE1 and CE3, when $-127 \le \tau \le 127$, $\tau \neq 0$, symbol sequences of CE1 and CE3 need to satisfy the following formula (14):

$$\begin{aligned}&\left(p_{0,0}p_{1,1}+p_{0,4}p_{1,5}\right)R_{G_e^i}(\tau)+\left(p_{0,7}p_{1,0}+p_{0,3}p_{1,4}\right)R_{G_e^i,G_f^i}(\tau)+\\&\left(p_{0,2}p_{1,3}+p_{0,6}p_{1,7}\right)R_{G_f^i}(\tau)+\left(p_{0,1}p_{1,2}+p_{0,5}p_{1,6}\right)R_{G_f^i,G_e^i}(\tau)=0\end{aligned}\quad(14).$$

Therefore, according to the formula (14), $p_0=(p_{0,k})_{k=0}^{7}$ and $p_1=(p_{1,k})_{k=0}^{7}$ need to satisfy the following formula:

$$\begin{aligned}&p_{0,0}p_{1,1}+p_{0,4}p_{1,5}=p_{0,2}p_{1,3}+p_{0,6}p_{1,7}\\&p_{1,0}p_{0,7}+p_{0,3}p_{1,4}=0\\&p_{0,1}p_{1,2}+p_{0,5}p_{1,6}=0\end{aligned}\quad(15).$$

$\tau = 0$ satisfies the following formula (16):

$$\sum_{k=0}^{7} p_{0,k} p_{1,k} = 0 \quad (16).$$

According to the formula (15) and the formula (16), each symbol sequence may be obtained by obtaining $p_0 = (p_{0,k})_{k=0}^{7}$ and $p_1 = (p_{1,k})_{k=0}^{7}$ that meet the condition, in other words, Table 1b and Table 2 may be obtained.

For example, when (*e, f*) = (*a, b*), *i* = 1, and when r=2 (or r=6), cross correlation energy between any two sequences in the reference range such as the region from -127 to 127 may be shown in Table 3. Alternatively, Table 3 may also be referred to as a peak cross correlation value of the sequence in the region from -127 to +127. It may be understood that cross correlation energy values shown in this embodiment of this application are all illustrated by using the sequence number 1 shown in Table 1b and Table 2, and should not be construed as limitations on this embodiment of this application.

**Table 3**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 76 | 84 | 76 | 84 |
| Second sequence | 0 | 1024 | 0 | 0 | 84 | 76 | 84 | 76 |
| Third sequence | 0 | 0 | 1024 | 0 | 76 | 84 | 76 | 84 |
| Fourth sequence | 0 | 0 | 0 | 1024 | 84 | 76 | 84 | 76 |
| Fifth sequence | 76 | 84 | 76 | 84 | 1024 | 0 | 0 | 0 |
| Sixth sequence | 84 | 76 | 84 | 76 | 0 | 1024 | 0 | 0 |
| Seventh sequence | 76 | 84 | 76 | 84 | 0 | 0 | 1024 | 0 |
| Eighth sequence | 84 | 76 | 84 | 76 | 0 | 0 | 0 | 1024 |

It may be understood that it can be seen from Table 3 that cross correlation energy between the first sequence and the fifth sequence is 76, cross correlation energy between the first sequence and the seventh sequence is 84, cross correlation energy between the third sequence and the fifth sequence is 84, and cross correlation energy between the third sequence and the seventh sequence is 76. In other words, two sequences in the first sequence to the eighth sequence have a low correlation characteristic. Compared with a construction manner shown in FIG. 4d, in a redesigned construction manner provided in this embodiment of this application, cross correlation energy between any two of the first sequence to the eighth sequence is less than 144 in the reference range. For example, the cross correlation energy between the first sequence and the fifth sequence in this embodiment of this application is 56 in the reference range, which is less than 256 shown in Table 1a. Therefore, there is a local region low correlation characteristic between the first sequence and the fifth sequence. Therefore, the first communication apparatus may send the eight sequences at one sending time, thereby effectively reducing the sending time of the sequences. It may be understood that the descriptions are also applicable to the following descriptions, and details are not described below again.

For example, when $(e, f) = (a, b)$, $i = 3$ (or i=5), and when r=2, cross correlation energy between any two sequences in the reference range such as the region from -127 to 127 may be shown in Table 4.

**Table 4**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 68 | 80 | 68 | 80 |
| Second sequence | 0 | 1024 | 0 | 0 | 80 | 68 | 80 | 68 |
| Third sequence | 0 | 0 | 1024 | 0 | 68 | 80 | 68 | 80 |
| Fourth sequence | 0 | 0 | 0 | 1024 | 80 | 68 | 80 | 68 |
| Fifth sequence | 68 | 80 | 68 | 80 | 1024 | 0 | 0 | 0 |
| Sixth sequence | 80 | 68 | 80 | 68 | 0 | 1024 | 0 | 0 |
| Seventh sequence | 68 | 80 | 68 | 80 | 0 | 0 | 1024 | 0 |
| Eighth sequence | 80 | 68 | 80 | 68 | 0 | 0 | 0 | 1024 |

It may be understood that it can be seen from Table 4 that cross correlation energy between the first sequence and the fifth sequence is 68, cross correlation energy between the first sequence and the seventh sequence is 80, cross correlation energy between the third sequence and the fifth sequence is 80, and cross correlation energy between the third sequence and the seventh sequence is 68. That is, two sequences in the first sequence to the eighth sequence have the low correlation characteristic.

For example, when (*e*, *f*) = (*a*, *b*), *i* = 7, and when r=2 (or r=6), cross correlation energy between any two sequences in the reference range such as the region from -127 to 127 may be shown in Table 5.

**Table 5**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 60 | 80 | 60 | 80 |
| Second sequence | 0 | 1024 | 0 | 0 | 80 | 60 | 80 | 60 |
| Third sequence | 0 | 0 | 1024 | 0 | 60 | 80 | 60 | 80 |
| Fourth sequence | 0 | 0 | 0 | 1024 | 80 | 60 | 80 | 60 |
| Fifth sequence | 60 | 80 | 60 | 80 | 1024 | 0 | 0 | 0 |
| Sixth sequence | 80 | 60 | 80 | 60 | 0 | 1024 | 0 | 0 |
| Seventh sequence | 60 | 80 | 60 | 80 | 0 | 0 | 1024 | 0 |
| Eighth sequence | 80 | 60 | 80 | 60 | 0 | 0 | 0 | 1024 |

It may be understood that it can be seen from Table 5 that cross correlation energy between the first sequence and the fifth sequence is 60, cross correlation energy between the first sequence and the seventh sequence is 80, cross correlation energy between the third sequence and the fifth sequence is 80, and cross correlation energy between the third sequence and the seventh sequence is 60. That is, two sequences in the first sequence to the eighth sequence have the low correlation characteristic.

For example, when (*e, f*) = (*c*, *d*), *i* = 1 (or i=5), and when r=2 (or r=6), cross correlation energy between any two sequences in the reference range such as the region from -127 to 127 may be shown in Table 6.

**Table 6**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 72 | 124 | 72 | 124 |
| Second sequence | 0 | 1024 | 0 | 0 | 124 | 72 | 124 | 72 |
| Third sequence | 0 | 0 | 1024 | 0 | 72 | 124 | 72 | 124 |
| Fourth sequence | 0 | 0 | 0 | 1024 | 124 | 72 | 124 | 72 |
| Fifth sequence | 72 | 124 | 72 | 124 | 1024 | 0 | 0 | 0 |
| Sixth sequence | 124 | 72 | 124 | 72 | 0 | 1024 | 0 | 0 |
| Seventh sequence | 72 | 124 | 72 | 124 | 0 | 0 | 1024 | 0 |
| Eighth sequence | 124 | 72 | 124 | 72 | 0 | 0 | 0 | 1024 |

For example, when $(e,f) = (c,d)$, $i = 3$, and when r=2 (or r=6), cross correlation energy between any two sequences in the reference range such as the region from -127 to 127 may be shown in Table 7.

**Table 7**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 56 | 100 | 56 | 100 |
| Second sequence | 0 | 1024 | 0 | 0 | 92 | 56 | 92 | 56 |
| Third sequence | 0 | 0 | 1024 | 0 | 56 | 100 | 56 | 100 |
| Fourth sequence | 0 | 0 | 0 | 1024 | 92 | 56 | 92 | 56 |
| Fifth sequence | 56 | 92 | 56 | 92 | 1024 | 0 | 0 | 0 |
| Sixth sequence | 100 | 56 | 100 | 56 | 0 | 1024 | 0 | 0 |
| Seventh sequence | 56 | 92 | 56 | 92 | 0 | 0 | 1024 | 0 |
| Eighth sequence | 100 | 56 | 100 | 56 | 0 | 0 | 0 | 1024 |

For example, when $(e,f) = (c,d)$, $i = 7$, and when r=2 (or r=6), cross correlation energy between any two sequences in the reference range such as the region from -127 to 127 may be shown in Table 8.

**Table 8**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 56 | 84 | 56 | 84 |
| Second sequence | 0 | 1024 | 0 | 0 | 92 | 56 | 92 | 56 |
| Third sequence | 0 | 0 | 1024 | 0 | 56 | 84 | 56 | 84 |
| Fourth sequence | 0 | 0 | 0 | 1024 | 92 | 56 | 92 | 56 |
| Fifth sequence | 56 | 92 | 56 | 92 | 1024 | 0 | 0 | 0 |
| Sixth sequence | 84 | 56 | 84 | 56 | 0 | 1024 | 0 | 0 |
| Seventh sequence | 56 | 92 | 56 | 92 | 0 | 0 | 1024 | 0 |
| Eighth sequence | 84 | 56 | 84 | 56 | 0 | 0 | 0 | 1024 |

For the sequences shown in this embodiment of this application, it can be learned from Table 1b to Table 8 that when M is equal to 8, any two sequences in the first sequence to the fourth sequence have the local region zero cross correlation characteristic, and any two sequences in the fifth sequence to the eighth sequence have the local region zero cross correlation characteristic. In addition, one of the first sequence to the fourth sequence and one of the fifth sequence to the eighth sequence have the local region low cross correlation characteristic.

Example 2:

CE1 to CE4 may meet the following conditions, as shown in the following formula (17):

$$\begin{aligned}
\mathrm{CE1} &= (p_{0,0}G_e^i, p_{0,1}G_f^i, p_{0,2}G_e^i, p_{0,3}G_f^i, p_{0,4}G_e^i, p_{0,5}G_f^i, p_{0,6}G_e^i, p_{0,7}G_f^i) \\
\mathrm{CE2} &= (p_{0,0}G_e^j, p_{0,1}G_f^j, p_{0,2}G_e^j, p_{0,3}G_f^j, p_{0,4}G_e^j, p_{0,5}G_f^j, p_{0,6}G_e^j, p_{0,7}G_f^j) \\
\mathrm{CE3} &= (p_{1,0}G_e^i, p_{1,1}G_f^i, p_{1,2}G_e^i, p_{1,3}G_f^i, p_{1,4}G_e^i, p_{1,5}G_f^i, p_{1,6}G_e^i, p_{1,7}G_f^i) \\
\mathrm{CE4} &= (p_{1,0}G_e^j, p_{1,1}G_f^j, p_{1,2}G_e^j, p_{1,3}G_f^j, p_{1,4}G_e^j, p_{1,5}G_f^j, p_{1,6}G_e^j, p_{1,7}G_f^j)
\end{aligned} \quad (17).$$

A value of $P_{0,n}$ is +1 or -1, a value of $P_{1,n}$ is +1 or -1, a value of i is one of 1, 3, 5, or 7, and values of e and f are a and b, or c and d, that is, $(e, f) \in \{(a,b),(c,d)\}$. It may be understood that for descriptions of related parameters shown in the formula (17), refer to the formula (12), and details are not described herein again. The foregoing formula (13) and formula (14) are also applicable to this embodiment of this application, and details are not described herein again.

In a possible implementation, CE5 to CE8 may meet the following condition, as shown in the following formula (18a):

$$\begin{aligned}
\mathrm{CE5} &= \mathrm{circshift}(\mathrm{CE1}, N \cdot r) \\
\mathrm{CE6} &= \mathrm{circshift}(\mathrm{CE2}, N \cdot r) \\
\mathrm{CE7} &= \mathrm{circshift}(\mathrm{CE3}, N \cdot r) \\
\mathrm{CE8} &= \mathrm{circshift}(\mathrm{CE4}, N \cdot r)
\end{aligned} \quad (18a),$$

where

circshift(-) represents a left periodic cyclic shift, and a value of r is one of 1 to 7, that is, $r \in \{1, 2,3, 4, 5, 6, 7\}$.

It may be understood that for descriptions of the cyclic shift, refer to Example 1, and details are not described herein again. For example, CE5 shown in this embodiment of this application is obtained by cyclically shifting CE1 leftwards by r units, or CE5 may be obtained by cyclically shifting CE1 rightwards by 8-r units. CE6 is obtained by cyclically shifting CE2 to leftwards by r units, or CE6 may be obtained by cyclically shifting CE2 rightwards by 8-r units. CE7 is obtained by cyclically shifting CE3 to leftwards by r units, or CE7 may be obtained by cyclically shifting CE3 rightwards by 8-r units. CE8 is obtained by cyclically shifting CE4 to leftwards by r units, or CE8 may be obtained by cyclically shifting CE4 rightwards by 8-r units.

It may be understood that in this embodiment of this application, the value of r is 1, 2, 3, 4, 5, 6, or 7. However, in consideration of values of cross correlation energy between different sequences in the reference range, when r=1 or r=7, the cross correlation energy between the first sequence and the fifth sequence is small in the reference range, or the cross correlation energy between the first sequence and the seventh sequence is small in the reference range. The first sequence and the fifth sequence that are shown herein, and the first sequence and the seventh sequence that are shown herein are merely examples. For the descriptions of the first sequence to the eighth sequence, refer to Table 11 to Table 16 shown below.

In a possible implementation, the value of $p_{0,n}$ may be shown in Table 9, and the value of $p_{1,n}$ may be shown in Table 10.

**Table 9**

| $p_{0,n}$ / Sequence number | n=0 | n=1 | n=2 | n=3 | n=4 | n=5 | n=6 | n=7 |
|---|---|---|---|---|---|---|---|---|
| 1 | –1 | 1 | –1 | 1 | 1 | 1 | 1 | 1 |
| 2 | –1 | 1 | –1 | 1 | 1 | 1 | 1 | 1 |
| 3 | –1 | 1 | –1 | 1 | 1 | 1 | 1 | 1 |
| 4 | –1 | 1 | –1 | 1 | 1 | 1 | 1 | 1 |
| 5 | 1 | –1 | 1 | –1 | 1 | 1 | 1 | 1 |
| 6 | 1 | –1 | 1 | –1 | 1 | 1 | 1 | 1 |
| 7 | 1 | –1 | 1 | –1 | 1 | 1 | 1 | 1 |
| 8 | 1 | –1 | 1 | –1 | 1 | 1 | 1 | 1 |
| 9 | 1 | 1 | –1 | 1 | –1 | 1 | 1 | 1 |
| 10 | 1 | 1 | –1 | 1 | –1 | 1 | 1 | 1 |
| 11 | 1 | 1 | –1 | 1 | –1 | 1 | 1 | 1 |
| 12 | 1 | 1 | –1 | 1 | –1 | 1 | 1 | 1 |
| 13 | –1 | –1 | 1 | –1 | –1 | 1 | 1 | 1 |
| 14 | –1 | –1 | 1 | –1 | –1 | 1 | 1 | 1 |
| 15 | –1 | –1 | 1 | –1 | –1 | 1 | 1 | 1 |
| 16 | –1 | –1 | 1 | –1 | –1 | 1 | 1 | 1 |
| 17 | –1 | –1 | –1 | 1 | 1 | –1 | 1 | 1 |
| 18 | –1 | –1 | –1 | 1 | 1 | –1 | 1 | 1 |
| 19 | –1 | –1 | –1 | 1 | 1 | –1 | 1 | 1 |
| 20 | 1 | 1 | 1 | –1 | 1 | –1 | 1 | 1 |
| 21 | 1 | 1 | 1 | –1 | 1 | –1 | 1 | 1 |
| 22 | 1 | 1 | 1 | –1 | 1 | –1 | 1 | 1 |
| 23 | 1 | –1 | –1 | 1 | –1 | –1 | 1 | 1 |
| 24 | 1 | –1 | –1 | 1 | –1 | –1 | 1 | 1 |
| 25 | 1 | –1 | –1 | 1 | –1 | –1 | 1 | 1 |
| 26 | –1 | 1 | 1 | –1 | –1 | –1 | 1 | 1 |
| 27 | –1 | 1 | 1 | –1 | –1 | –1 | 1 | 1 |
| 28 | –1 | 1 | 1 | –1 | –1 | –1 | 1 | 1 |
| 29 | –1 | 1 | 1 | 1 | 1 | 1 | –1 | 1 |
| 30 | –1 | 1 | 1 | 1 | 1 | 1 | –1 | 1 |

| $p_{0,n}$ / Sequence number | n=0 | n=1 | n=2 | n=3 | n=4 | n=5 | n=6 | n=7 |
|---|---|---|---|---|---|---|---|---|
| 31 | –1 | 1 | 1 | 1 | 1 | 1 | –1 | 1 |
| 32 | 1 | –1 | –1 | –1 | 1 | 1 | –1 | 1 |
| 33 | 1 | –1 | –1 | –1 | 1 | 1 | –1 | 1 |
| 34 | 1 | –1 | –1 | –1 | 1 | 1 | –1 | 1 |
| 35 | 1 | 1 | 1 | 1 | –1 | 1 | –1 | 1 |
| 36 | 1 | 1 | 1 | 1 | –1 | 1 | –1 | 1 |
| 37 | 1 | 1 | 1 | 1 | –1 | 1 | –1 | 1 |
| 38 | –1 | –1 | –1 | –1 | –1 | 1 | –1 | 1 |
| 39 | –1 | –1 | –1 | –1 | –1 | 1 | –1 | 1 |
| 40 | –1 | –1 | –1 | –1 | –1 | 1 | –1 | 1 |
| 41 | –1 | –1 | 1 | 1 | 1 | –1 | –1 | 1 |
| 42 | –1 | –1 | 1 | 1 | 1 | –1 | –1 | 1 |
| 43 | 1 | 1 | –1 | –1 | 1 | –1 | –1 | 1 |
| 44 | 1 | 1 | –1 | –1 | 1 | –1 | –1 | 1 |
| 45 | 1 | –1 | 1 | 1 | –1 | –1 | –1 | 1 |
| 46 | 1 | –1 | 1 | 1 | –1 | –1 | –1 | 1 |
| 47 | –1 | 1 | –1 | –1 | –1 | –1 | –1 | 1 |
| 48 | –1 | 1 | –1 | –1 | –1 | –1 | –1 | 1 |
| 49 | 1 | –1 | 1 | 1 | 1 | 1 | 1 | –1 |
| 50 | 1 | –1 | 1 | 1 | 1 | 1 | 1 | –1 |
| 51 | –1 | 1 | –1 | –1 | 1 | 1 | 1 | –1 |
| 52 | –1 | 1 | –1 | –1 | 1 | 1 | 1 | –1 |
| 53 | –1 | –1 | 1 | 1 | –1 | 1 | 1 | –1 |
| 54 | –1 | –1 | 1 | 1 | –1 | 1 | 1 | –1 |
| 55 | 1 | 1 | –1 | –1 | –1 | 1 | 1 | –1 |
| 56 | 1 | 1 | –1 | –1 | –1 | 1 | 1 | –1 |
| 57 | 1 | 1 | 1 | 1 | 1 | –1 | 1 | –1 |
| 58 | –1 | –1 | –1 | –1 | 1 | –1 | 1 | –1 |
| 59 | –1 | 1 | 1 | 1 | –1 | –1 | 1 | –1 |
| 60 | 1 | –1 | –1 | –1 | –1 | –1 | 1 | –1 |
| 61 | 1 | –1 | –1 | 1 | 1 | 1 | –1 | –1 |

| $p_{0,n}$ / Sequence number | n=0 | n=1 | n=2 | n=3 | n=4 | n=5 | n=6 | n=7 |
|---|---|---|---|---|---|---|---|---|
| 62 | –1 | 1 | 1 | –1 | 1 | 1 | –1 | –1 |
| 63 | –1 | –1 | –1 | 1 | –1 | 1 | –1 | –1 |
| 64 | 1 | 1 | 1 | –1 | –1 | 1 | –1 | –1 |

**Table 10**

| $p_{1,n}$ / Sequence number | n=0 | n=1 | n=2 | n=3 | n=4 | n=5 | n=6 | n=7 |
|---|---|---|---|---|---|---|---|---|
| 1 | 1 | –1 | –1 | 1 | –1 | –1 | 1 | 1 |
| 2 | –1 | –1 | 1 | 1 | 1 | –1 | –1 | 1 |
| 3 | 1 | 1 | –1 | –1 | –1 | 1 | 1 | –1 |
| 4 | –1 | 1 | 1 | –1 | 1 | 1 | –1 | –1 |
| 5 | –1 | 1 | 1 | –1 | –1 | –1 | 1 | 1 |
| 6 | 1 | 1 | –1 | –1 | 1 | –1 | –1 | 1 |
| 7 | –1 | –1 | 1 | 1 | –1 | 1 | 1 | –1 |
| 8 | 1 | –1 | –1 | 1 | 1 | 1 | –1 | –1 |
| 9 | –1 | –1 | –1 | 1 | 1 | –1 | 1 | 1 |
| 10 | 1 | –1 | 1 | 1 | –1 | –1 | –1 | 1 |
| 11 | –1 | 1 | –1 | –1 | 1 | 1 | 1 | –1 |
| 12 | 1 | 1 | 1 | –1 | –1 | 1 | –1 | –1 |
| 13 | 1 | 1 | 1 | –1 | 1 | –1 | 1 | 1 |
| 14 | –1 | 1 | –1 | –1 | –1 | –1 | –1 | 1 |
| 15 | 1 | –1 | 1 | 1 | 1 | 1 | 1 | –1 |
| 16 | –1 | –1 | –1 | 1 | –1 | 1 | –1 | –1 |
| 17 | –1 | 1 | 1 | 1 | 1 | 1 | –1 | 1 |
| 18 | 1 | –1 | –1 | –1 | –1 | –1 | 1 | –1 |
| 19 | –1 | –1 | 1 | –1 | 1 | –1 | –1 | –1 |
| 20 | 1 | –1 | –1 | –1 | 1 | 1 | –1 | 1 |
| 21 | –1 | 1 | 1 | 1 | –1 | –1 | 1 | –1 |
| 22 | 1 | 1 | –1 | 1 | 1 | –1 | –1 | –1 |
| 23 | 1 | 1 | 1 | 1 | –1 | 1 | –1 | 1 |

| $p_{1,n}$ / Sequence number | n=0 | n=1 | n=2 | n=3 | n=4 | n=5 | n=6 | n=7 |
|---|---|---|---|---|---|---|---|---|
| 24 | –1 | –1 | –1 | –1 | 1 | –1 | 1 | –1 |
| 25 | 1 | –1 | 1 | –1 | –1 | –1 | –1 | –1 |
| 26 | –1 | –1 | –1 | –1 | –1 | 1 | –1 | 1 |
| 27 | 1 | 1 | 1 | 1 | 1 | –1 | 1 | –1 |
| 28 | –1 | 1 | –1 | 1 | –1 | –1 | –1 | –1 |
| 29 | 1 | –1 | 1 | 1 | –1 | –1 | –1 | 1 |
| 30 | –1 | 1 | –1 | –1 | 1 | 1 | 1 | –1 |
| 31 | 1 | 1 | 1 | –1 | –1 | 1 | –1 | –1 |
| 32 | –1 | 1 | –1 | –1 | –1 | –1 | –1 | 1 |
| 33 | 1 | –1 | 1 | 1 | 1 | 1 | 1 | –1 |
| 34 | –1 | –1 | –1 | 1 | –1 | 1 | –1 | –1 |
| 35 | –1 | –1 | 1 | 1 | 1 | –1 | –1 | 1 |
| 36 | 1 | 1 | –1 | –1 | –1 | 1 | 1 | –1 |
| 37 | –1 | 1 | 1 | –1 | 1 | 1 | –1 | –1 |
| 38 | 1 | 1 | –1 | –1 | 1 | –1 | –1 | 1 |
| 39 | –1 | –1 | 1 | 1 | –1 | 1 | 1 | –1 |
| 40 | 1 | –1 | –1 | 1 | 1 | 1 | –1 | –1 |
| 41 | –1 | –1 | –1 | –1 | 1 | –1 | 1 | –1 |
| 42 | 1 | –1 | 1 | –1 | –1 | –1 | –1 | –1 |
| 43 | 1 | 1 | 1 | 1 | 1 | –1 | 1 | –1 |
| 44 | –1 | 1 | –1 | 1 | –1 | –1 | –1 | –1 |
| 45 | 1 | –1 | –1 | –1 | –1 | –1 | 1 | –1 |
| 46 | –1 | –1 | 1 | –1 | 1 | –1 | –1 | –1 |
| 47 | –1 | 1 | 1 | 1 | –1 | –1 | 1 | –1 |
| 48 | 1 | 1 | –1 | 1 | 1 | –1 | –1 | –1 |
| 49 | –1 | 1 | 1 | 1 | –1 | –1 | 1 | –1 |
| 50 | 1 | 1 | –1 | 1 | 1 | –1 | –1 | –1 |
| 51 | 1 | –1 | –1 | –1 | –1 | –1 | 1 | –1 |
| 52 | –1 | –1 | 1 | –1 | 1 | –1 | –1 | –1 |
| 53 | 1 | 1 | 1 | 1 | 1 | –1 | 1 | –1 |
| 54 | –1 | 1 | –1 | 1 | –1 | –1 | –1 | –1 |

| Sequence number \ $p_{1,n}$ | n=0 | n=1 | n=2 | n=3 | n=4 | n=5 | n=6 | n=7 |
|---|---|---|---|---|---|---|---|---|
| 55 | −1 | −1 | −1 | −1 | 1 | −1 | 1 | −1 |
| 56 | 1 | −1 | 1 | −1 | −1 | −1 | −1 | −1 |
| 57 | 1 | −1 | −1 | 1 | 1 | 1 | −1 | −1 |
| 58 | −1 | 1 | 1 | −1 | 1 | 1 | −1 | −1 |
| 59 | −1 | −1 | −1 | 1 | −1 | 1 | −1 | −1 |
| 60 | 1 | 1 | 1 | −1 | −1 | 1 | −1 | −1 |
| 61 | −1 | 1 | −1 | 1 | −1 | −1 | −1 | −1 |
| 62 | 1 | −1 | 1 | −1 | −1 | −1 | −1 | −1 |
| 63 | 1 | 1 | −1 | 1 | 1 | −1 | −1 | −1 |
| 64 | −1 | −1 | 1 | −1 | 1 | −1 | −1 | −1 |

For example, the value of $p_{0,n}$ shown in Table 9 and the value of $p_{1,n}$ shown in Table 10 correspond to a same sequence number. For example, if a sequence number corresponding to the value of $p_{0,n}$ is 1, a sequence number corresponding to the value of $p_{1,n}$ is also 1. For another example, if a sequence number corresponding to the value of $p_{0,n}$ is 16, a sequence number corresponding to the value of $p_{1,n}$ is also 16. For another example, if a sequence number corresponding to the value of $p_{0,n}$ is 64, a sequence number corresponding to the value of $p_{1,n}$ is also 64.

It may be understood that Table 9 and Table 10 shown in this embodiment of this application are merely examples. In specific implementation, the values of $p_{0,n}$ and $p_{1,n}$ may alternatively be represented in other forms. This is not limited in this embodiment of this application.

Based on manners of constructing a sequence and a symbol sequence provided in this embodiment of this application, CE1 to CE8 shown in this embodiment of this application may meet the following conditions:

autocorrelation side lobe energy of each sequence in CE1 to CE8 is zero in the reference range;
cross correlation energy between every two sequences in CE1 to CE4 is zero in the reference range;
cross correlation energy between every two sequences in CE5 to CE8 is zero in the reference range;
cross correlation energy between one sequence in CE1 to CE4 and one sequence in CE5 to CE8 is less than or equal to the first threshold in the reference range.

For specific descriptions of the foregoing conditions, refer to Example 1 shown above, and details are not described herein again. It may be understood that the foregoing conditions met by CE1 to CE8 are also applicable to the first sequence to the eighth sequence. The descriptions of the first sequence to the eighth sequence are not described herein again.

Based on a construction feature of the Golay complementary sequence in the sequences shown in this embodiment of this application, a construction manner of the sequence shown in this embodiment of this application may also be referred to as an ABAB-type construction manner.

In this embodiment of this application, CE1 and CE2 are constructed in a same manner, CE3 and CE4 are constructed in a same manner, CE5 and CE6 are constructed in a same manner, and CE7 and CE8 are constructed in a same manner. In addition, every two sequences in CE1 to CE4 may have the zero cross correlation characteristic. CE5 to CE8 are obtained by periodically cyclically shifting CE1 to CE4, and therefore also have the zero cross correlation characteristic.

A sequence number 1 in Table 9 and Table 10 is used as an example. In addition, when i=1, r=6, and $(e,f) \in \{(a,b)\}$, CE1={$-Ga^1$, $Gb^1$, $-Ga^1$, $Gb^1$, $Ga^1$, $Gb^1$, $Ga^1$, $Gb^1$}, CE2={$-Ga^2$, $Gb^2$, $-Ga^2$, $Gb^2$, $Ga^2$, $Gb^2$, $Ga^2$, $Gb^2$}, CE3={ $Ga^1$, $-Gb^1$, $-Ga^1$, $Gb^1$, $-Ga^1$, $-Gb^1$, $Ga^1$, $Gb^1$}, CE4={ $Ga^2$, $-Gb^2$, $Ga^2$, $Gb^2$, $-Ga^2$, $-Gb^2$, $Ga^2$, $Gb^2$}, CE5={ $Ga^1$, $Gb^1$, $-Ga^1$, $Gb^1$, $Ga^1$, $Gb^1$, $Ga^1$, $Gb^1$}, CE6={$Ga^2$, $Gb^2$, $-Ga^2$, $Gb^2$, $-Ga^2$, $Gb^2$, $Ga^2$, $Gb^2$}, CE7={$Ga^1$, $Gb^1$, $Ga^1$, $-Gb^1$, $-Ga^1$, $Gb^1$, $-Ga^1$, $-Gb^1$}, and CE8={ $Ga^2$, $Gb^2$, $Ga^2$, $-Gb^2$, $-Ga^2$, $Gb^2$, $-Ga^2$, $-Gb^2$}.

N=128 is used as an example, and an example in which each of CE1 and CE2 include a cyclic suffix is used. In this case,

$$CE1(q\frac{T_c}{N_{CB}}) = \Big(-Ga^1_{128\times N_{CB}}(q)+Gb^1_{128\times N_{CB}}(q-128\times N_{CB})-Ga^1_{128\times N_{CB}}(q-256\times N_{CB})+Gb^1_{128\times N_{CB}}(q-384\times N_{CB})+Ga^1_{128\times N_{CB}}(q-512\times N_{CB})+Gb^1_{128\times N_{CB}}(q-640\times N_{CB})+Ga^1_{128\times N_{CB}}(q-768\times N_{CB})+Gb^1_{128\times N_{CB}}(q-896\times N_{CB})-Ga^1_{128\times N_{CB}}(q-1024\times N_{CB})\Big);$$

and

$$CE2(q\frac{T_c}{N_{CB}}) = \Big(-Ga^2_{128\times N_{CB}}(q)+Gb^2_{128\times N_{CB}}(q-128\times N_{CB})-Ga^2_{128\times N_{CB}}(q-256\times N_{CB})+Gb^2_{128\times N_{CB}}(q-384\times N_{CB})+Ga^2_{128\times N_{CB}}(q-512\times N_{CB})+Gb^2_{128\times N_{CB}}(q-640\times N_{CB})+Ga^2_{128\times N_{CB}}(q-768\times N_{CB})+Gb^2_{128\times N_{CB}}(q-896\times N_{CB})-Ga^2_{128\times N_{CB}}(q-1024\times N_{CB})\Big).$$

It may be understood that expression forms of CE3 to CE8 are not enumerated herein.

$T_c$ represents chip time duration (chip time duration), $N_{CB}$ represents an integer number ($N_{CB}$ is the integer number of contiguous 2.16 GHz channels over which the measurement is requested to be taken) of consecutive 2.16 GHz channels when the PPDU is transmitted, and q represents an index corresponding to each unit in CE1. Because N=128, and CE1 includes 9 units, a value of q is 0,1, ..., 1152 × $N_{CB}$ - 1. Alternatively, an expression form of CE1 may be:

$$CE1 = \left[-Ga^1_{128\times N_{CB}}\,Gb^1_{128\times N_{CB}}\,-Ga^1_{128\times N_{CB}}\,Gb^1_{128\times N_{CB}}\,Ga^1_{128\times N_{CB}}\,Gb^1_{128\times N_{CB}}\,Ga^1_{128\times N_{CB}}\,Gb^1_{128\times N_{CB}}\right].$$

$$CE2 = \left[-Ga^2_{128\times N_{CB}}\,Gb^2_{128\times N_{CB}}\,-Ga^2_{128\times N_{CB}}\,Gb^2_{128\times N_{CB}}\,Ga^2_{128\times N_{CB}}\,Gb^2_{128\times N_{CB}}\,Ga^2_{128\times N_{CB}}\,Gb^2_{128\times N_{CB}}\right]$$

The expression forms of CE3 to CE8 are not enumerated herein.

The sequence number 1 in Table 9 and Table 10 is used as an example. In addition, when i=1, r=2, and $(e,f)\in(a,b)\}$, CE1={$-Ga^1$, $Gb^1$,$-Ga^1$, $Gb^1$, $Ga^1$, $Gb^1$, $Ga^1$, $Gb^1$}, CE2={$-Ga^2$, $Gb^2$, $-Ga^2$, $Gb^2$, $Ga^2$, $Gb^2$, $Ga^2$, $Gb^2$}, CE3={$Ga^1$, $-Gb^1$, $-Ga^1$, $Gb^1$,$-Ga^1$, $-Gb^1$, $Ga^1$, $Gb^1$}, CE4={$Ga^2$, $-Gb^2$, $-Ga^2$, $Gb^2$, $-Ga^2$, $-Gb^2$, $Ga^2$, $Gb^2$}, CE5={$-Ga^1$, $Gb^1$, $Ga^1$, $Gb^1$, $Ga^1$, $Gb^1$, $-Ga^1$, $Gb^1$}, CE6={$-Ga^2$, $Gb^2$, $Ga^2$, $Gb^2$, $Ga^2$, $Gb^2$, $-Ga^2$, $Gb^2$}, CE7={$-Ga^1$, $Gb^1$, $-Ga^1$, $-Gb^1$, $Ga^1$, $Gb^1$, $Ga^1$, $-Gb^1$}, and CE8={$-Ga^2$, $Gb^2$, $-Ga^2$, $-Gb^2$, $Ga^2$, $Gb^2$, $Ga^2$, $Gb^2$}.

It may be understood that other sequence numbers in Table 9 and Table 10 and other values of i and r are not enumerated herein. It should be noted that $(e,f) \in \{(a, b)\}$ and $(e,f)\in\{(c,d)\}$ are used as examples for description above, and this embodiment of this application is also applicable to $(e, f) \in \{(b, a)\}$ and/or $(e, f) \in \{(d, c)\}$.

For example, Table 9 and Table 10 shown in this embodiment of this application may be obtained in the following manner:

First, each of the M sequences needs to meet an autocorrelation characteristic, for example, autocorrelation side lobe energy of each sequence needs to be zero in the reference range. Therefore, when $-127 \leq \tau \leq 127$, $\tau\neq0$, each symbol sequence may meet the following conditions, as shown in the following formula (18b) and the following formula (19):

$$\left(p_{0,0}p_{0,1}+p_{0,2}p_{0,3}+p_{0,4}p_{0,5}+p_{0,6}p_{0,7}\right)R_{G_e^i,G_f^i}(\tau)+\left(p_{0,1}p_{0,2}+p_{0,3}p_{0,4}+p_{0,5}p_{0,6}+p_{0,7}p_{0,0}\right)R_{G_f^i,G_e^i}(\tau)=0 \quad (18b);$$

$$\begin{aligned}p_{0,0}p_{0,1}+p_{0,2}p_{0,3}+p_{0,4}p_{0,5}+p_{0,6}p_{0,7}&=0\\ p_{0,1}p_{0,2}+p_{0,3}p_{0,4}+p_{0,5}p_{0,6}+p_{0,7}p_{0,0}&=0\end{aligned} \quad (19).$$

and

It may be understood that for descriptions of related parameters in the formula (18b) and the formula (19), refer to the foregoing descriptions, and details are not described herein again.

For example, $p_0=(p_{0,k})_{k=0}^{7}$ and $p_1=(p_{1,k})_{k=0}^{7}$. $p_1=(p_{1,k})_{k=0}^{7}$ also need to meet a same condition as $p_0=(p_{0,k})_{k=0}^{7}$. Details are not enumerated herein.

Based on a property of a Golay complementary mate, for CE1 and CE3, when -127 ≤ $\tau$ ≤ 127, $\tau$≠0, symbol sequences of CE1 and CE3 need to satisfy the following formula (20):

$$\left(p_{0,0}p_{1,1}+p_{0,2}p_{1,3}+p_{0,4}p_{1,5}+p_{0,6}p_{1,7}\right)R_{G_e^i,G_f^i}(\tau)+\left(p_{0,1}p_{1,2}+p_{0,3}p_{1,4}+p_{0,5}p_{1,6}+p_{0,7}p_{1,0}\right)R_{G_f^i,G_e^i}(\tau)=0 \quad (20).$$

Therefore, according to the formula (20), $p_0=(p_{0,k})_{k=0}^{7}$ and $p_1=(p_{1,k})_{k=0}^{7}$ need to satisfy the following formula (21):

$$\begin{aligned}p_{0,0}p_{1,1}+p_{0,2}p_{1,3}+p_{0,4}p_{1,5}+p_{0,6}p_{1,7}&=0\\ p_{0,1}p_{1,2}+p_{0,3}p_{1,4}+p_{0,5}p_{1,6}+p_{0,7}p_{1,0}&=0\end{aligned} \quad (21).$$

$\tau$ = 0 satisfies the following formula (22):

$$\sum_{k=0}^{7}p_{0,k}p_{1,k}=0 \quad (22).$$

According to the formula (21) and the formula (22), each symbol sequence may be obtained by obtaining $p_0=(p_{0,k})_{k=0}^{7}$ and $p_1=(p_{1,k})_{k=0}^{7}$ that meet the condition.

For example, when (*e*, *f*) = (*a, b*), *i* = 1, and when r=1 (or r=7), cross correlation energy between any two sequences in the reference range such as the region from -127 to 127 may be shown in Table 11. Alternatively, Table 11 may also be referred to as a peak cross correlation value of the sequence in the region from -127 to +127. It may be understood that cross correlation energy values shown in this embodiment of this application are all illustrated by using the sequence number 1 shown in Table 1b and Table 2, and should not be construed as limitations on this embodiment of this application.

**Table 11**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 76 | 84 | 76 | 84 |
| Second sequence | 0 | 1024 | 0 | 0 | 84 | 76 | 84 | 76 |
| Third sequence | 0 | 0 | 1024 | 0 | 76 | 84 | 76 | 84 |
| Fourth sequence | 0 | 0 | 0 | 1024 | 84 | 76 | 84 | 76 |
| Fifth sequence | 76 | 84 | 76 | 84 | 1024 | 0 | 0 | 0 |
| Sixth sequence | 84 | 76 | 84 | 76 | 0 | 1024 | 0 | 0 |
| Seventh sequence | 76 | 84 | 76 | 84 | 0 | 0 | 1024 | 0 |
| Eighth sequence | 84 | 76 | 84 | 76 | 0 | 0 | 0 | 1024 |

For example, when (*e*, *f*) = (*a*, *b*), *i* = 3 (or i=5), and when r=1 (or r=7), cross correlation energy between any two sequences in the reference range such as the region from -127 to 127 may be shown in Table 12.

**Table 12**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 68 | 80 | 68 | 80 |
| Second sequence | 0 | 1024 | 0 | 0 | 80 | 68 | 80 | 68 |
| Third sequence | 0 | 0 | 1024 | 0 | 68 | 80 | 68 | 80 |
| Fourth sequence | 0 | 0 | 0 | 1024 | 80 | 68 | 80 | 68 |
| Fifth sequence | 68 | 80 | 68 | 80 | 1024 | 0 | 0 | 0 |
| Sixth sequence | 80 | 68 | 80 | 68 | 0 | 1024 | 0 | 0 |
| Seventh sequence | 68 | 80 | 68 | 80 | 0 | 0 | 1024 | 0 |
| Eighth sequence | 80 | 68 | 80 | 68 | 0 | 0 | 0 | 1024 |

For example, when *(e,f)* = *(a,b)*, *i* = 7, and when r=1 (or r=7), cross correlation energy between any two sequences in the reference range such as the region from -127 to 127 may be shown in Table 13.

**Table 13**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 60 | 80 | 60 | 80 |
| Second sequence | 0 | 1024 | 0 | 0 | 80 | 60 | 80 | 60 |
| Third sequence | 0 | 0 | 1024 | 0 | 60 | 80 | 60 | 80 |
| Fourth sequence | 0 | 0 | 0 | 1024 | 80 | 60 | 80 | 60 |
| Fifth sequence | 60 | 80 | 60 | 80 | 1024 | 0 | 0 | 0 |
| Sixth sequence | 80 | 60 | 80 | 60 | 0 | 1024 | 0 | 0 |
| Seventh sequence | 60 | 80 | 60 | 80 | 0 | 0 | 1024 | 0 |
| Eighth sequence | 80 | 60 | 80 | 60 | 0 | 0 | 0 | 1024 |

For example, when (*e*, *f*) = (*c, d*), *i* = 1 (or i=5), and when r=1 (or r=7), cross correlation energy between any two sequences in the reference range such as the region from -127 to 127 may be shown in Table 14.

**Table 14**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 72 | 124 | 72 | 124 |
| Second sequence | 0 | 1024 | 0 | 0 | 124 | 72 | 124 | 72 |
| Third sequence | 0 | 0 | 1024 | 0 | 72 | 124 | 72 | 124 |
| Fourth sequence | 0 | 0 | 0 | 1024 | 124 | 72 | 124 | 72 |
| Fifth sequence | 72 | 124 | 72 | 124 | 1024 | 0 | 0 | 0 |
| Sixth sequence | 124 | 72 | 124 | 72 | 0 | 1024 | 0 | 0 |
| Seventh sequence | 72 | 124 | 72 | 124 | 0 | 0 | 1024 | 0 |
| Eighth sequence | 124 | 72 | 124 | 72 | 0 | 0 | 0 | 1024 |

For example, when (*e, f*) = (*c, d*), *i* = 3, and when r=1 (or r=7), cross correlation energy between any two sequences in the reference range such as the region from -127 to 127 may be shown in Table 15.

**Table 15**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 56 | 100 | 56 | 100 |
| Second sequence | 0 | 1024 | 0 | 0 | 92 | 56 | 92 | 56 |
| Third sequence | 0 | 0 | 1024 | 0 | 56 | 100 | 56 | 100 |
| Fourth sequence | 0 | 0 | 0 | 1024 | 92 | 56 | 92 | 56 |
| Fifth sequence | 56 | 92 | 56 | 92 | 1024 | 0 | 0 | 0 |
| Sixth sequence | 100 | 56 | 100 | 56 | 0 | 1024 | 0 | 0 |
| Seventh sequence | 56 | 92 | 56 | 92 | 0 | 0 | 1024 | 0 |
| Eighth sequence | 100 | 56 | 100 | 56 | 0 | 0 | 0 | 1024 |

For example, when *(e,f)* = *(c,d)*, *i* = 7, and when r=1 (or r=7), cross correlation energy between any two sequences in the reference range such as the region from -127 to 127 may be shown in Table 16.

**Table 16**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 56 | 84 | 56 | 84 |
| Second sequence | 0 | 1024 | 0 | 0 | 92 | 56 | 92 | 56 |
| Third sequence | 0 | 0 | 1024 | 0 | 56 | 84 | 56 | 84 |
| Fourth sequence | 0 | 0 | 0 | 1024 | 92 | 56 | 92 | 56 |
| Fifth sequence | 56 | 92 | 56 | 92 | 1024 | 0 | 0 | 0 |
| Sixth sequence | 84 | 56 | 84 | 56 | 0 | 1024 | 0 | 0 |
| Seventh sequence | 56 | 92 | 56 | 92 | 0 | 0 | 1024 | 0 |
| Eighth sequence | 84 | 56 | 84 | 56 | 0 | 0 | 0 | 1024 |

It may be understood that for specific descriptions of Example 2, refer to Example 1, and details are not described herein again.

For the sequences shown in this embodiment of this application, it can be learned from Table 9 to Table 16 that when M is equal to 8, any two sequences in the first sequence to the fourth sequence have the zero cross correlation characteristic, and any two sequences in the fifth sequence to the eighth sequence have the zero cross correlation characteristic. In addition, each of the first sequence to the fourth sequence and each of the fifth sequence to the eighth sequence have the low cross correlation characteristic.

Example 3:

CE1 to CE4 may meet the following conditions, as shown in the following formula (23):

$$\begin{aligned}
\mathrm{CE1} &= (p_{0,0}G_e^i, p_{0,1}G_e^i, p_{0,2}G_f^i, p_{0,3}G_f^i, p_{0,4}G_e^i, p_{0,5}G_e^i, p_{0,6}G_f^i, p_{0,7}G_f^i) \\
\mathrm{CE2} &= (p_{0,0}G_e^j, p_{0,1}G_e^j, p_{0,2}G_f^j, p_{0,3}G_f^j, p_{0,4}G_e^j, p_{0,5}G_e^j, p_{0,6}G_f^j, p_{0,7}G_f^j) \\
\mathrm{CE3} &= (p_{1,0}G_e^i, p_{1,1}G_e^i, p_{1,2}G_f^i, p_{1,3}G_f^i, p_{1,4}G_e^i, p_{1,5}G_e^i, p_{1,6}G_f^i, p_{1,7}G_f^i) \\
\mathrm{CE4} &= (p_{1,0}G_e^j, p_{1,1}G_e^j, p_{1,2}G_f^j, p_{1,3}G_f^j, p_{1,4}G_e^j, p_{1,5}G_e^j, p_{1,6}G_f^j, p_{1,7}G_f^j)
\end{aligned} \quad (23).$$

A value of $P_{0,n}$ is +1 or -1, a value of $P_{1,n}$ is +1 or -1, a value of i is one of 1, 3, 5, or 7, *j* = *i* +1 $G_e^i$ , and $G_f^i$ are Golay complementary sequences, and $G_e^j$ and $G_f^j$ are Golay complementary sequences. For example, $G_e^i$ and $G_f^i$ may be $G_a^i$ and Gb , or may be and $G_d^i$ . Similarly, $G_e^j$ and $G_f^j$ may be $G_a^j$ and $G_b^j$ , or may be $G_c^j$ and $G_d^j$ . In other words, values of e and f are a and b, or may be c and d, that is, (*e*, *f*) ∈ {(*a*, *b*), (*c*, *d*)}. For the descriptions of the Golay complementary sequence, refer to the foregoing descriptions, and details are not described herein again. The foregoing formula (13) and formula (14) are also applicable to this embodiment of this application, and details are not described herein again.

Based on the foregoing descriptions of Gu and Gv, Gu and Gv meet the following conditions respectively, as shown in the following formula 24:

$$\begin{aligned}
G_u^i &= \left(\mathrm{CEi}(0), \mathrm{CEi}(1), \cdots, \mathrm{CEi}(511)\right) \\
G_v^i &= \left(\mathrm{CEi}(512), \mathrm{CEi}(513), \cdots, \mathrm{CEi}(1023)\right)
\end{aligned} \quad (24).$$

According to the method provided in this embodiment of this application, as shown in the formula (22) and the formula (24), $G_u^i$ and $G_v^i$ also constitute a Golay complementary pair. It may be understood that for descriptions of the Golay complementary pair, refer to the foregoing descriptions, and details are not described herein again.

In a possible implementation, CE5 to CE8 may meet the following condition, as shown in the following formula (25):

$$\begin{aligned}
\mathrm{CE5} &= \mathrm{circshift}(\mathrm{CE1}, 512) \\
\mathrm{CE6} &= \mathrm{circshift}(\mathrm{CE2}, 512) \\
\mathrm{CE7} &= \mathrm{circshift}(\mathrm{CE3}, 512) \\
\mathrm{CE8} &= \mathrm{circshift}(\mathrm{CE4}, 512)
\end{aligned} \quad (25),$$

where

circshift(-) represents a left periodic cyclic shift. CE5 is obtained by cyclically shifting CE1 leftwards by 512 bits, or CE5 may be obtained by cyclically shifting CE1 rightwards by 512 bits. CE6 is obtained by cyclically shifting CE2 leftwards by 512 bits, or CE6 may be obtained by cyclically shifting CE2 rightwards by 512 bits. CE7 is obtained by cyclically shifting CE3 leftwards by 512 bits, or CE7 may be obtained by cyclically shifting CE3 rightwards by 512 bits. CE8 is obtained by cyclically shifting CE4 leftwards by 512 bits, or CE8 may be obtained by cyclically shifting CE4 rightwards by 512 bits.

It should be noted that 512 shown above is illustrated by using N=128 as an example. When N=64, CE5 is obtained by cyclically shifting CE1 leftwards by 256 bits, or CE5 may be obtained by cyclically shifting CE1 rightwards by 256 bits. CE6 is obtained by cyclically shifting CE2 leftwards by 256 bits, or CE6 may be obtained by cyclically shifting CE2 rightwards by 256 bits. CE7 is obtained by cyclically shifting CE3 leftwards by 256 bits, or CE7 may be obtained by cyclically shifting CE3 rightwards by 256 bits. CE8 is obtained by cyclically shifting the CE4 leftwards by 256 bits, or CE8 may be obtained by cyclically shifting the CE4 rightwards by 256 bits. When N=256, CE5 is obtained by cyclically shifting CE1 leftwards by 1024 bits, or CE5 may be obtained by cyclically shifting CE1 rightwards by 1024 bits. CE6 is obtained by cyclically shifting the CE2 leftwards by 1024 bits, or CE6 may be obtained by cyclically shifting the CE2 rightwards by 1024 bits. CE7 is obtained by cyclically shifting the CE3 leftwards by 1024 bits, or CE7 may be obtained by cyclically shifting the CE3 rightwards by 1024 bits. CE8 is obtained by cyclically shifting the CE4 leftwards by 1024 bits, or CE8 may be obtained by cyclically shifting the CE4 rightwards by 1024 bits. In other words, CE5 is obtained by cyclically shifting CE1 leftwards by 4N bits (which may also be referred to as four units), or CE5 may be obtained by cyclically shifting CE1 rightwards by 4N bits (which may also be referred to as four units). CE6 is obtained by cyclically shifting CE2 leftwards by 4N bits (which may also be referred to as four units), or CE6 may be obtained by cyclically shifting CE2 rightwards by 4N bits (which may also be referred to as four units). CE7 is obtained by cyclically shifting CE3 leftwards by 4N bits (which may also be referred to as four units), or CE7 may be obtained by cyclically shifting CE3 rightwards by 4N bits (which may also be referred to as four units). CE8 is obtained by cyclically shifting CE4 leftwards by 4N bits (which may also be referred to as four units), or CE8 may be obtained by cyclically shifting CE4 rightwards by 4N bits (which may also be referred to as four units).

Cross correlation overall performance of the Golay complementary sequences $G_a^i$ and $G_b^i$ is better than cross correlation overall performance of the Golay complementary sequences $G_c^i$ and $G_d^i$. Therefore, the following uses the Golay complementary sequences $G_a^i$ and $G_b^i$ as examples to describe the sequences provided in this embodiment of this application. CE1 to CE4 may meet the following conditions, as shown in the following formula (26):

$$\begin{aligned}
\mathrm{CE1} &= (p_{0,0}G_a^i, p_{0,1}G_a^i, p_{0,2}G_b^i, p_{0,3}G_b^i, p_{0,4}G_a^i, p_{0,5}G_a^i, p_{0,6}G_b^i, p_{0,7}G_b^i) \\
\mathrm{CE2} &= (p_{0,0}G_a^j, p_{0,1}G_a^j, p_{0,2}G_b^j, p_{0,3}G_b^j, p_{0,4}G_a^j, p_{0,5}G_a^j, p_{0,6}G_b^j, p_{0,7}G_b^j) \\
\mathrm{CE3} &= (p_{1,0}G_a^i, p_{1,1}G_a^i, p_{1,2}G_b^i, p_{1,3}G_b^i, p_{1,4}G_a^i, p_{1,5}G_a^i, p_{1,6}G_b^i, p_{1,7}G_b^i) \\
\mathrm{CE4} &= (p_{1,0}G_a^j, p_{1,1}G_a^j, p_{1,2}G_b^j, p_{1,3}G_b^j, p_{1,4}G_a^j, p_{1,5}G_a^j, p_{1,6}G_b^j, p_{1,7}G_b^j)
\end{aligned} \quad (26).$$

For descriptions of the formula (26), refer to the formula (23), and details are not described herein again.

In a possible implementation, the value of $p_{0,n}$ may be shown in Table 17, and the value of $p_{1,n}$ may be shown in Table 18.

**Table 17**

| $p_{0,n}$ / Sequence number | n=0 | n=1 | n=2 | n=3 | n=4 | n=5 | n=6 | n=7 |
|---|---|---|---|---|---|---|---|---|
| 1 | 1 | 1 | –1 | 1 | –1 | 1 | 1 | 1 |
| 2 | 1 | 1 | –1 | 1 | –1 | 1 | 1 | 1 |
| 3 | –1 | –1 | 1 | –1 | –1 | 1 | 1 | 1 |
| 4 | –1 | –1 | 1 | –1 | –1 | 1 | 1 | 1 |
| 5 | –1 | –1 | –1 | 1 | 1 | –1 | 1 | 1 |
| 6 | –1 | –1 | –1 | 1 | 1 | –1 | 1 | 1 |
| 7 | 1 | 1 | 1 | –1 | 1 | –1 | 1 | 1 |
| 8 | 1 | 1 | 1 | –1 | 1 | –1 | 1 | 1 |
| 9 | –1 | 1 | 1 | 1 | 1 | 1 | –1 | 1 |
| 10 | 1 | –1 | –1 | –1 | 1 | 1 | –1 | 1 |
| 11 | 1 | –1 | 1 | 1 | –1 | –1 | –1 | 1 |
| 12 | –1 | 1 | –1 | –1 | –1 | –1 | –1 | 1 |
| 13 | 1 | –1 | 1 | 1 | 1 | 1 | 1 | –1 |
| 14 | –1 | 1 | –1 | –1 | 1 | 1 | 1 | –1 |
| 15 | –1 | 1 | 1 | 1 | –1 | –1 | 1 | –1 |
| 16 | 1 | –1 | –1 | –1 | –1 | –1 | 1 | –1 |

**Table 18**

| $p_{1,n}$ / Sequence number | n=0 | n=1 | n=2 | n=3 | n=4 | n=5 | n=6 | n=7 |
|---|---|---|---|---|---|---|---|---|
| 1 | 1 | –1 | 1 | 1 | –1 | –1 | –1 | 1 |
| 2 | –1 | 1 | –1 | –1 | 1 | 1 | 1 | –1 |
| 3 | –1 | 1 | –1 | –1 | –1 | –1 | –1 | 1 |
| 4 | 1 | –1 | 1 | 1 | 1 | 1 | 1 | –1 |

| $p_{1,n}$ / Sequence number | n=0 | n=1 | n=2 | n=3 | n=4 | n=5 | n=6 | n=7 |
|---|---|---|---|---|---|---|---|---|
| 5 | –1 | 1 | 1 | 1 | 1 | 1 | –1 | 1 |
| 6 | 1 | –1 | –1 | –1 | –1 | –1 | 1 | –1 |
| 7 | 1 | –1 | –1 | –1 | 1 | 1 | –1 | 1 |
| 8 | –1 | 1 | 1 | 1 | –1 | –1 | 1 | –1 |
| 9 | 1 | 1 | 1 | –1 | –1 | 1 | –1 | –1 |
| 10 | –1 | –1 | –1 | 1 | –1 | 1 | –1 | –1 |
| 11 | –1 | –1 | 1 | –1 | 1 | –1 | –1 | –1 |
| 12 | 1 | 1 | –1 | 1 | 1 | –1 | –1 | –1 |
| 13 | 1 | 1 | –1 | 1 | 1 | –1 | –1 | –1 |
| 14 | –1 | –1 | 1 | –1 | 1 | –1 | –1 | –1 |
| 15 | –1 | –1 | –1 | 1 | –1 | 1 | –1 | –1 |
| 16 | 1 | 1 | 1 | –1 | –1 | 1 | –1 | –1 |

For example, the value of $p_{0,n}$ shown in Table 17 and the value of $p_{1,n}$ shown in Table 18 correspond to a same sequence number. For example, if a sequence number corresponding to the value of $p_{0,n}$ is 1, a sequence number corresponding to the value of $p_{1,n}$ is also 1. For another example, if a sequence number corresponding to the value of $p_{0,n}$ is 16, a sequence number corresponding to the value of $p_{1,n}$ is also 16.

It may be understood that Table 17 and Table 18 shown in this embodiment of this application are merely examples. In specific implementation, the values of $p_{0,n}$ and $p_{1,n}$ may alternatively be represented in other forms. This is not limited in this embodiment of this application.

It may be understood that, in addition to meeting the conditions shown in Example 1, the sequence provided in this embodiment of this application further meets any one or more of the following conditions:

the sequence $p_{0,0}G_e^i, p_{0,1}G_e^i, p_{0,2}G_f^i, p_{0,3}G_f^i$ and the sequence $p_{0,4}G_e^i, p_{0,5}G_e^i, p_{0,6}G_f^i, p_{0,7}G_f^i$ constitute a Golay complementary pair;

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair;

the sequence $p_{0,0}G_e^j, p_{0,1}G_e^j, p_{0,2}G_f^j, p_{0,3}G_f^j$ and the sequence $p_{0,4}G_e^j, p_{0,5}G_e^j, p_{0,6}G_f^j, p_{0,7}G_f^j$ constitute a Golay complementary pair; and

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair.

In other words, $(G_u^k, G_v^k), k = 1, 2, \cdots, 8$ constitute a Golay complementary pair. For example, Gu and Gv in CE1 constitute a Golay complementary pair, and Gu and Gv in CE2 also constitute a Golay complementary pair. Examples are not enumerated herein.

A sequence number 16 in Table 17 and Table 18 is used as an example. The sequence shown in this embodiment of this application may be shown in FIG. 7a. CE1={ $Ga^2$, $-Ga^1$, $-Gb^1$, $-Gb^1$, $-Ga^1$, $-Ga^1$, $Gb^1$, $-Gb^1$}, CE2={$Ga^2$, $-Ga^2$, $-Gb^2$, $-Gb^2$, $-Ga^2$, $-Ga^2$, $Gb^2$, $-Gb^2$}, CE3={ $Ga^1$, $Ga^1$, $Gb^1$, $-Gb^1$, $-Ga^1$, $Ga^1$, $-Gb^1$, $-Gb^1$}, CE4={$Ga^2$, $Ga^2$, $Gb^2$, $-Gb^2$, $-Ga^2$, $Ga^2$, $-Gb^2$, $-Gb^2$}, CE5={$-Ga^1$, $-Ga^1$, $Gb^1$, $-Gb^1$, $Ga^1$, $-Ga^1$, $-Gb^1$, $-Gb^1$}, CE6={$-Ga^2$, $-Ga^2$, $Gb^2$, $-Gb^2$, $Ga^2$, $-Ga^2$, $-Gb^2$, $-Gb^2$}, CE7={$-Ga^1$, $Ga^1$, $-Gb^1$, $-Gb^1$, $Ga^1$, $Ga^1$, $Gb^1$, $-Gb^1$}, and CE8={$-Ga^2$, $Ga^2$, $-Gb^2$, $-Gb^2$, $Ga^2$, $Ga^2$, $Gb^2$, $-Gb^2$}.

For example, based on a sequence shown in FIG. 7a that does not include a cyclic prefix and/or a cyclic suffix, a sequence adding the cyclic prefix and the cyclic suffix may be shown in FIG. 7b. CE1={$-Gb^1$, $Ga^1$, $-Ga^1$, $-Gb^1$, $-Gb^1$, $-Ga^1$, $-Ga^1$, $Gb^1$, $-Gb^1$, $Ga^1$}, CE2={$-Gb^2$, $Ga^2$, $-Ga^2$, $-Gb^2$, $-Gb^2$, $-Ga^2$, $-Ga^2$, $Gb^2$, $-Gb^2$, $Ga^2$}, CE3={$-Gb^1$, $Ga^1$, $Ga^1$, $Gb^1$, $-Gb^1$, $-Ga^1$, $Ga^1$, $-Gb^1$, $-Gb^1$, $Ga^1$}, CE4={$-Gb^2$, $Ga^2$, $Ga^2$, $Gb^2$, $-Gb^2$, $-Ga^2$, $Ga^2$, $-Gb^2$, $-Gb^2$, $Ga^2$}, CE5={$-Gb^1$, $-Ga^1$, $-Ga^1$, $Gb^1$, $-Gb^1$, $Ga^1$, $-Ga^1$, $-Gb^1$, $-Gb^1$, $-Ga^1$}, CE6={$-Gb^2$, $-Ga^2$, $-Ga^2$, $Gb^2$, $-Gb^2$, $Ga^2$, $-Ga^2$, $-Gb^2$, $-Gb^2$, $-Ga^2$}, CE7={$-Gb^1$, $-Ga^1$, $Ga^1$, $-Gb^1$, $-Gb^1$, $Ga^1$, $Ga^1$, $Gb^1$, $-Gb^1$, $-Ga^1$}, and CE8={$-Gb^2$, $-Ga^2$, $Ga^2$, $-Gb^2$, $-Gb^2$, $Ga^2$, $Ga^2$, $Gb^2$, $-Gb^2$, $-Ga^2$}.

N=128 is used as an example, and an example in which each of CE1 and CE2 include a cyclic suffix is used.

$$\mathrm{CE1} = \left(Gu^1_{512\times N_{CB}}(q) + Gv^1_{512\times N_{CB}}(q - 512 \times N_{CB}) + Ga^1_{128\times N_{CB}}(q - 1024 \times N_{CB})\right), \text{ and } q = 0, 1, \ldots, 1152 \times N_{CB} - 1,$$

where

$$Gu^1_{512\times N_{CB}} = \left[Ga^1_{128\times N_{CB}} - Ga^1_{128\times N_{CB}} - Gb^1_{128\times N_{CB}} - Gb^1_{128\times N_{CB}}\right],$$

and

$$Gv^1_{512\times N_{CB}} = \left[-Ga^1_{128\times N_{CB}} - Ga^1_{128\times N_{CB}}\ Gb^1_{128\times N_{CB}} - Gb^1_{128\times N_{CB}}\right];$$

and

$$\mathrm{CE2} = \left(Gu^2_{512\times N_{CB}}(q) + Gv^2_{512\times N_{CB}}(q - 512 \times N_{CB}) + Ga^2_{128\times N_{CB}}(q - 1024 \times N_{CB})\right), \text{ and } q = 0, 1, \ldots, 1152 \times N_{CB} - 1,$$

where

$$Gu^2_{512\times N_{CB}} = \left[Ga^2_{128\times N_{CB}} - Ga^2_{128\times N_{CB}} - Gb^2_{128\times N_{CB}} - Gb^2_{128\times N_{CB}}\right],$$

and

$$Gv^2_{512\times N_{CB}} = \left[-Ga^2_{128\times N_{CB}} - Ga^2_{128\times N_{CB}} Gb^2_{128\times N_{CB}} - Gb^2_{128\times N_{CB}}\right].$$

and

It may be understood that for descriptions of CE 1 and CE 2, refer to Example 1 and Example 2, and details are not described herein again. For expression forms of CE3 to CE8, refer to CE1 and CE2, and details are not enumerated herein.

It may be understood the sequence may not include the cyclic prefix, or may not include the cyclic suffix. Examples are not enumerated in this embodiment of this application. It may be understood that for a relationship between the sequence shown in FIG. 7a and the sequence shown in FIG. 7b, refer to the foregoing descriptions, and details are not described herein again.

As shown in FIG. 7a and/or FIG. 7b, CE2 and CE1 are constructed in a same manner, and CE4 and CE3 are constructed in a same manner as long as 1 are con is replaced with manner. CE5 to CE8 are obtained by cyclically shifting CE1 to CE4 leftwards by 512 bits. Every two sequences in CE1 to CE4 may have a zero cross correlation characteristic. CE5 to CE8 are obtained by periodically cyclically shifting CE1 to CE4, and therefore also have the zero cross correlation characteristic. In addition, ng CE1 tc constitute a Golay complementary pair (Golay complementary pair, GCP).

Based on a construction feature of the Golay complementary sequence in the sequences shown in this embodiment of this application, a construction manner of the sequence shown in this embodiment of this application may also be referred to as an AABB-type construction manner in which Gu and Gv constitute a complementary pair. Compared with Example 1 shown above, in Example 3 shown in this embodiment of this application, because Gu and Gv also constitute the Golay complementary pair, there are more cases in which cross correlation energy between two sequences in CE1 and CE8 is zero in the reference range. The sequence provided in this embodiment of this application has better flexibility. For example, CE1 to CE4 have a local ZCC characteristic, and CE1, CE2, CE5, and CE6 also have the local ZCC characteristic. For example, six sequences are sent in six directions, where CE1 and CE2 are in the middle, CE3 and CE4 are on the left, and CE5 and CE6 are on the right. Due to the local ZCC characteristic of CE1 to CE4, mutual impact on the left is small. Due to the local ZCC characteristic of CE1, CE2, CE5, and CE6, mutual impact on the right is also small.

It may be understood that for specific examples of the sequence, refer to Example 1 and Example 2, and examples are not enumerated herein. It should be noted that $(e,f)\in\{(a,b)\}$ and $(e,f)\in\{(c,d)\}$ are used as examples for description above, and this embodiment of this application is also applicable to $(e,f)\in\{(b,a)\}$ and/or $(e,f)\in\{(d,c)\}$.

For example, Table 17 and Table 18 shown in this embodiment of this application may be obtained by using the method shown in Example 1. For example, on the basis shown in Example 1, searching for a parameter $p_0=(p_{0,k})_{k=0}^{7}$ that enables $(G_u, G_v)$ to constitute a Golay complementary pair is performed, all $p_0$ that meet the condition are denoted as I, and then $p_0=(p_{0,k})_{k=0}^{7}$ and $p_1=(p_{1,k})_{k=0}^{7}$ are selected from I to obtain each symbol sequence.

For example, when $(e,f) = (a,b)$, $i = 1$, cross correlation energy between any two sequences in the reference range such as the region from -127 to 127 may be shown in Table 19. Alternatively, Table 19 may also be referred to as a peak cross correlation value of the sequence in the region from -127 to +127. It may be understood that cross correlation energy values shown in this embodiment of this application are all illustrated by using the sequence number 16 shown in Table 17 and Table 18, and should not be construed as limitations on this embodiment of this application.

**Table 19**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 0 | 0 | 152 | 168 |
| Second sequence | 0 | 1024 | 0 | 0 | 0 | 0 | 168 | 152 |
| Third sequence | 0 | 0 | 1024 | 0 | 152 | 168 | 0 | 0 |
| Fourth sequence | 0 | 0 | 0 | 1024 | 168 | 152 | 0 | 0 |
| Fifth sequence | 0 | 0 | 152 | 168 | 1024 | 0 | 0 | 0 |
| Sixth sequence | 0 | 0 | 168 | 152 | 0 | 1024 | 0 | 0 |
| Seventh sequence | 152 | 168 | 0 | 0 | 0 | 0 | 1024 | 0 |
| Eighth sequence | 168 | 152 | 0 | 0 | 0 | 0 | 0 | 1024 |

For example, when (*e, f*)= (*a*,*b*), *i* = 3 (or i=5), cross correlation energy between any two sequences in the reference range such as the region from -127 to 127 may be shown in Table 20.

**Table 20**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 0 | 0 | 136 | 160 |
| Second sequence | 0 | 1024 | 0 | 0 | 0 | 0 | 160 | 136 |
| Third sequence | 0 | 0 | 1024 | 0 | 136 | 160 | 0 | 0 |
| Fourth sequence | 0 | 0 | 0 | 1024 | 160 | 136 | 0 | 0 |
| Fifth sequence | 0 | 0 | 136 | 160 | 1024 | 0 | 0 | 0 |
| Sixth sequence | 0 | 0 | 160 | 136 | 0 | 1024 | 0 | 0 |
| Seventh sequence | 136 | 160 | 0 | 0 | 0 | 0 | 1024 | 0 |
| Eighth sequence | 160 | 136 | 0 | 0 | 0 | 0 | 0 | 1024 |

For example, when $(e,f) = (a,b)$, $i = 7$, cross correlation energy between any two sequences in the reference range such as the region from -127 to 127 may be shown in Table 21.

**Table 21**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 0 | 0 | 0 | 0 | 120 | 160 |
| Second sequence | 0 | 1024 | 0 | 0 | 0 | 0 | 160 | 120 |
| Third sequence | 0 | 0 | 1024 | 0 | 120 | 160 | 0 | 0 |
| Fourth sequence | 0 | 0 | 0 | 1024 | 160 | 120 | 0 | 0 |
| Fifth sequence | 0 | 0 | 120 | 160 | 1024 | 0 | 0 | 0 |
| Sixth sequence | 0 | 0 | 160 | 120 | 0 | 1024 | 0 | 0 |
| Seventh sequence | 120 | 160 | 0 | 0 | 0 | 0 | 1024 | 0 |
| Eighth sequence | 160 | 120 | 0 | 0 | 0 | 0 | 0 | 1024 |

Based on the sequences shown in this embodiment of this application, a quantity of cross correlation energy values 0 between two sequences can be further reduced.

Example 4:

CE1 to CE4 may meet the following conditions, as shown in the following formula (27):

$$\begin{aligned}
\mathrm{CE1} &= (p_{0,0}G_a^i, p_{0,1}G_b^i, p_{0,2}G_a^i, p_{0,3}G_b^i, p_{0,4}G_a^i, p_{0,5}G_b^i, p_{0,6}G_a^i, p_{0,7}G_b^i) \\
\mathrm{CE2} &= (p_{0,0}G_a^j, p_{0,1}G_b^j, p_{0,2}G_a^j, p_{0,3}G_b^j, p_{0,4}G_a^j, p_{0,5}G_b^j, p_{0,6}G_a^j, p_{0,7}G_b^j) \\
\mathrm{CE3} &= (p_{1,0}G_a^i, p_{1,1}G_b^i, p_{1,2}G_a^i, p_{1,3}G_b^i, p_{1,4}G_a^i, p_{1,5}G_b^i, p_{1,6}G_a^i, p_{1,7}G_b^i) \\
\mathrm{CE4} &= (p_{1,0}G_a^j, p_{1,1}G_b^j, p_{1,2}G_a^j, p_{1,3}G_b^j, p_{1,4}G_a^j, p_{1,5}G_b^j, p_{1,6}G_a^j, p_{1,7}G_b^j)
\end{aligned} \quad (27).$$

A value of $P_{0,n}$ is +1 or -1, a value of $P_{1,n}$ is +1 or -1, a value of i is one of 1, 3, 5, or 7, and values of e and f are a and b, or c and d, that is, (e, f) $\in\{(a,b),(c,d)\}$. It may be understood that for descriptions of related parameters shown in the formula (27), refer to the foregoing descriptions, and details are not described herein again. The foregoing formula (9) and formula (10) are also applicable to this embodiment of this application, and details are not described herein again.

In a possible implementation, CE5 to CE8 may meet the following condition, as shown in the following formula (28):

$$\begin{aligned}
\mathrm{CE5} &= \mathrm{circshift}(\mathrm{CE1}, 512) \\
\mathrm{CE6} &= \mathrm{circshift}(\mathrm{CE2}, 512) \\
\mathrm{CE7} &= \mathrm{circshift}(\mathrm{CE3}, 512) \\
\mathrm{CE8} &= \mathrm{circshift}(\mathrm{CE4}, 512)
\end{aligned} \quad (28),$$

where

circshift(-) represents a left periodic cyclic shift.

According to the method provided in this embodiment of this application, as shown in the formula (27) and the formula (28), $G_u^i$ and $G_v^i$ also constitute a Golay complementary pair. For example, Gu and Gv meet the following conditions respectively, as shown in the following formula (29):

$$\begin{aligned}
G_u^i &= \left(\mathrm{CEi}(0), \mathrm{CEi}(1), \cdots, \mathrm{CEi}(511)\right) \\
G_v^i &= \left(\mathrm{CEi}(512), \mathrm{CEi}(513), \cdots, \mathrm{CEi}(1023)\right)
\end{aligned} \quad (29).$$

It may be understood that, in addition to meeting the conditions shown in Example 2, the sequence provided in this embodiment of this application further meets any one or more of the following conditions:

the sequence $p_{0,0}G_e^i, p_{0,1}G_f^i, p_{0,2}G_e^i, p_{0,3}G_f^i$ and the sequence $p_{0,4}G_e^i, p_{0,5}G_f^i, p_{0,6}G_e^i, p_{0,7}G_f^i$ constitute a Golay complementary pair;

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair;

the sequence $p_{0,0}G_e^j, p_{0,1}G_f^j, p_{0,2}G_e^j, p_{0,3}G_f^j$ and the sequence $p_{0,4}G_e^j, p_{0,5}G_f^j, p_{0,6}G_e^j, p_{0,7}G_f^j$ constitute a Golay complementary pair; and

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair.

In other words, $(G_u^k, G_v^k), k = 1,2,\cdots,8$ constitute a Golay complementary pair. For example, Gu and Gv in CE1 constitute a Golay complementary pair, and Gu and Gv in CE2 also constitute a Golay complementary pair. Examples are not enumerated herein.

A sequence number 1 in Table 22 and Table 23 is used as an example. The sequence shown in this embodiment of this application may be shown in FIG. 8a. CE1={ $Ga^1$, $-Gb^1$, $Ga^1$, $Gb^1$, $-Ga^1$, $Gb^1$, $Ga^1$, $Gb^1$}, CE2={$Ga^2$, $-Gb^2$, $Ga^2$, $Gb^2$, $-Ga^2$, $Gb^2$, $Ga^2$, $Gb^2$}, CE3={$-Ga^1$, $Gb^1$, $-Ga^1$, $-Gb^1$, $-Ga^1$, $Gb^1$, $Ga^1$, $Gb^1$}, CE4={$-Ga^2$, $Gb^2$, $-Ga^2$, $-Gb^2$, $-Ga^2$, $Gb^2$, $Ga^2$, $Gb^2$}, CE5={$-Ga^1$, $Gb^1$, $Ga^1$, $Gb^1$, $Ga^1$, $-Gb^1$, $Ga^1$, $Gb^1$}, CE6={$-Ga^2$, $Gb^2$, $Ga^2$, $Gb^2$, $Ga^2$, $-Gb^2$, $Ga^2$, $Gb^2$}, CE7={$-Ga^1$, $Gb^1$, $Ga^1$, $Gb^1$,$-Ga^1$, $Gb^1$, $-Ga^1$, $-Gb^1$}, andCE8={$-Ga^2$, $Gb^2$, $Ga^2$, $Gb^2$, $-Ga^2$, $Gb^2$, $-Ga^2$, $-Gb^2$}.

For example, based on a sequence shown in FIG. 8a that does not include a cyclic prefix and/or a cyclic suffix, a sequence adding the cyclic prefix and the cyclic suffix may be shown in FIG. 8b. CE1={$Gb^1$, $Ga^1$, $-Gb^1$, $Ga^1$, $Gb^1$, $-Ga^1$, $Gb^1$, $Ga^1$, $Gb^1$, $Ga^1$}, CE2={ $Gb^2$, $Ga^2$, $-Gb^2$, $Ga^2$, $Gb^2$, $-Ga^2$, $Gb^2$, $Ga^2$, $Gb^2$, $Ga^2$}, CE3={$Gb^1$, $-Ga^1$, $Gb^1$, $-Ga^1$, $-Gb^1$, $-Ga^1$, $Gb^1$, $Ga^1$, $Gb^1$, $-Ga^1$}, CE4={ $Gb^2$, $-Ga^2$, $Gb^2$, $-Ga^2$, $-Gb^2$, $-Ga^2$, $Gb^2$, $Ga^2$, $Gb^2$, $-Ga^2$}, CE5={ $Gb^1$, $-Ga^1$, $Gb^1$, $Ga^1$, $Gb^1$, $Ga^1$, $-Gb^1$, $Ga^1$, $Gb^1$, $-Ga^1$}, CE6={$Gb^2$, $-Ga^2$, $Gb^2$, $Ga^2$, $Gb^2$, $Ga^2$, $-Gb^2$, $Ga^2$, $Gb^2$, $-Ga^2$}, CE7={$Gb^1$, $-Ga^1$, $Gb^1$, $Ga^1$, $Gb^1$, $-Ga^1$, $Gb^1$, $-Ga^1$, $-Gb^1$, $-Ga^1$}, and CE8={$-Gb^2$, $-Ga^2$, $Gb^2$, $Ga^2$, $Gb^2$, $-Ga^2$, $Gb^2$, $-Ga^2$, $-Gb^2$, $-Ga^2$}.

It may be understood the sequence may not include the cyclic prefix, or may not include the cyclic suffix. Examples are not enumerated in this embodiment of this application. It may be understood that for a relationship between the sequence shown in FIG. 8a and the sequence shown in FIG. 8b, refer to the foregoing descriptions, and details are not described herein again. It may be understood that for other expression forms of CE1 to CE8 shown in Example 4, refer to Example 1 to Example 3, and details are not enumerated herein.

As shown in FIG. 8a and/or FIG. 8b, CE2 and CE1 are constructed in a same manner, and CE4 and CE3 are constructed in a same manner as long as $(G_a^i, G_b^i)$ is replaced with $(G_a^j, G_b^j)$. CE5 to CE8 are obtained by cyclically shifting CE1 to CE4 leftwards by 512 bits. Every two sequences in CE1 to CE4 may have a zero cross correlation characteristic. CE5 to CE8 are obtained by periodically cyclically shifting CE1 to CE4, and therefore also have the zero cross correlation characteristic. In addition, $(G_u, G_v)$ constitute a Golay complementary pair (Golay complementary pair, GCP).

Based on a construction feature of the Golay complementary sequence in the sequences shown in this embodiment of this application, a construction manner of the sequence shown in this embodiment of this application may also be referred to as an ABAB-type construction manner in which Gu and Gv constitute a complementary pair. Compared with Example 2 shown above, in Example 4 shown in this embodiment of this application, because Gu and Gv also constitute the Golay complementary pair, there are more cases in which cross correlation energy between two sequences in CE1 and CE8 is zero in the reference range. The sequence provided in this embodiment of this application has better flexibility. For example, CE1 to CE4 have a local ZCC characteristic, and CE1, CE2, CE5, and CE6 also have the local ZCC characteristic.

For example, Table 22 and Table 23 shown in this embodiment of this application may be obtained by using the method shown in Example 2. For example, on the basis shown in Example 2, searching for a parameter $p_0 = (p_{0,k})_{k=0}^{7}$ that enables $(G_u, G_v)$ to constitute a Golay complementary pair is performed, all $p_0$ that meet the condition are denoted as I, and then $p_0 = (p_{0,k})_{k=0}^{7}$ and $p_1 = (p_{1,k})_{k=0}^{7}$ are selected from I to obtain each symbol sequence.

In a possible implementation, the value of $p_{0,n}$ may be shown in Table 22, and the value of $p_{1,n}$ may be shown in Table 23.

**Table 22**

| $p_{0,n}$ / Sequence number | n=0 | n=1 | n=2 | n=3 | n=4 | n=5 | n=6 | n=7 |
|---|---|---|---|---|---|---|---|---|
| 1 | 1 | –1 | 1 | 1 | –1 | 1 | 1 | 1 |
| 2 | 1 | –1 | 1 | 1 | –1 | 1 | 1 | 1 |
| 3 | 1 | –1 | 1 | 1 | –1 | 1 | 1 | 1 |
| 4 | 1 | –1 | 1 | 1 | –1 | 1 | 1 | 1 |
| 5 | 1 | –1 | 1 | 1 | –1 | 1 | 1 | 1 |
| 6 | 1 | –1 | 1 | 1 | –1 | 1 | 1 | 1 |
| 7 | 1 | –1 | 1 | 1 | –1 | 1 | 1 | 1 |
| 8 | 1 | –1 | 1 | 1 | –1 | 1 | 1 | 1 |
| 9 | –1 | 1 | –1 | –1 | –1 | 1 | 1 | 1 |
| 10 | –1 | 1 | –1 | –1 | –1 | 1 | 1 | 1 |
| 11 | –1 | 1 | –1 | –1 | –1 | 1 | 1 | 1 |
| 12 | –1 | 1 | –1 | –1 | –1 | 1 | 1 | 1 |
| 13 | –1 | 1 | –1 | –1 | –1 | 1 | 1 | 1 |
| 14 | –1 | 1 | –1 | –1 | –1 | 1 | 1 | 1 |
| 15 | –1 | 1 | –1 | –1 | –1 | 1 | 1 | 1 |
| 16 | –1 | 1 | 1 | 1 | 1 | –1 | 1 | 1 |

| $p_{0,n}$ / Sequence number | n=0 | n=1 | n=2 | n=3 | n=4 | n=5 | n=6 | n=7 |
|---|---|---|---|---|---|---|---|---|
| 17 | –1 | 1 | 1 | 1 | 1 | –1 | 1 | 1 |
| 18 | –1 | 1 | 1 | 1 | 1 | –1 | 1 | 1 |
| 19 | –1 | 1 | 1 | 1 | 1 | –1 | 1 | 1 |
| 20 | –1 | 1 | 1 | 1 | 1 | –1 | 1 | 1 |
| 21 | –1 | 1 | 1 | 1 | 1 | –1 | 1 | 1 |
| 22 | –1 | 1 | 1 | 1 | 1 | –1 | 1 | 1 |
| 23 | 1 | –1 | –1 | –1 | 1 | –1 | 1 | 1 |
| 24 | 1 | –1 | –1 | –1 | 1 | –1 | 1 | 1 |
| 25 | 1 | –1 | –1 | –1 | 1 | –1 | 1 | 1 |
| 26 | 1 | –1 | –1 | –1 | 1 | –1 | 1 | 1 |
| 27 | 1 | –1 | –1 | –1 | 1 | –1 | 1 | 1 |
| 28 | 1 | –1 | –1 | –1 | 1 | –1 | 1 | 1 |
| 29 | –1 | –1 | –1 | 1 | 1 | 1 | –1 | 1 |
| 30 | –1 | –1 | –1 | 1 | 1 | 1 | –1 | 1 |
| 31 | –1 | –1 | –1 | 1 | 1 | 1 | –1 | 1 |
| 32 | –1 | –1 | –1 | 1 | 1 | 1 | –1 | 1 |
| 33 | –1 | –1 | –1 | 1 | 1 | 1 | –1 | 1 |
| 34 | –1 | –1 | –1 | 1 | 1 | 1 | –1 | 1 |
| 35 | 1 | 1 | 1 | –1 | 1 | 1 | –1 | 1 |
| 36 | 1 | 1 | 1 | –1 | 1 | 1 | –1 | 1 |
| 37 | 1 | 1 | 1 | –1 | 1 | 1 | –1 | 1 |
| 38 | 1 | 1 | 1 | –1 | 1 | 1 | –1 | 1 |
| 39 | 1 | 1 | 1 | –1 | 1 | 1 | –1 | 1 |
| 40 | 1 | 1 | –1 | 1 | –1 | –1 | –1 | 1 |
| 41 | 1 | 1 | –1 | 1 | –1 | –1 | –1 | 1 |
| 42 | 1 | 1 | –1 | 1 | –1 | –1 | –1 | 1 |
| 43 | 1 | 1 | –1 | 1 | –1 | –1 | –1 | 1 |
| 44 | 1 | 1 | –1 | 1 | –1 | –1 | –1 | 1 |
| 45 | –1 | –1 | 1 | –1 | –1 | –1 | –1 | 1 |
| 46 | –1 | –1 | 1 | –1 | –1 | –1 | –1 | 1 |
| 47 | –1 | –1 | 1 | –1 | –1 | –1 | –1 | 1 |
| 48 | –1 | –1 | 1 | –1 | –1 | –1 | –1 | 1 |

| $p_{0,n}$ / Sequence number | n=0 | n=1 | n=2 | n=3 | n=4 | n=5 | n=6 | n=7 |
|---|---|---|---|---|---|---|---|---|
| 49 | 1 | 1 | –1 | 1 | 1 | 1 | 1 | –1 |
| 50 | 1 | 1 | –1 | 1 | 1 | 1 | 1 | –1 |
| 51 | 1 | 1 | –1 | 1 | 1 | 1 | 1 | –1 |
| 52 | 1 | 1 | –1 | 1 | 1 | 1 | 1 | –1 |
| 53 | –1 | –1 | 1 | –1 | 1 | 1 | 1 | –1 |
| 54 | –1 | –1 | 1 | –1 | 1 | 1 | 1 | –1 |
| 55 | –1 | –1 | 1 | –1 | 1 | 1 | 1 | –1 |
| 56 | –1 | –1 | –1 | 1 | –1 | –1 | 1 | –1 |
| 57 | –1 | –1 | –1 | 1 | –1 | –1 | 1 | –1 |
| 58 | –1 | –1 | –1 | 1 | –1 | –1 | 1 | –1 |
| 59 | 1 | 1 | 1 | –1 | –1 | –1 | 1 | –1 |
| 60 | 1 | 1 | 1 | –1 | –1 | –1 | 1 | –1 |
| 61 | –1 | 1 | 1 | 1 | –1 | 1 | –1 | –1 |
| 62 | –1 | 1 | 1 | 1 | –1 | 1 | –1 | –1 |
| 63 | 1 | –1 | –1 | –1 | –1 | 1 | –1 | –1 |
| 64 | 1 | –1 | 1 | 1 | 1 | –1 | –1 | –1 |

**Table 23**

| $p_{1,n}$ / Sequence number | n=0 | n=1 | n=2 | n=3 | n=4 | n=5 | n=6 | n=7 |
|---|---|---|---|---|---|---|---|---|
| 1 | –1 | 1 | –1 | –1 | –1 | 1 | 1 | 1 |
| 2 | 1 | –1 | –1 | –1 | 1 | –1 | 1 | 1 |
| 3 | 1 | 1 | 1 | –1 | 1 | 1 | –1 | 1 |
| 4 | –1 | –1 | 1 | –1 | –1 | –1 | –1 | 1 |
| 5 | 1 | 1 | –1 | 1 | 1 | 1 | 1 | –1 |
| 6 | –1 | –1 | –1 | 1 | –1 | –1 | 1 | –1 |
| 7 | –1 | 1 | 1 | 1 | –1 | 1 | –1 | –1 |
| 8 | 1 | –1 | 1 | 1 | 1 | –1 | –1 | –1 |
| 9 | –1 | 1 | 1 | 1 | 1 | –1 | 1 | 1 |
| 10 | –1 | –1 | –1 | 1 | 1 | 1 | –1 | 1 |

| Sequence number \ $p_{1,n}$ | n=0 | n=1 | n=2 | n=3 | n=4 | n=5 | n=6 | n=7 |
|---|---|---|---|---|---|---|---|---|
| 11 | 1 | 1 | –1 | 1 | –1 | –1 | –1 | 1 |
| 12 | –1 | –1 | 1 | –1 | 1 | 1 | 1 | –1 |
| 13 | 1 | 1 | 1 | –1 | –1 | –1 | 1 | –1 |
| 14 | 1 | –1 | –1 | –1 | –1 | 1 | –1 | –1 |
| 15 | –1 | 1 | –1 | –1 | 1 | –1 | –1 | –1 |
| 16 | 1 | –1 | –1 | –1 | 1 | –1 | 1 | 1 |
| 17 | 1 | 1 | 1 | –1 | 1 | 1 | –1 | 1 |
| 18 | –1 | –1 | 1 | –1 | –1 | –1 | –1 | 1 |
| 19 | 1 | 1 | –1 | 1 | 1 | 1 | 1 | –1 |
| 20 | –1 | –1 | –1 | 1 | –1 | –1 | 1 | –1 |
| 21 | –1 | 1 | 1 | 1 | –1 | 1 | –1 | –1 |
| 22 | 1 | –1 | 1 | 1 | 1 | –1 | –1 | –1 |
| 23 | –1 | –1 | –1 | 1 | 1 | 1 | –1 | 1 |
| 24 | 1 | 1 | –1 | 1 | –1 | –1 | –1 | 1 |
| 25 | –1 | –1 | 1 | –1 | 1 | 1 | 1 | –1 |
| 26 | 1 | 1 | 1 | –1 | –1 | –1 | 1 | –1 |
| 27 | 1 | –1 | –1 | –1 | –1 | 1 | –1 | –1 |
| 28 | –1 | 1 | –1 | –1 | 1 | –1 | –1 | –1 |
| 29 | 1 | 1 | 1 | –1 | 1 | 1 | –1 | 1 |
| 30 | –1 | –1 | 1 | –1 | –1 | –1 | –1 | 1 |
| 31 | 1 | 1 | –1 | 1 | 1 | 1 | 1 | –1 |
| 32 | –1 | –1 | –1 | 1 | –1 | –1 | 1 | –1 |
| 33 | –1 | 1 | 1 | 1 | –1 | 1 | –1 | –1 |
| 34 | 1 | –1 | 1 | 1 | 1 | –1 | –1 | –1 |
| 35 | 1 | 1 | –1 | 1 | –1 | –1 | –1 | 1 |
| 36 | –1 | –1 | 1 | –1 | 1 | 1 | 1 | –1 |
| 37 | 1 | 1 | 1 | –1 | –1 | –1 | 1 | –1 |
| 38 | 1 | –1 | –1 | –1 | –1 | 1 | –1 | –1 |
| 39 | –1 | 1 | –1 | –1 | 1 | –1 | –1 | –1 |
| 40 | –1 | –1 | 1 | –1 | –1 | –1 | –1 | 1 |
| 41 | 1 | 1 | –1 | 1 | 1 | 1 | 1 | –1 |
| 42 | –1 | –1 | –1 | 1 | –1 | –1 | 1 | –1 |

| $p_{1,n}$ / Sequence number | n=0 | n=1 | n=2 | n=3 | n=4 | n=5 | n=6 | n=7 |
|---|---|---|---|---|---|---|---|---|
| 43 | –1 | 1 | 1 | 1 | –1 | 1 | –1 | –1 |
| 44 | 1 | –1 | 1 | 1 | 1 | –1 | –1 | –1 |
| 45 | –1 | –1 | 1 | –1 | 1 | 1 | 1 | –1 |
| 46 | 1 | 1 | 1 | –1 | –1 | –1 | 1 | –1 |
| 47 | 1 | –1 | –1 | –1 | –1 | 1 | –1 | –1 |
| 48 | –1 | 1 | –1 | –1 | 1 | –1 | –1 | –1 |
| 49 | –1 | –1 | 1 | –1 | 1 | 1 | 1 | –1 |
| 50 | 1 | 1 | 1 | –1 | –1 | –1 | 1 | –1 |
| 51 | 1 | –1 | –1 | –1 | –1 | 1 | –1 | –1 |
| 52 | –1 | 1 | –1 | –1 | 1 | –1 | –1 | –1 |
| 53 | –1 | –1 | –1 | 1 | –1 | –1 | 1 | –1 |
| 54 | –1 | 1 | 1 | 1 | –1 | 1 | –1 | –1 |
| 55 | 1 | –1 | 1 | 1 | 1 | –1 | –1 | –1 |
| 56 | 1 | 1 | 1 | –1 | –1 | –1 | 1 | –1 |
| 57 | 1 | –1 | –1 | –1 | –1 | 1 | –1 | –1 |
| 58 | –1 | 1 | –1 | –1 | 1 | –1 | –1 | –1 |
| 59 | –1 | 1 | 1 | 1 | –1 | 1 | –1 | –1 |
| 60 | 1 | –1 | 1 | 1 | 1 | –1 | –1 | –1 |
| 61 | 1 | –1 | –1 | –1 | –1 | 1 | –1 | –1 |
| 62 | –1 | 1 | –1 | –1 | 1 | –1 | –1 | –1 |
| 63 | 1 | –1 | 1 | 1 | 1 | –1 | –1 | –1 |
| 64 | –1 | 1 | –1 | –1 | 1 | –1 | –1 | –1 |

For example, the value of $p_{0,n}$ shown in Table 22 and the value of $p_{1,n}$ shown in Table 23 correspond to a same sequence number. For example, if a sequence number corresponding to the value of $p_{0,n}$ is 1, a sequence number corresponding to the value of $p_{1,n}$ is also 1. For another example, if a sequence number corresponding to the value of $p_{0,n}$ is 16, a sequence number corresponding to the value of $p_{1,n}$ is also 16. For another example, if a sequence number corresponding to the value of $p_{0,n}$ is 64, a sequence number corresponding to the value of $p_{1,n}$ is also 64.

It may be understood that Table 22 and Table 23 shown in this embodiment of this application are merely examples. In specific implementation, the values of $p_{0,n}$ and $p_{1,n}$ may alternatively be represented in other forms. This is not limited in this embodiment of this application.

It should be noted that $(e,f) \in \{(a,b)\}$ and $(e,f) \in \{(c,d)\}$ are used as examples for description above, and this embodiment of this application is also applicable to $(e,f) \in \{(b,a)\}$ and/or $(e,f) \in \{(d,c)\}$.

For example, when $(e,f)=(a,b)$, i=1, cross correlation energy between any two sequences in the reference range such as the region from -127 to 127 may be shown in Table 24. Alternatively, Table 24 may also be referred to as a peak cross correlation value of the sequence in the region from -127 to +127. It may be understood that cross correlation energy values shown in this embodiment of this application are all illustrated by using the sequence number 1 shown in Table 22 and Table 23, and should not be construed as limitations on this embodiment of this application.

**Table 24**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 92 | 116 | 84 | 112 | 92 | 116 |
| Second sequence | 0 | 1024 | 116 | 92 | 112 | 84 | 116 | 92 |
| Third sequence | 92 | 116 | 1024 | 0 | 92 | 116 | 84 | 112 |
| Fourth sequence | 116 | 92 | 0 | 1024 | 116 | 92 | 112 | 84 |
| Fifth sequence | 84 | 112 | 92 | 116 | 1024 | 0 | 92 | 116 |
| Sixth sequence | 112 | 84 | 116 | 92 | 0 | 1024 | 116 | 92 |
| Seventh sequence | 92 | 116 | 84 | 112 | 92 | 116 | 1024 | 0 |
| Eighth | 116 | 92 | 112 | 84 | 116 | 92 | 0 | 1024 |
| sequence | | | | | | | | |

For example, when (*e*,*f*) = (*a*,*b*), *i* = 3, cross correlation energy between any two sequences in the reference range such as the region from -127 to 127 may be shown in Table 25.

**Table 25**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 108 | 112 | 84 | 124 | 108 | 112 |
| Second sequence | 0 | 1024 | 112 | 108 | 124 | 84 | 112 | 108 |
| Third sequence | 108 | 112 | 1024 | 0 | 108 | 112 | 84 | 124 |
| Fourth sequence | 112 | 108 | 0 | 1024 | 112 | 108 | 124 | 84 |
| Fifth sequence | 84 | 124 | 108 | 112 | 1024 | 0 | 108 | 112 |
| Sixth sequence | 124 | 84 | 112 | 108 | 0 | 1024 | 112 | 108 |
| Seventh sequence | 108 | 112 | 84 | 124 | 108 | 112 | 1024 | 0 |
| Eighth sequence | 112 | 108 | 124 | 84 | 112 | 108 | 0 | 1024 |

For example, when ($e$,$f$) = ($a$,$b$), $i$ = 5, cross correlation energy between any two sequences in the reference range such as the region from -127 to 127 may be shown in Table 26.

**Table 26**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 92 | 144 | 92 | 108 | 92 | 144 |
| Second sequence | 0 | 1024 | 144 | 92 | 108 | 92 | 144 | 92 |
| Third sequence | 92 | 144 | 1024 | 0 | 92 | 144 | 92 | 108 |
| Fourth sequence | 144 | 92 | 0 | 1024 | 144 | 92 | 108 | 92 |
| Fifth sequence | 92 | 108 | 92 | 144 | 1024 | 0 | 92 | 144 |
| Sixth sequence | 108 | 92 | 144 | 92 | 0 | 1024 | 144 | 92 |
| Seventh sequence | 92 | 144 | 92 | 108 | 92 | 144 | 1024 | 0 |
| Eighth sequence | 144 | 92 | 108 | 92 | 144 | 92 | 0 | 1024 |

For example, when *(e,f)* = *(a,b)*, *i* = 7, cross correlation energy between any two sequences in the reference range such as the region from -127 to 127 may be shown in Table 27.

**Table 27**

| | First sequence | Second sequence | Third sequence | Fourth sequence | Fifth sequence | Sixth sequence | Seventh sequence | Eighth sequence |
|---|---|---|---|---|---|---|---|---|
| First sequence | 1024 | 0 | 108 | 116 | 116 | 144 | 108 | 116 |
| Second sequence | 0 | 1024 | 116 | 108 | 144 | 116 | 116 | 108 |
| Third sequence | 108 | 116 | 1024 | 0 | 108 | 116 | 116 | 144 |
| Fourth sequence | 116 | 108 | 0 | 1024 | 116 | 108 | 144 | 116 |
| Fifth sequence | 116 | 144 | 108 | 116 | 1024 | 0 | 108 | 116 |
| Sixth sequence | 144 | 116 | 116 | 108 | 0 | 1024 | 116 | 108 |
| Seventh sequence | 108 | 116 | 116 | 144 | 108 | 116 | 1024 | 0 |
| Eighth sequence | 116 | 108 | 144 | 116 | 116 | 108 | 0 | 1024 |

Based on the sequences shown in this embodiment of this application, a quantity of cross correlation energy values 0 between two sequences can be further reduced.

It may be understood that this embodiment of this application is also applicable to another value of N. For example, for Golay complementary pairs ($Ga_N$, $Gb_N$), ($Gc_N$, $Gd_N$) of other lengths, the value of N is one of 32, 64, 256, 512, or the like, and a construction manner of the sequence shown in this embodiment of this application also has a zero autocorrelation characteristic, and two sequences have the low cross correlation characteristic and/or the zero cross correlation characteristic.

For example, Table 28 shows cross correlation energy between sequences based on the construction manner shown in the formula (8) when (*e,f*)= (*a,b*), *i* = 1 and N=64.

**Table 28**

| | First sequence | Second sequence | Third sequence | Fourth sequence | Fifth sequence | Sixth sequence | Seventh sequence | Eighth sequence |
|---|---|---|---|---|---|---|---|---|
| First sequence | 512 | 0 | 0 | 0 | 28 | 68 | 28 | 68 |
| Second sequence | 0 | 512 | 0 | 0 | 68 | 28 | 68 | 28 |
| Third sequence | 0 | 0 | 512 | 0 | 28 | 68 | 28 | 68 |
| Fourth sequence | 0 | 0 | 0 | 512 | 68 | 28 | 68 | 28 |
| Fifth sequence | 28 | 68 | 28 | 68 | 512 | 0 | 0 | 0 |
| Sixth sequence | 68 | 28 | 68 | 28 | 0 | 512 | 0 | 0 |
| Seventh sequence | 28 | 68 | 28 | 68 | 0 | 0 | 512 | 0 |
| Eighth sequence | 68 | 28 | 68 | 28 | 0 | 0 | 0 | 512 |

For example, Table 29 shows cross correlation energy between sequences based on the construction manner shown in the formula (17) when ($e$,$f$) = ($a$,$b$), $i$ = 5 and N=256.

**Table 29**

| | First sequence | Second sequence | Third sequence | Fourth sequence | Fifth sequence | Sixth sequence | Seventh sequence | Eighth sequence |
|---|---|---|---|---|---|---|---|---|
| First sequence | 2048 | 0 | 0 | 0 | 92 | 144 | 92 | 144 |
| Second sequence | 0 | 2048 | 0 | 0 | 144 | 92 | 144 | 92 |
| Third sequence | 0 | 0 | 2048 | 0 | 92 | 144 | 92 | 144 |
| Fourth sequence | 0 | 0 | 0 | 2048 | 144 | 92 | 144 | 92 |
| Fifth sequence | 92 | 144 | 92 | 144 | 2048 | 0 | 0 | 0 |
| Sixth sequence | 144 | 92 | 144 | 92 | 0 | 2048 | 0 | 0 |
| Seventh sequence | 92 | 144 | 92 | 144 | 0 | 0 | 2048 | 0 |
| Eighth sequence | 144 | 92 | 144 | 92 | 0 | 0 | 0 | 2048 |

For example, Table 30 shows cross correlation energy between sequences based on the construction manner shown in the formula (23) when (*e*,*f*)= (*a*,*b*), *i* = 1 and N=64.

**Table 30**

| | First sequence | Second sequence | Third sequence | Fourth sequence | Fifth sequence | Sixth sequence | Seventh sequence | Eighth sequence |
|---|---|---|---|---|---|---|---|---|
| First sequence | 512 | 0 | 0 | 0 | 0 | 0 | 56 | 136 |
| Second sequence | 0 | 512 | 0 | 0 | 0 | 0 | 136 | 56 |
| Third sequence | 0 | 0 | 512 | 0 | 56 | 136 | 0 | 0 |
| Fourth sequence | 0 | 0 | 0 | 512 | 136 | 56 | 0 | 0 |
| Fifth sequence | 0 | 0 | 56 | 136 | 512 | 0 | 0 | 0 |
| Sixth sequence | 0 | 0 | 136 | 56 | 0 | 512 | 0 | 0 |
| Seventh sequence | 56 | 136 | 0 | 0 | 0 | 0 | 512 | 0 |
| Eighth sequence | 136 | 56 | 0 | 0 | 0 | 0 | 0 | 512 |

For example, Table 31 shows cross correlation energy between sequences based on the construction manner shown in the formula (27) when (*e*,*f*) = *(a,b), i* = 7 and N=256.

**Table 31**

| | First sequence | Second sequence | Third sequence | Fourth sequence | Fifth sequence | Sixth sequence | Seventh sequence | Eighth sequence |
|---|---|---|---|---|---|---|---|---|
| First sequence | 2048 | 0 | 132 | 196 | 164 | 212 | 132 | 196 |
| Second sequence | 0 | 2048 | 196 | 132 | 212 | 164 | 196 | 132 |
| Third sequence | 132 | 196 | 2048 | 0 | 132 | 196 | 164 | 212 |
| Fourth sequence | 196 | 132 | 0 | 2048 | 196 | 132 | 212 | 164 |
| Fifth sequence | 164 | 212 | 132 | 196 | 2048 | 0 | 132 | 196 |
| Sixth sequence | 212 | 164 | 196 | 132 | 0 | 2048 | 196 | 132 |
| Seventh sequence | 132 | 196 | 164 | 212 | 132 | 196 | 2048 | 0 |
| Eighth sequence | 196 | 132 | 212 | 164 | 196 | 132 | 0 | 2048 |

It may be understood that in this embodiment of this application, a first sequence to an eighth sequence obtained through AABB-type construction and a first sequence to an eighth sequence obtained through ABAB-type construction have same cross correlation values. However, the AABB-type construction can realize a sequence design in which the first sequence to the fourth sequence, and the fifth sequence to the eighth sequence CE8 have the ZCC characteristic and have the LCC characteristic on a basis that (*Gu, Gv*) constitute a complementary pair, which cannot implement by the ABAB-type construction. Therefore, the ABAB-type construction can only use the property of Golay companion to realize a sequence design in which the first sequence and the second sequence, the third sequence and the fourth sequence, the fifth sequence and the sixth sequence, the seventh sequence and the eighth sequence have the ZCC characteristic in a correlation region, and the first sequence to the eighth sequence have the LCC characteristic.

Optionally, a manner of constructing a multi-stream local zero correlation/low correlation sequence provided in this embodiment of this application, together with a corresponding matrix P, may be applied to a MIMO channel estimation process of a high-frequency standard (for example, 802.11ay), to improve channel estimation efficiency.

Optionally, a manner of constructing a multi-stream local zero correlation/low correlation sequence provided in this embodiment of this application may be used in a WLAN sensing correlation frame, and is used as a synchronization field to implement synchronization between a plurality of devices and complete bistatic/multi-static sensing.

Optionally, a manner of constructing a multi-stream local zero correlation/low correlation sequence provided in this embodiment of this application may alternatively be used for transmission at a TRN part in a high frequency (for example, 802.11ay SC PHY or 802.11ad). A TRN field is mainly used for beam training in an existing standard. A length is variable, and a designed sequence can be flexibly transmitted.

Optionally, any one of the sequence construction manners provided in this embodiment of this application may be placed in an 802.11ad CEF or a TRN for channel estimation or sensing.

For example, when channel estimation is performed based on the sequence provided in this embodiment of this application, channel estimation efficiency can be effectively improved, and a channel estimation time can be shortened. In addition, interference between different channels can be reduced, and efficiency of channel estimation, WLAN sensing, or time synchronization can be improved.

In addition, a header of the PPDU shown in this embodiment of this application may further include indication information, and the indication information indicates that the sequence in the PPDU is used for any one of sensing, channel estimation, or synchronization. For example, a reserved bit location (namely, the indication information) is used in a DMG or EDMG PHY header to indicate that the PPDU is used for sensing. Therefore, the first field in the PPDU may be a field used for implementing sensing, and the M sequences included in the first field may be sequences used for sensing. For another example, when a length of the indication information is 1 bit, and the indication information indicates sensing, RA=TA in the corresponding PPDU indicates monostatic sensing, and RA~=TA in the corresponding PPDU indicates bistatic sensing.

The following describes communication apparatuses provided in embodiments of this application.

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, division into modules is an example, and is merely logical function division. In actual implementation, another division manner may be used. The following describes in detail the communication apparatuses in embodiments of this application with reference to FIG. 9 to FIG. 11.

FIG. 9 is a schematic diagram of a structure of a communication apparatus according to an embodiment of this application. As shown in FIG. 9, the communication apparatus includes a processing unit 901 and a transceiver unit 902.

In some embodiments of this application, the communication apparatus may be the first communication apparatus shown above, a chip in the first communication apparatus, or the like. In other words, the communication apparatus may be configured to perform the steps or functions performed by the first communication apparatus in the foregoing method embodiments.

The processing unit 901 is configured to generate a PPDU, and the transceiver unit 902 is configured to output the PPDU.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the processing unit 901 may be configured to perform step 501 shown in FIG. 5. The transceiver unit 902 may be configured to perform the sending step in step 502 shown in FIG. 5.

FIG. 9 is reused. In some other embodiments of this application, the communication apparatus may be the second communication apparatus shown above, a chip in the second communication apparatus, or the like. In other words, the communication apparatus may be configured to perform the steps or functions performed by the second communication apparatus in the foregoing method embodiments.

For example, the transceiver unit 902 is configured to input a PPDU, and the processing unit 901 is configured to perform processing based on M sequences carried in the PPDU.

For example, the processing unit 901 may perform channel estimation based on the M sequences, or perform target sensing based on the M sequences, or perform time synchronization based on the M sequences. For a specific function of the M sequences, refer to the foregoing descriptions. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments. Details are not described herein again. For example, the transceiver unit 902 may be further configured to perform the receiving step in step 502 shown in FIG. 5. The processing unit 901 may be further configured to perform step 503 shown in FIG. 5.

In the foregoing embodiments, for descriptions of the PPDU, the M sequences, the first sequence to the eighth sequence, the Golay complementary sequences (for example, including $Ga_{128}^1$ and $Gb_{128}^1$, $Ga_{128}^2$ and $Gb_{128}^2$, $Ga_{128}^3$ and $Gb_{128}^3$, $Ga_{128}^4$ and $Gb_{128}^4$, $Ga_{128}^5$ and $Gb_{128}^5$, $Ga_{128}^6$ and $Gb_{128}^6$, $Ga_{128}^7$ and $Gb_{128}^7$, and $Ga_{128}^8$ and $Gb_{128}^8$), and the sequences (for example, including CE1 to CE8), refer to the descriptions in the foregoing method embodiments, and details are not described herein again.

The foregoing describes the first communication apparatus and the second communication apparatus in embodiments of this application. The following describes possible product forms of the first communication apparatus and the second communication apparatus. It should be understood that any form of product having a function of the first communication apparatus in FIG. 9 or any form of product having a function of the second communication apparatus in FIG. 9 falls within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 9, the processing unit 901 may be one or more processors, and the transceiver unit 902 may be a transceiver, or the transceiver unit 902 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A connection manner between the processor and the transceiver is not limited in this embodiment of this application.

As shown in FIG. 10, a communication apparatus 100 includes one or more processors 1020 and a transceiver 1010.

For example, when the communication apparatus is configured to perform the step, method, or function performed by the first communication apparatus, the processor 1020 is configured to generate a PPDU, and the transceiver 1010 is configured to send the PPDU to a second communication apparatus.

For example, when the communication apparatus is configured to perform the step, method, or function performed by the second communication apparatus, the transceiver 1010 is configured to receive a PPDU from a first communication apparatus, and the processor 1020 is configured to perform processing based on M sequences carried in the PPDU.

In embodiments of this application, for descriptions of the PPDU, the M sequences, the first sequence to the eighth sequence, the Golay complementary sequences (for example, including $Ga_{128}^1$ and $Gb_{128}^1$, $Ga_{128}^2$ and $Gb_{128}^2$, $Ga_{128}^3$ and $Gb_{128}^3$, $Ga_{128}^4$ and $Gb_{128}^4$, $Ga_{128}^5$ and $Gb_{128}^5$, $Ga_{128}^6$ and $Gb_{128}^6$, $Ga_{128}^7$ and $Gb_{128}^7$, and $Ga_{128}^8$ and $Gb_{128}^8$), and the sequences (for example, including CE1 to CE8), refer to the descriptions in the foregoing method embodiments, and details are not described herein again.

It may be understood that for specific descriptions of the processor and the transceiver, refer to the descriptions of the processing unit and the transceiver unit shown in FIG. 9. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data, and the like. The memory 1030 is coupled to the processor 1020. The coupling in embodiments of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

A specific connection medium between the transceiver 1010, the processor 1020, and the memory 1030 is not limited in this embodiment of this application. In this embodiment of this application, in FIG. 10, the memory 1030, the processor 1020, and the transceiver 1010 are connected through a bus 1040. The bus is represented by a thick line in FIG. 10. A connection manner between other components is merely an example for description, and is not limited thereto. The bus may be classified into an address bus, a data bus, a control bus, and the like. For ease of representation, only one thick line is for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the methods disclosed with reference to embodiments of this application may be directly executed and accomplished by a hardware processor, or may be executed and accomplished by using a combination of hardware and software modules in the processor.

In embodiments of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this is not limited thereto. The memory in embodiments of this application may alternatively be a circuit or any other apparatus that can implement a storage function, and is configured to store the program instructions and/or the data.

For example, the processor 1020 is mainly configured to process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive/send a radio frequency signal in a form of an electromagnetic wave. An input/output apparatus, such as a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in the form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

It may be understood that the communication apparatus described in embodiments of this application may further have more components than those in FIG. 10, and the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, a communication apparatus shown in FIG. 11 includes a logic circuit 1101 and an interface 1102. To be specific, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is described by using an example in which the communication apparatus is a chip. The chip includes the logic circuit 1101 and the interface 1102.

In this embodiment of this application, the logic circuit may further be coupled to the interface. A specific connection manner of the logical circuit and the interface is not limited in this embodiment of this application.

For example, when the communication apparatus is configured to perform the method, function, or step performed by the first communication apparatus, the logic circuit 1101 is configured to generate a PPDU, and the interface 1102 is configured to output the PPDU.

For example, when the communication apparatus is configured to perform the method, function, or step performed by the second communication apparatus, the interface 1102 is configured to input a PPDU, and the logic circuit 1101 is configured to perform processing based on M sequences carried in the PPDU.

It may be understood that the communication apparatus shown in this embodiment of this application may implement the method provided in embodiments of this application in a form of hardware or in a form of software. This is not limited in embodiments of this application.

In embodiments of this application, for descriptions of the PPDU, the M sequences, the first sequence to the eighth sequence, the Golay complementary sequences (for example, including $Ga_{128}^{1}$ and $Gb_{128}^{1}$, $Ga_{128}^{2}$ and $Gb_{128}^{2}$, $Ga_{128}^{3}$ and $Gb_{128}^{3}$, $Ga_{128}^{4}$ and $Gb_{128}^{4}$, $Ga_{128}^{5}$ and $Gb_{128}^{5}$, $Ga_{128}^{6}$ and $Gb_{128}^{6}$, $Ga_{128}^{7}$ and $Gb_{128}^{7}$, and $Ga_{128}^{8}$ and $Gb_{128}^{8}$), and the sequences (for example, including CE1 to CE8), refer to the descriptions in the foregoing method embodiments, and details are not described herein again.

For specific implementations of embodiments shown in FIG. 11, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (for example, in FIG. 5).

In addition, this application further provides a computer program. The computer program is used to implement an operation and/or processing performed by the first communication apparatus in the method provided in this application.

This application further provides a computer program. The computer program is used to implement an operation and/or processing performed by the second communication apparatus in the method provided in this application.

This application further provides a computer-readable storage medium. The computer-readable storage medium stores computer code. When the computer code is run on a computer, the computer is enabled to perform an operation and/or processing performed by the first communication apparatus in the method provided in this application.

This application further provides a computer-readable storage medium. The computer-readable storage medium stores computer code. When the computer code is run on a computer, the computer is enabled to perform an operation and/or processing performed by the second communication apparatus in the method provided in this application.

This application further provides a computer program product. The computer program product includes computer code or a computer program. When the computer code or the computer program is run on a computer, an operation and/or processing performed by the first communication apparatus in the method provided in this application is performed.

This application further provides a computer program product. The computer program product includes computer code or a computer program. When the computer code or the computer program is run on a computer, an operation and/or processing performed by the second communication apparatus in the method provided in this application is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the technical effect of the solutions provided in embodiments in this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a readable storage medium, and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal processing method, wherein the method comprises:

    generating a physical layer protocol data unit PPDU, wherein the PPDU comprises a first field, the first field comprises M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and
    sending the PPDU.

2. A signal processing method, wherein the method comprises:

    receiving a physical layer protocol data unit PPDU, wherein the PPDU comprises a first field, the first field comprises M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and
    performing processing based on the M sequences.

3. The method according to claim 1 or 2, wherein that cross correlation energy between one of the M sequences and each of m sequences in the M sequences is less than or equal to a first threshold in a reference range comprises any one or more of the following:

    when m=3 or m=2, the cross correlation energy between one of the M sequences and each of the m sequences in the M sequences is zero in the reference range;
    cross correlation energy between any two of at least four sequences in the M sequences is zero in the reference range; and
    cross correlation energy between any two of at least eight sequences in the M sequences is less than or equal to the first threshold in the reference range.

4. The method according to any one of claims 1 to 3, wherein the M sequences comprise a first sequence, a second sequence, a third sequence, and a fourth sequence; and a partial sequence in the first sequence, a partial sequence in the second sequence, a partial sequence in the third sequence, and a partial sequence in the fourth sequence respectively meet the following conditions:

$$CE1 = (p_{0,0}G_e^i, p_{0,1}G_e^i, p_{0,2}G_f^i, p_{0,3}G_f^i, p_{0,4}G_e^i, p_{0,5}G_e^i, p_{0,6}G_f^i, p_{0,7}G_f^i)$$

$$CE2 = (p_{0,0}G_e^j, p_{0,1}G_e^j, p_{0,2}G_f^j, p_{0,3}G_f^j, p_{0,4}G_e^j, p_{0,5}G_e^j, p_{0,6}G_f^j, p_{0,7}G_f^j)$$
$$CE3 = (p_{1,0}G_e^i, p_{1,1}G_e^i, p_{1,2}G_f^i, p_{1,3}G_f^i, p_{1,4}G_e^i, p_{1,5}G_e^i, p_{1,6}G_f^i, p_{1,7}G_f^i),$$

or

$$CE4 = (p_{1,0}G_e^j, p_{1,1}G_e^j, p_{1,2}G_f^j, p_{1,3}G_f^j, p_{1,4}G_e^j, p_{1,5}G_e^j, p_{1,6}G_f^j, p_{1,7}G_f^j)$$

$$CE1 = (p_{0,0}G_e^i, p_{0,1}G_f^i, p_{0,2}G_e^i, p_{0,3}G_f^i, p_{0,4}G_e^i, p_{0,5}G_f^i, p_{0,6}G_e^i, p_{0,7}G_f^i)$$

$$CE2 = (p_{0,0}G_e^j, p_{0,1}G_f^j, p_{0,2}G_e^j, p_{0,3}G_f^j, p_{0,4}G_e^j, p_{0,5}G_f^j, p_{0,6}G_e^j, p_{0,7}G_f^j)$$
$$CE3 = (p_{1,0}G_e^i, p_{1,1}G_f^i, p_{1,2}G_e^i, p_{1,3}G_f^i, p_{1,4}G_e^i, p_{1,5}G_f^i, p_{1,6}G_e^i, p_{1,7}G_f^i),$$

wherein

$$CE4 = (p_{1,0}G_e^j, p_{1,1}G_f^j, p_{1,2}G_e^j, p_{1,3}G_f^j, p_{1,4}G_e^j, p_{1,5}G_f^j, p_{1,6}G_e^j, p_{1,7}G_f^j)$$

CE1 represents the partial sequence in the first sequence, CE2 represents the partial sequence in the second sequence, CE3 represents the partial sequence in the third sequence, CE4 represents the partial sequence in the fourth sequence, a value of $P_{0,n}$ is +1 or -1, a value of $P_{1,n}$ is +1 or -1, n is an integer greater than or equal to 0 and less than or equal to 7, and $G_e^i$ and $G_f^i$ are Golay complementary sequences; and j=i+1, wherein a value of i is one of 1, 3, 5, or 7.

**5.** The method according to claim 4, wherein values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

-1, -1, 1, 1, 1, 1, 1, 1;
-1, -1, 1, 1, 1, 1, 1, 1;
1, 1, -1, -1, 1, 1, 1, 1;
1, 1, -1, -1, 1, 1, 1, 1;
1, 1, 1, 1, -1, -1, 1, 1;
1, 1, 1, 1, -1, -1, 1, 1;
-1, -1, -1, -1, -1, -1, 1, 1;
-1, -1, -1, -1, -1, -1, 1, 1;
1, -1, -1, 1, -1, 1, -1, 1;
-1, 1, 1, -1, -1, 1, -1, 1;
-1, 1, -1, 1, 1, -1, -1, 1;
1, -1, 1, -1, 1, -1, -1, 1;
-1, 1, -1, 1, -1, 1, 1, -1;
1, -1, 1, -1, -1, 1, 1, -1;
1, -1, -1, 1, 1, -1, 1, -1; and
-1, 1, 1, -1, 1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, 1, -1, 1;
-1, 1, 1, -1, 1, -1, 1,-1;

-1, 1, 1, -1, -1, 1, -1, 1;
1, -1, -1, 1, 1, -1, 1, -1;
-1, 1, -1, 1, 1, -1, -1, 1;
1, -1, 1, -1, -1, 1, 1, -1;
1, -1, 1, -1, 1, -1, -1, 1;
-1, 1, -1, 1, -1, 1, 1, -1;
1, 1, -1, -1, -1, -1, -1, -1;
-1, -1, 1, 1, -1, -1, -1, -1;
-1, -1, -1, -1, 1, 1, -1, -1;
1, 1, 1, 1, 1, 1, -1, -1;
1, 1, 1, 1, 1, 1, -1, -1;
-1, -1, -1, -1, 1, 1, -1, -1;
-1, -1, 1, 1, -1, -1, -1, -1; and
1, 1, -1, -1, -1, -1, -1, -1.

**6.** The method according to claim 4, wherein values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

-1, 1, -1, 1, 1, 1, 1, 1;
-1, 1, -1, 1, 1, 1, 1, 1;
-1, 1, -1, 1, 1, 1, 1, 1;
-1, 1, -1, 1, 1, 1, 1, 1;
1, -1, 1, -1, 1, 1, 1, 1;
1, -1, 1, -1, 1, 1, 1, 1;
1, -1, 1, -1, 1, 1, 1, 1;
1, -1, 1, -1, 1, 1, 1, 1;
1, 1, -1, 1, -1, 1, 1, 1;
1, 1, -1, 1, -1, 1, 1, 1;
1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, 1, -1, -1, 1, 1, 1;
-1, -1, 1, -1, -1, 1, 1, 1;
-1, -1, -1, 1, 1, -1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
1, 1, 1, -1, 1, -1, 1, 1;
1, -1, -1, 1, -1, -1, 1, 1;
1, -1, -1, 1, -1, -1, 1, 1;
1, -1, -1, 1, -1, -1, 1, 1;
-1, 1, 1, -1, -1, -1, 1, 1;
-1, 1, 1, -1, -1, -1, 1, 1;
-1, 1, 1, -1, -1, -1, 1, 1;
-1, 1, 1, 1, 1, 1, -1, 1;
-1, 1, 1, 1, 1, 1, -1, 1;
-1, 1, 1, 1, 1, 1, -1, 1;
1, -1, -1, -1, 1, 1, -1, 1;
1, -1, -1, -1, 1, 1, -1, 1;
1, -1, -1, -1, 1, 1, -1, 1;
1, 1, 1, 1, -1, 1, -1, 1;
1, 1, 1, 1, -1, 1, -1, 1;
1, 1, 1, 1, -1, 1, -1, 1;
-1, -1, -1, -1, -1, 1, -1, 1;
-1, -1, -1, -1, -1, 1,-1, 1;
-1, -1, -1, -1, -1, 1, -1, 1;

-1, -1, 1, 1, 1, -1, -1, 1;
-1, -1, 1, 1, 1, -1, -1, 1;
1, 1, -1, -1, 1, -1, -1, 1;
1, 1, -1, -1, 1, -1, -1, 1;
1, -1, 1, 1, -1, -1, -1, 1;
1, -1, 1, 1, -1, -1, -1, 1;
-1, 1, -1, -1, -1, -1, -1, 1;
-1, 1, -1, -1, -1, -1, -1, 1;
1, -1, 1, 1, 1, 1, 1, -1;
1, -1, 1, 1, 1, 1, 1, -1;
-1, 1, -1, -1, 1, 1, 1, -1;
-1, 1, -1, -1, 1, 1, 1, -1;
-1, -1, 1, 1, -1, 1, 1, -1;
-1, -1, 1, 1, -1, 1, 1, -1;
1, 1, -1, -1, -1, 1, 1, -1;
1, 1, -1, -1, -1, 1, 1, -1;
1, 1, 1, 1, 1, -1, 1, -1;
-1, -1, -1, -1, 1, -1, 1,-1;
-1, 1, 1, 1, -1, -1, 1, -1;
1, -1, -1, -1, -1, -1, 1,-1;
1, -1, -1, 1, 1, 1, -1, -1;
-1, 1, 1, -1, 1, 1, -1, -1;
-1, -1, -1, 1, -1, 1, -1, -1; and
1, 1, 1, -1, -1, 1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, -1, 1, 1;
-1, -1, 1, 1, 1, -1, -1, 1;
1, 1, -1, -1, -1, 1, 1, -1;
-1, 1, 1, -1, 1, 1, -1, -1;
-1, 1, 1, -1, -1, -1, 1, 1;
1, 1, -1, -1, 1, -1, -1, 1;
-1, -1, 1, 1, -1, 1, 1, -1;
1, -1, -1, 1, 1, 1, -1, -1;
-1, -1, -1, 1, 1, -1, 1, 1;
1, -1, 1, 1, -1, -1, -1, 1;
-1, 1, -1, -1, 1, 1, 1, -1;
1, 1, 1, -1, -1, 1, -1, -1;
1, 1, 1, -1, 1, -1, 1, 1;
-1, 1, -1, -1, -1, -1, -1, 1;
1, -1, 1, 1, 1, 1, 1, -1;
-1, -1, -1, 1, -1, 1, -1, -1;
-1, 1, 1, 1, 1, 1, -1, 1;
1, -1, -1, -1, -1, -1, 1,-1;
-1, -1, 1,-1, 1, -1, -1, -1;
1, -1, -1, -1, 1, 1, -1, 1;
-1, 1, 1, 1, -1, -1, 1, -1;
1, 1, -1, 1, 1, -1, -1, -1;
1, 1, 1, 1, -1, 1, -1, 1;
-1, -1, -1, -1, 1, -1, 1,-1;
1, -1, 1, -1, -1, -1, -1, -1;
-1, -1, -1, -1, -1, 1, -1, 1;
1, 1, 1, 1, 1, -1, 1, -1;
-1, 1, -1, 1, -1, -1, -1, -1;
1, -1, 1, 1, -1, -1, -1, 1;
-1, 1, -1, -1, 1, 1, 1, -1;
1, 1, 1, -1, -1, 1, -1, -1;

-1, 1, -1, -1, -1, -1, -1, 1;
1, -1, 1, 1, 1, 1, 1, -1;
-1, -1, -1, 1, -1, 1, -1, -1;
-1, -1, 1, 1, 1, -1, -1, 1;
1, 1, -1, -1, -1, 1, 1, -1;
-1, 1, 1, -1, 1, 1, -1, -1;
1, 1, -1, -1, 1, -1, -1, 1;
-1, -1, 1, 1, -1, 1, 1, -1;
1, -1, -1, 1, 1, 1, -1, -1;
-1, -1, -1, -1, 1, -1, 1, -1;
1, -1, 1, -1, -1, -1, -1, -1;
1, 1, 1, 1, 1, -1, 1, -1;
-1, 1, -1, 1, -1, -1, -1, -1;
1, -1, -1, -1, -1, -1, 1, -1;
-1, -1, 1,-1, 1, -1, -1, -1;
-1, 1, 1, 1, -1, -1, 1, -1;
1, 1, -1, 1, 1, -1, -1, -1;
-1, 1, 1, 1, -1, -1, 1, -1;
1, 1, -1, 1, 1, -1, -1, -1;
1, -1, -1, -1, -1, -1, 1, -1;
-1, -1, 1, -1, 1, -1, -1, -1;
1, 1, 1, 1, 1, -1, 1, -1;
-1, 1, -1, 1, -1, -1, -1, -1;
-1, -1, -1, -1, 1,-1, 1, -1;
1, -1, 1, -1, -1, -1, -1, -1;
1, -1, -1, 1, 1, 1, -1, -1;
-1, 1, 1, -1, 1, 1, -1, -1;
-1, -1, -1, 1, -1, 1, -1, -1;
1, 1, 1, -1, -1, 1, -1, -1;
-1, 1, -1, 1, -1, -1, -1, -1;
1, -1, 1, -1, -1, -1, -1, -1;
1, 1, -1, 1, 1, -1, -1, -1; and
-1, -1, 1, -1, 1, -1, -1, -1.

**7.** The method according to claim 4, wherein values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
-1, 1, 1, 1, 1, 1, -1, 1;
1, -1, -1, -1, 1, 1, -1, 1;
1, -1, 1, 1, -1, -1, -1, 1;
-1, 1, -1, -1, -1, -1, -1, 1;
1, -1, 1, 1, 1, 1, 1, -1;
-1, 1, -1, -1, 1, 1, 1, -1;
-1, 1, 1, 1, -1, -1, 1, -1; and
1, -1, -1, -1, -1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, 1, 1, -1, -1, -1, 1;
-1, 1, -1, -1, 1, 1, 1, -1;

-1, 1, -1, -1, -1, -1, -1, 1;
1, -1, 1, 1, 1, 1, 1, -1;
-1, 1, 1, 1, 1, 1, -1, 1;
1, -1, -1, -1, -1, -1, 1,-1;
1, -1, -1, -1, 1, 1, -1, 1;
-1, 1, 1, 1, -1, -1, 1, -1;
1, 1, 1, -1, -1, 1, -1, -1;
-1, -1, -1, 1, -1, 1, -1, -1;
-1, -1, 1, -1, 1, -1, -1, -1;
1, 1, -1, 1, 1, -1, -1, -1;
1, 1, -1, 1, 1, -1, -1, -1;
-1, -1, 1, -1, 1, -1, -1, -1;
-1, -1, -1, 1, -1, 1, -1, -1; and
1, 1, 1, -1, -1, 1, -1, -1.

**8.** The method according to claim 4, wherein values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, -1, 1, -1, -1, -1, 1;

1, 1, -1, 1, -1, -1, -1, 1;
1, 1, -1, 1, -1, -1, -1, 1;
1, 1, -1, 1, -1, -1, -1, 1;
1, 1, -1, 1, -1, -1, -1, 1;
-1, -1, 1, -1, -1, -1, -1, 1;
-1, -1, 1, -1, -1, -1, -1, 1;
-1, -1, 1, -1, -1, -1, -1, 1;
-1,-1, 1, -1, -1, -1, -1, 1;
1, 1, -1, 1, 1, 1, 1, -1;
1, 1, -1, 1, 1, 1, 1, -1;
1, 1, -1, 1, 1, 1, 1, -1;
1, 1, -1, 1, 1, 1, 1,-1;
-1, -1, 1, -1, 1, 1, 1, -1;
-1, -1, 1, -1, 1, 1, 1, -1;
-1, -1, 1, -1, 1, 1, 1, -1;
-1, -1, -1, 1, -1, -1, 1, -1;
-1, -1, -1, 1, -1, -1, 1, -1;
-1, -1, -1, 1, -1, -1, 1, -1;
1, 1, 1, -1, -1, -1, 1, -1;
1, 1, 1, -1, -1, -1, 1, -1;
-1, 1, 1, 1, -1, 1, -1, -1;
-1, 1, 1, 1, -1, 1, -1, -1;
1, -1, -1, -1, -1, 1, -1, -1; and
1, -1, 1, 1, 1, -1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

-1, 1, -1, -1, -1, 1, 1, 1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, 1, 1, 1, 1, -1, 1, 1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, 1, 1, -1, 1, 1, -1, 1;
-1, -1, 1, -1, -1, -1, -1, 1;
1, 1, -1, 1, 1, 1, 1,-1;

-1, -1, -1, 1, -1, -1, 1, -1;
-1, 1, 1, 1, -1, 1, -1, -1;
1, -1, 1, 1, 1, -1, -1, -1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, 1, -1, -1, -1, -1, 1;
1, 1, -1, 1, 1, 1, 1, -1;
-1, -1, -1, 1, -1, -1, 1, -1;
-1, 1, 1, 1, -1, 1, -1, -1;
1, -1, 1, 1, 1, -1, -1, -1;
-1, -1, 1, -1, 1, 1, 1, -1;
1, 1, 1, -1, -1, -1, 1,-1;
1, -1, -1, -1, -1, 1, -1, -1;
-1, 1, -1, -1, 1, -1, -1, -1;
-1, -1, 1, -1, 1, 1, 1, -1;
1, 1, 1, -1, -1, -1, 1,-1;
1, -1, -1, -1, -1, 1, -1, -1;
-1, 1, -1, -1, 1, -1, -1, -1;
-1, -1, -1, 1, -1, -1, 1,-1;
-1, 1, 1, 1, -1, 1, -1, -1;
1, -1, 1, 1, 1, -1, -1, -1;
1, 1, 1, -1, -1, -1, 1, -1;
1, -1, -1, -1, -1, 1, -1, -1;
-1, 1, -1, -1, 1, -1, -1, -1;
-1, 1, 1, 1, -1, 1, -1, -1;
1, -1, 1, 1, 1, -1, -1, -1;
1, -1, -1, -1, -1, 1, -1, -1;
-1, 1, -1, -1, 1, -1, -1, -1;
1, -1, 1, 1, 1, -1, -1, -1; and
-1, 1, -1, -1, 1, -1, -1, -1.

**9.** The method according to claim 7 or 8, wherein

the sequence $p_{0,0}G_e^i, p_{0,1}G_e^i, p_{0,2}G_f^i, p_{0,3}G_f^i$ and the sequence $p_{0,4}G_e^i, p_{0,5}G_e^i, p_{0,6}G_f^i, p_{0,7}G_f^i$ constitute a Golay complementary pair;

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair;

the sequence $p_{0,0}G_e^j, p_{0,1}G_e^j, p_{0,2}G_f^j, p_{0,3}G_f^j$ and the sequence $p_{0,4}G_e^j, p_{0,5}G_e^j, p_{0,6}G_f^j, p_{0,7}G_f^j$ constitute a Golay complementary pair;

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair;

the sequence $p_{0,0}G_e^i, p_{0,1}G_f^i, p_{0,2}G_e^i, p_{0,3}G_f^i$ and the sequence $p_{0,4}G_e^i, p_{0,5}G_f^i, p_{0,6}G_e^i, p_{0,7}G_f^i$ constitute a Golay complementary pair;

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair;

the sequence $p_{0,0}G_e^j, p_{0,1}G_f^j, p_{0,2}G_e^j, p_{0,3}G_f^j$ and the sequence $p_{0,4}G_e^j, p_{0,5}G_f^j, p_{0,6}G_e^j, p_{0,7}G_f^j$ constitute a Golay complementary pair; and/or

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair.

**10.** The method according to any one of claims 4 to 9, wherein the M sequences further comprise a fifth sequence, a sixth sequence, a seventh sequence, and an eighth sequence; and a partial sequence in the fifth sequence, a partial sequence in the sixth sequence, a partial sequence in the seventh sequence, and a partial sequence in the eighth sequence respectively meet the following conditions:

$$\mathrm{CE5} = \mathrm{circshift}(\mathrm{CE1}, N \cdot r)$$

$$\mathrm{CE6} = \mathrm{circshift}(\mathrm{CE2}, N \cdot r)$$

$$\mathrm{CE7} = \mathrm{circshift}(\mathrm{CE3}, N \cdot r)\text{'}$$

wherein

$$\mathrm{CE8} = \mathrm{circshift}(\mathrm{CE4}, N \cdot r)$$

CE5 represents the partial sequence in the fifth sequence, CE6 represents the partial sequence in the sixth sequence, CE7 represents the partial sequence in the seventh sequence, CE8 represents the partial sequence in the eighth sequence, CE1 represents the partial sequence in the first sequence, CE2 represents the partial sequence in the second sequence, CE3 represents the partial sequence in the third sequence, CE4 represents the partial sequence in the fourth sequence, circshift(-) represents a left cyclic shift, N represents a length of the Golay complementary sequence, and a value of r is one of 1 to 7.

**11.** The method according to any one of claims 1 to 10, wherein M is less than or equal to 8.

**12.** The method according to any one of claims 1 to 11, wherein the M sequences are used for any one or more of channel estimation, target sensing, or synchronization.

**13.** The method according to any one of claims 1 to 12, wherein the PPDU further comprises any one or more of the following fields:
legacy short training field L-STF, legacy long training field L-LTF, legacy header, enhanced directional multi-gigabit-header-A, enhanced directional multi-gigabit short training field, enhanced directional multi-gigabit channel estimation field, enhanced directional multi-gigabit-header-B, short training field STF, and long training field LTF.

**14.** A communication apparatus, wherein the apparatus comprises:

a processing unit, configured to generate a physical layer protocol data unit PPDU, wherein the PPDU comprises a first field, the first field comprises M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and
a transceiver unit, configured to send the PPDU.

**15.** A communication apparatus, wherein the apparatus comprises:

a transceiver unit, configured to receive a physical layer protocol data unit PPDU, wherein the PPDU comprises a first field, the first field comprises M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2; and
a processing unit, configured to perform processing based on the M sequences.

**16.** The apparatus according to claim 14 or 15, wherein that cross correlation energy between one of the M sequences and each of m sequences in the M sequences is less than or equal to a first threshold in a reference range comprises any one or more of the following:

when m=3 or m=2, the cross correlation energy between one of the M sequences and each of the m sequences in the M sequences is zero in the reference range;
cross correlation energy between any two of at least four sequences in the M sequences is zero in the reference range; and
cross correlation energy between any two of at least eight sequences in the M sequences is less than or equal to the first threshold in the reference range.

**17.** The apparatus according to any one of claims 14 to 16, wherein the M sequences comprise a first sequence, a second sequence, a third sequence, and a fourth sequence; and a partial sequence in the first sequence, a partial sequence in the second sequence, a partial sequence in the third sequence, and a partial sequence in the fourth sequence respectively meet the following conditions:

$$\mathrm{CE1} = (p_{0,0}G_e^i, p_{0,1}G_e^i, p_{0,2}G_f^i, p_{0,3}G_f^i, p_{0,4}G_e^i, p_{0,5}G_e^i, p_{0,6}G_f^i, p_{0,7}G_f^i)$$

$$\mathrm{CE2} = (p_{0,0}G_e^j, p_{0,1}G_e^j, p_{0,2}G_f^j, p_{0,3}G_f^j, p_{0,4}G_e^j, p_{0,5}G_e^j, p_{0,6}G_f^j, p_{0,7}G_f^j)$$

$$\mathrm{CE3} = (p_{1,0}G_e^i, p_{1,1}G_e^i, p_{1,2}G_f^i, p_{1,3}G_f^i, p_{1,4}G_e^i, p_{1,5}G_e^i, p_{1,6}G_f^i, p_{1,7}G_f^i),$$

or

$$\mathrm{CE4} = (p_{1,0}G_e^j, p_{1,1}G_e^j, p_{1,2}G_f^j, p_{1,3}G_f^j, p_{1,4}G_e^j, p_{1,5}G_e^j, p_{1,6}G_f^j, p_{1,7}G_f^j)$$

$$\mathrm{CE1} = (p_{0,0}G_e^i, p_{0,1}G_f^i, p_{0,2}G_e^i, p_{0,3}G_f^i, p_{0,4}G_e^i, p_{0,5}G_f^i, p_{0,6}G_e^i, p_{0,7}G_f^i)$$

$$\mathrm{CE2} = (p_{0,0}G_e^j, p_{0,1}G_f^j, p_{0,2}G_e^j, p_{0,3}G_f^j, p_{0,4}G_e^j, p_{0,5}G_f^j, p_{0,6}G_e^j, p_{0,7}G_f^j)$$

$$\mathrm{CE3} = (p_{1,0}G_e^i, p_{1,1}G_f^i, p_{1,2}G_e^i, p_{1,3}G_f^i, p_{1,4}G_e^i, p_{1,5}G_f^i, p_{1,6}G_e^i, p_{1,7}G_f^i),$$

wherein

$$\mathrm{CE4} = (p_{1,0}G_e^j, p_{1,1}G_f^j, p_{1,2}G_e^j, p_{1,3}G_f^j, p_{1,4}G_e^j, p_{1,5}G_f^j, p_{1,6}G_e^j, p_{1,7}G_f^j)$$

CE1 represents the partial sequence in the first sequence, CE2 represents the partial sequence in the second sequence, CE3 represents the partial sequence in the third sequence, CE4 represents the partial sequence in the fourth sequence, a value of $P_{0,n}$ is +1 or -1, a value of $P_{1,n}$ is +1 or -1, n is an integer greater than or equal to 0 and less than or equal to 7, and $G_e^i$ and $G_f^i$ are Golay complementary sequences; and j=i+1, wherein a value of i is one of 1, 3, 5, or 7.

**18.** The apparatus according to claim 17, wherein values of $P_{0,0}$, $P_{0,1}$, $P_{0,2}$, $P_{0,3}$, $P_{0,4}$, $P_{,5}$, $P_{0,6}$, and $P_{0,7}$ are any one of the following groups:

-1, -1, 1, 1, 1, 1, 1, 1;
-1, -1, 1, 1, 1, 1, 1, 1;
1, 1, -1, -1, 1, 1, 1, 1;
1, 1, -1, -1, 1, 1, 1, 1;
1, 1, 1, 1, -1, -1, 1, 1;
1, 1, 1, 1, -1, -1, 1, 1;
-1, -1, -1, -1, -1, -1, 1, 1;
-1, -1, -1, -1, -1, -1, 1, 1;
1, -1, -1, 1, -1, 1, -1, 1;
-1, 1, 1, -1, -1, 1, -1, 1;
-1, 1, -1, 1, 1, -1, -1, 1;
1, -1, 1, -1, 1, -1, -1, 1;
-1, 1, -1, 1, -1, 1, 1,-1;
1, -1, 1, -1, -1, 1, 1,-1;
1, -1, -1, 1, 1, -1, 1, -1; and
-1, 1, 1, -1, 1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, 1, -1, 1;
-1, 1, 1, -1, 1, -1, 1,-1;
-1, 1, 1, -1, -1, 1, -1, 1;
1, -1, -1, 1, 1, -1, 1,-1;
-1, 1, -1, 1, 1, -1, -1, 1;
1, -1, 1, -1, -1, 1, 1,-1;
1, -1, 1, -1, 1, -1, -1, 1;
-1, 1, -1, 1, -1, 1, 1,-1;
1, 1, -1, -1, -1, -1, -1, -1;
-1, -1, 1, 1, -1, -1, -1, -1;
-1, -1, -1, -1, 1, 1, -1, -1;
1, 1, 1, 1, 1, 1, -1, -1;
1, 1, 1, 1, 1, 1, -1, -1;
-1, -1, -1, -1, 1, 1, -1, -1;
-1, -1, 1, 1, -1, -1, -1, -1; and
1, 1, -1, -1, -1, -1, -1, -1.

**19.** The apparatus according to claim 16, wherein values of $P_{0,0}$, $P_{0,1}$, $P_{0,2}$, $P_{0,3}$, $P_{0,4}$, $P_{,5}$, $P_{0,6}$, and $P_{0,7}$ are any one of the following groups:

-1, 1, -1, 1, 1, 1, 1, 1;
-1, 1, -1, 1, 1, 1, 1, 1;
-1, 1, -1, 1, 1, 1, 1, 1;
-1, 1, -1, 1, 1, 1, 1, 1;
1, -1, 1, -1, 1, 1, 1, 1;
1, -1, 1, -1, 1, 1, 1, 1;
1, -1, 1, -1, 1, 1, 1, 1;
1, -1, 1, -1, 1, 1, 1, 1;
1, 1, -1, 1, -1, 1, 1, 1;
1, 1, -1, 1, -1, 1, 1, 1;
1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, 1, -1, -1, 1, 1, 1;
-1, -1, 1, -1, -1, 1, 1, 1;

-1, -1, -1, 1, 1, -1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
1, 1, 1, -1, 1, -1, 1, 1;
1, -1, -1, 1, -1, -1, 1, 1;
1, -1, -1, 1, -1, -1, 1, 1;
1, -1, -1, 1, -1, -1, 1, 1;
-1, 1, 1, -1, -1, -1, 1, 1;
-1, 1, 1, -1, -1, -1, 1, 1;
-1, 1, 1, -1, -1, -1, 1, 1;
-1, 1, 1, 1, 1, 1, -1, 1;
-1, 1, 1, 1, 1, 1, -1, 1;
-1, 1, 1, 1, 1, 1, -1, 1;
1, -1, -1, -1, 1, 1, -1, 1;
1, -1, -1, -1, 1, 1, -1, 1;
1, -1, -1, -1, 1, 1, -1, 1;
1, 1, 1, 1, -1, 1, -1, 1;
1, 1, 1, 1, -1, 1, -1, 1;
1, 1, 1, 1, -1, 1, -1, 1;
-1, -1, -1, -1, -1, 1, -1, 1;
-1, -1, -1, -1, -1, 1, -1, 1;
-1, -1, -1, -1, -1, 1, -1, 1;
-1, -1, 1, 1, 1, -1, -1, 1;
-1, -1, 1, 1, 1, -1, -1, 1;
1, 1, -1, -1, 1, -1, -1, 1;
1, 1, -1, -1, 1, -1, -1, 1;
1, -1, 1, 1, -1, -1, -1, 1;
1,-1, 1, 1, -1, -1, -1, 1;
-1, 1, -1, -1, -1, -1, -1, 1;
-1, 1, -1, -1, -1, -1, -1, 1;
1, -1, 1, 1, 1, 1, 1,-1;
1, -1, 1, 1, 1, 1, 1,-1;
-1, 1, -1, -1, 1, 1, 1, -1;
-1, 1, -1, -1, 1, 1, 1,-1;
-1, -1, 1, 1, -1, 1, 1, -1;
-1, -1, 1, 1, -1, 1, 1, -1;
1, 1, -1, -1, -1, 1, 1, -1;
1, 1, -1, -1, -1, 1, 1, -1;
1, 1, 1, 1, 1, -1, 1, -1;
-1, -1, -1, -1, 1, -1, 1,-1;
-1, 1, 1, 1, -1, -1, 1,-1;
1, -1, -1, -1, -1, -1, 1,-1;
1, -1, -1, 1, 1, 1, -1, -1;
-1, 1, 1, -1, 1, 1, -1, -1;
-1, -1, -1, 1, -1, 1, -1, -1; and
1, 1, 1, -1, -1, 1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, -1, 1, -1, -1, 1, 1;
-1, -1, 1, 1, 1, -1, -1, 1;
1, 1, -1, -1, -1, 1, 1,-1;
-1, 1, 1, -1, 1, 1, -1, -1;
-1, 1, 1, -1, -1, -1, 1, 1;
1, 1, -1, -1, 1, -1, -1, 1;
-1, -1, 1, 1, -1, 1, 1,-1;

1, -1, -1, 1, 1, 1, -1, -1;
-1, -1, -1, 1, 1, -1, 1, 1;
1, -1, 1, 1, -1, -1, -1, 1;
-1, 1, -1, -1, 1, 1, 1,-1;
1, 1, 1, -1, -1, 1, -1, -1;
1, 1, 1, -1, 1, -1, 1, 1;
-1, 1, -1, -1, -1, -1, -1, 1;
1, -1, 1, 1, 1, 1, 1,-1;
-1, -1, -1, 1, -1, 1, -1, -1;
-1, 1, 1, 1, 1, 1, -1, 1;
1, -1, -1, -1, -1, -1, 1,-1;
-1, -1, 1,-1, 1, -1, -1, -1;
1, -1, -1, -1, 1, 1, -1, 1;
-1, 1, 1, 1, -1, -1, 1, -1;
1, 1, -1, 1, 1, -1, -1, -1;
1, 1, 1, 1, -1, 1, -1, 1;
-1, -1, -1, -1, 1, -1, 1, -1;
1, -1, 1, -1, -1, -1, -1, -1;
-1, -1, -1, -1, -1, 1,-1, 1;
1, 1, 1, 1, 1, -1, 1, -1;
-1, 1,-1, 1, -1, -1, -1, -1;
1, -1, 1, 1, -1, -1, -1, 1;
-1, 1, -1, -1, 1, 1, 1, -1;
1, 1, 1, -1, -1, 1, -1, -1;
-1, 1, -1, -1, -1, -1, -1, 1;
1, -1, 1, 1, 1, 1, 1, -1;
-1, -1, -1, 1, -1, 1, -1, -1;
-1, -1, 1, 1, 1, -1, -1, 1;
1, 1, -1, -1, -1, 1, 1, -1;
-1, 1, 1, -1, 1, 1, -1, -1;
1, 1, -1, -1, 1, -1, -1, 1;
-1, -1, 1, 1, -1, 1, 1, -1;
1, -1, -1, 1, 1, 1, -1, -1;
-1, -1, -1, -1, 1,-1, 1, -1;
1, -1, 1, -1, -1, -1, -1, -1;
1, 1, 1, 1, 1, -1, 1, -1;
-1, 1, -1, 1, -1, -1, -1, -1;
1, -1, -1, -1, -1, -1, 1, -1;
-1, -1, 1, -1, 1, -1, -1, -1;
-1, 1, 1, 1, -1, -1, 1, -1;
1, 1, -1, 1, 1, -1, -1, -1;
-1, 1, 1, 1, -1, -1, 1,-1;
1, 1, -1, 1, 1, -1, -1, -1;
1, -1, -1, -1, -1, -1, 1, -1;
-1, -1, 1,-1, 1, -1, -1, -1;
1, 1, 1, 1, 1, -1, 1, -1;
-1, 1, -1, 1, -1, -1, -1, -1;
-1, -1, -1, -1, 1, -1, 1, -1;
1, -1, 1, -1, -1, -1, -1, -1;
1, -1, -1, 1, 1, 1, -1, -1;
-1, 1, 1, -1, 1, 1, -1, -1;
-1, -1, -1, 1, -1, 1, -1, -1;
1, 1, 1, -1, -1, 1, -1, -1;
-1, 1, -1, 1, -1, -1, -1, -1;
1, -1, 1, -1, -1, -1, -1, -1;
1, 1, -1, 1, 1, -1, -1, -1; and
-1, -1, 1, -1, 1, -1, -1, -1.

**20.** The apparatus according to claim 16, wherein values of $P_{0,0}$, $P_{0,1}$, $P_{0,2}$, $P_{0,3}$, $P_{0,4}$, $P_{,5}$, $P_{0,6}$, and $P_{0,7}$ are any one of the following groups:

1, 1, -1, 1, -1, 1, 1, 1;
1, 1, -1, 1, -1, 1, 1, 1;
-1, -1, 1, -1, -1, 1, 1, 1;
-1, -1, 1, -1, -1, 1, 1, 1;
-1, -1, -1, 1, 1, -1, 1, 1;
-1, -1, -1, 1, 1, -1, 1, 1;
1, 1, 1, -1, 1, -1, 1, 1;
1, 1, 1, -1, 1, -1, 1, 1;
-1, 1, 1, 1, 1, 1, -1, 1;
1, -1, -1, -1, 1, 1, -1, 1;
1, -1, 1, 1, -1, -1, -1, 1;
-1, 1, -1, -1, -1, -1, -1, 1;
1, -1, 1, 1, 1, 1, 1, -1;
-1, 1, -1, -1, 1, 1, 1, -1;
-1, 1, 1, 1, -1, -1, 1, -1; and
1, -1, -1, -1, -1, -1, 1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

1, -1, 1, 1, -1, -1, -1, 1;
-1, 1, -1, -1, 1, 1, 1,-1;
-1, 1, -1, -1, -1, -1, -1, 1;
1, -1, 1, 1, 1, 1, 1,-1;
-1, 1, 1, 1, 1, 1, -1, 1;
1, -1, -1, -1, -1, -1, 1,-1;
1, -1, -1, -1, 1, 1, -1, 1;
-1, 1, 1, 1, -1, -1, 1,-1;
1, 1, 1, -1, -1, 1, -1, -1;
-1, -1, -1, 1, -1, 1, -1, -1;
-1, -1, 1, -1, 1, -1, -1, -1;
1, 1, -1, 1, 1, -1, -1, -1;
1, 1, -1, 1, 1, -1, -1, -1;
-1, -1, 1,-1, 1, -1, -1, -1;
-1, -1, -1, 1, -1, 1, -1, -1; and
1, 1, 1, -1, -1, 1, -1, -1.

**21.** The apparatus according to claim 16, wherein values of $P_{0,0}$, $P_{0,1}$, $P_{0,2}$, $P_{0,3}$, $P_{0,4}$, $P_{0,5}$, $P_{0,6}$, and $P_{0,7}$ are any one of the following groups:

1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
1, -1, 1, 1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, -1, -1, -1, 1, 1, 1;
-1, 1, 1, 1, 1, -1, 1, 1;

-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
-1, 1, 1, 1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
1, -1, -1, -1, 1, -1, 1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
-1, -1, -1, 1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, 1, -1, 1, 1, -1, 1;
1, 1, -1, 1, -1, -1, -1, 1;
1, 1, -1, 1, -1, -1, -1, 1;
1, 1, -1, 1, -1, -1, -1, 1;
1, 1, -1, 1, -1, -1, -1, 1;
1, 1, -1, 1, -1, -1, -1, 1;
-1, -1, 1, -1, -1, -1, -1, 1;
-1, -1, 1, -1, -1, -1, -1, 1;
-1, -1, 1, -1, -1, -1, -1, 1;
-1, -1, 1, -1, -1, -1, -1, 1;
1, 1, -1, 1, 1, 1, 1,-1;
1, 1, -1, 1, 1, 1, 1,-1;
1, 1, -1, 1, 1, 1, 1,-1;
1, 1, -1, 1, 1, 1, 1,-1;
-1, -1, 1, -1, 1, 1, 1, -1;
-1, -1, 1, -1, 1, 1, 1, -1;
-1, -1, 1, -1, 1, 1, 1, -1;
-1, -1, -1, 1, -1, -1, 1, -1;
-1, -1, -1, 1, -1, -1, 1, -1;
-1, -1, -1, 1, -1, -1, 1, -1;
1, 1, 1, -1, -1, -1, 1, -1;
1, 1, 1, -1, -1, -1, 1, -1;
-1, 1, 1, 1, -1, 1, -1, -1;
-1, 1, 1, 1, -1, 1, -1, -1;
1, -1, -1, -1, -1, 1, -1, -1; and
1, -1, 1, 1, 1, -1, -1, -1; and/or

values of $P_{1,0}$, $P_{1,1}$, $P_{1,2}$, $P_{1,3}$, $P_{1,4}$, $P_{1,5}$, $P_{1,6}$, and $P_{1,7}$ are the following corresponding groups:

-1, 1, -1, -1, -1, 1, 1, 1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1,-1;
-1, -1, -1, 1, -1, -1, 1, -1;
-1, 1, 1, 1, -1, 1, -1, -1;

1, -1, 1, 1, 1, -1, -1, -1;
-1, 1, 1, 1, 1, -1, 1, 1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, -1, -1, -1, 1, -1, 1, 1;
1, 1, 1, -1, 1, 1, -1, 1;
-1, -1, 1, -1, -1, -1, -1, 1;
1, 1, -1, 1, 1, 1, 1,-1;
-1, -1, -1, 1, -1, -1, 1, -1;
-1, 1, 1, 1, -1, 1, -1, -1;
1, -1, 1, 1, 1, -1, -1, -1;
-1, -1, -1, 1, 1, 1, -1, 1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
1, 1, 1, -1, 1, 1, -1, 1;
-1, -1, 1, -1, -1, -1, -1, 1;
1, 1, -1, 1, 1, 1, 1,-1;
-1, -1, -1, 1, -1, -1, 1, -1;
-1, 1, 1, 1, -1, 1, -1, -1;
1, -1, 1, 1, 1, -1, -1, -1;
1, 1, -1, 1, -1, -1, -1, 1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, 1, -1, -1, -1, -1, 1;
1, 1, -1, 1, 1, 1, 1,-1;
-1, -1, -1, 1, -1, -1, 1, -1;
-1, 1, 1, 1, -1, 1, -1, -1;
1, -1, 1, 1, 1, -1, -1, -1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, 1, -1, 1, 1, 1, -1;
1, 1, 1, -1, -1, -1, 1, -1;
1, -1, -1, -1, -1, 1, -1, -1;
-1, 1, -1, -1, 1, -1, -1, -1;
-1, -1, -1, 1, -1, -1, 1, -1;
-1, 1, 1, 1, -1, 1, -1, -1;
1, -1, 1, 1, 1, -1, -1, -1;
1, 1, 1, -1, -1, -1, 1, -1;
1, -1, -1, -1, -1, 1, -1, -1;
-1, 1, -1, -1, 1, -1, -1, -1;
-1, 1, 1, 1, -1, 1, -1, -1;
1, -1, 1, 1, 1, -1, -1, -1;
1, -1, -1, -1, -1, 1, -1, -1;
-1, 1, -1, -1, 1, -1, -1, -1;
1, -1, 1, 1, 1, -1, -1, -1; and
-1, 1, -1, -1, 1, -1, -1, -1.

**22.** The apparatus according to claim 20 or 21, wherein

the sequence $p_{0,0}G_e^i, p_{0,1}G_e^i, p_{0,2}G_f^i, p_{0,3}G_f^i$ and the sequence $p_{0,4}G_e^i, p_{0,5}G_e^i, p_{0,6}G_f^i, p_{0,7}G_f^i$ constitute a Golay complementary pair;

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair;

the sequence $p_{0,0}G_e^j, p_{0,1}G_e^j, p_{0,2}G_f^j, p_{0,3}G_f^j$ and the sequence $p_{0,4}G_e^j, p_{0,5}G_e^j, p_{0,6}G_f^j, p_{0,7}G_f^j$ constitute a Golay complementary pair;

the sequence $p_{1,0}G_e^i, p_{1,1}G_e^i, p_{1,2}G_f^i, p_{1,3}G_f^i$ and the sequence $p_{1,4}G_e^i, p_{1,5}G_e^i, p_{1,6}G_f^i, p_{1,7}G_f^i$ constitute a Golay complementary pair;

the sequence $p_{0,0}G_e^i, p_{0,1}G_f^i, p_{0,2}G_e^i, p_{0,3}G_f^i$ and the sequence $p_{0,4}G_e^i, p_{0,5}G_f^i, p_{0,6}G_e^i, p_{0,7}G_f^i$ constitute a Golay complementary pair;

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair;

the sequence $p_{0,0}G_e^j, p_{0,1}G_f^j, p_{0,2}G_e^j, p_{0,3}G_f^j$ and the sequence $p_{0,4}G_e^j, p_{0,5}G_f^j, p_{0,6}G_e^j, p_{0,7}G_f^j$ constitute a Golay complementary pair; and/or

the sequence $p_{1,0}G_e^i, p_{1,1}G_f^i, p_{1,2}G_e^i, p_{1,3}G_f^i$ and the sequence $p_{1,4}G_e^i, p_{1,5}G_f^i, p_{1,6}G_e^i, p_{1,7}G_f^i$ constitute a Golay complementary pair.

**23.** The apparatus according to any one of claims 17 to 22, wherein the M sequences further comprise a fifth sequence, a sixth sequence, a seventh sequence, and an eighth sequence; and a partial sequence in the fifth sequence, a partial sequence in the sixth sequence, a partial sequence in the seventh sequence, and a partial sequence in the eighth sequence respectively meet the following conditions:

$$\mathrm{CE5} = \mathrm{circshift}(\mathrm{CE1}, N \cdot r)$$

$$\mathrm{CE6} = \mathrm{circshift}(\mathrm{CE2}, N \cdot r)$$

wherein

$$\mathrm{CE7} = \mathrm{circshift}(\mathrm{CE3}, N \cdot r)$$

$$\mathrm{CE8} = \mathrm{circshift}(\mathrm{CE4}, N \cdot r)$$

, wherein

CE5 represents the partial sequence in the fifth sequence, CE6 represents the partial sequence in the sixth sequence, CE7 represents the partial sequence in the seventh sequence, CE8 represents the partial sequence in the eighth sequence, CE1 represents the partial sequence in the first sequence, CE2 represents the partial sequence in the second sequence, CE3 represents the partial sequence in the third sequence, CE4 represents the partial sequence in the fourth sequence, circshift(-) represents a left cyclic shift, N represents a length of the Golay complementary sequence, and a value of r is one of 1 to 7.

**24.** The apparatus according to any one of claims 14 to 23, wherein M is less than or equal to 8.

**25.** The apparatus according to any one of claims 14 to 24, wherein the M sequences are used for any one or more of channel estimation, target sensing, or synchronization.

**26.** The apparatus according to any one of claims 14 to 25, wherein the PPDU further comprises any one or more of the following fields:
legacy short training field L-STF, legacy long training field L-LTF, legacy header, enhanced directional multi-gigabit-header-A, enhanced directional multi-gigabit short training field, enhanced directional multi-gigabit channel estimation field, enhanced directional multi-gigabit-header-B, short training field STF, and long training field LTF.

**27.** A communication apparatus, comprising a processor and a memory, wherein

the memory is configured to store instructions; and
the processor is configured to execute the instructions, to perform the method according to any one of claims 1 to 13.

**28.** A communication apparatus, comprising a logic circuit and an interface, wherein the logic circuit is coupled to the interface; and
the interface is configured to input and/or output code instructions, and the logic circuit is configured to execute the code instructions, to perform the method according to any one of claims 1 to 13.

**29.** A computer-readable storage medium, wherein the computer-readable storage medium is configured to store a computer program; and when the computer program is executed, the method according to any one of claims 1 to 13 is performed.

**30.** A computer program, wherein when the computer program is executed, the method according to any one of claims 1 to 13 is performed.

**31.** A communication system, comprising a first communication apparatus and a second communication apparatus, wherein the first communication apparatus is configured to perform the method according to any one of claims 1 and 3 to 13, and the second communication apparatus is configured to perform the method according to any one of claims 2 to 13.

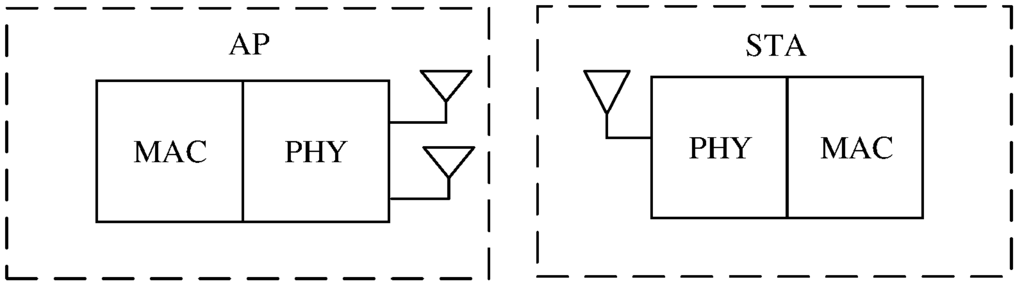


FIG. 1

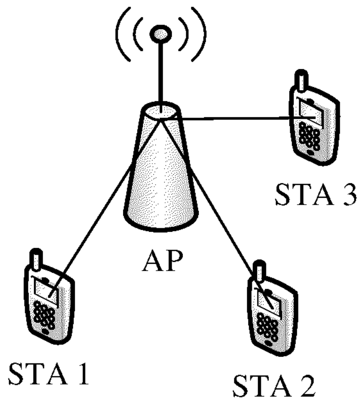


FIG. 2

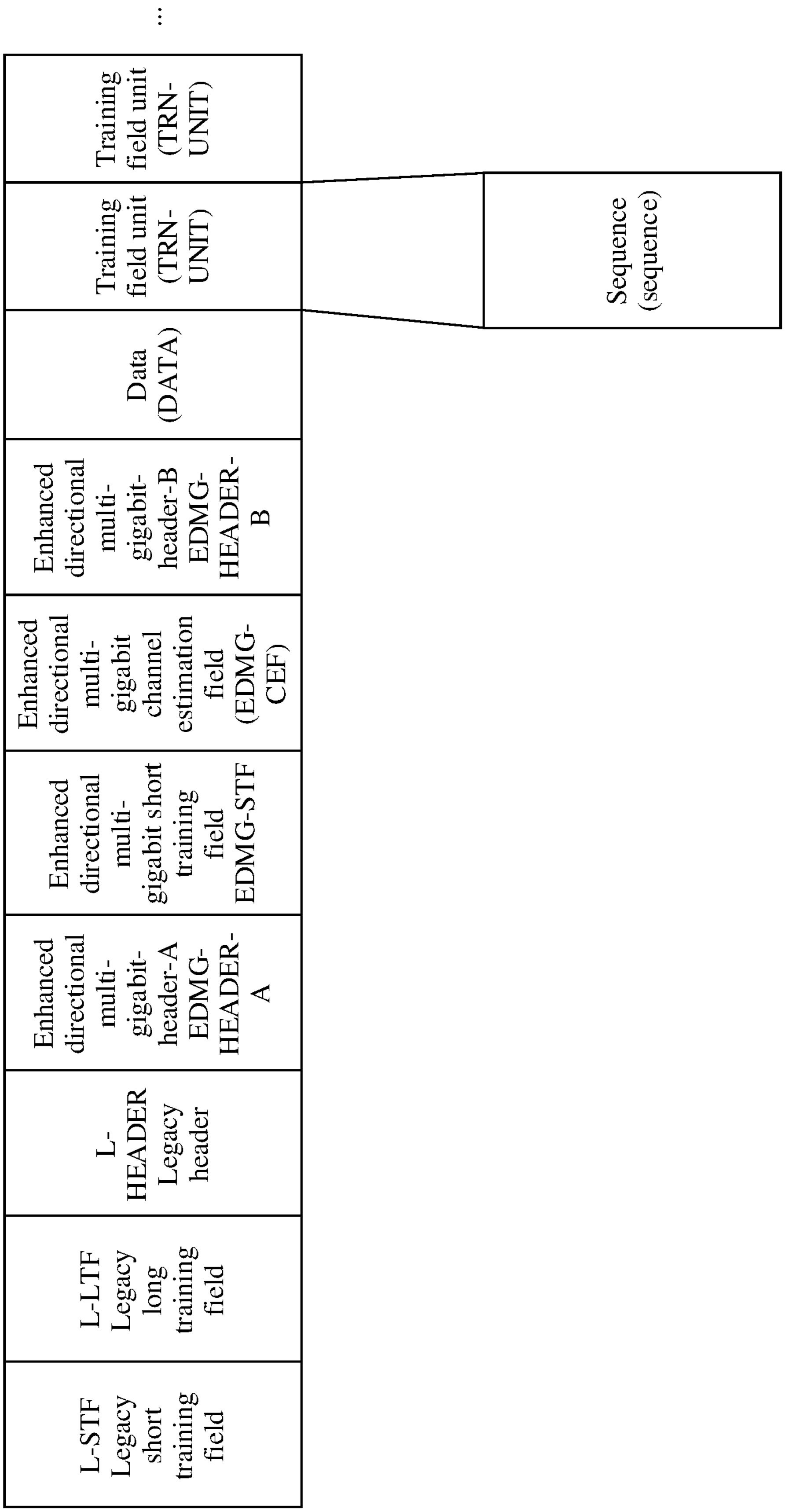

L-STF Legacy short training field
L-LTF Legacy long training field
L-HEADER Legacy header
Enhanced directional multi-gigabit-header-A EDMG-HEADER-A
Enhanced directional multi-gigabit short training field EDMG-STF
Enhanced directional multi-gigabit channel estimation field (EDMG-CEF)
Enhanced directional multi-gigabit-header-B EDMG-HEADER-B
Data (DATA)
Training field unit (TRN-UNIT)
Training field unit (TRN-UNIT)
...
Sequence (sequence)


FIG. 3a

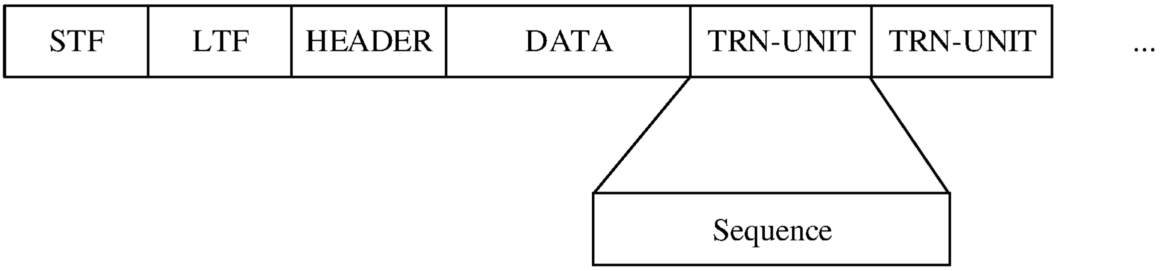


FIG. 3b

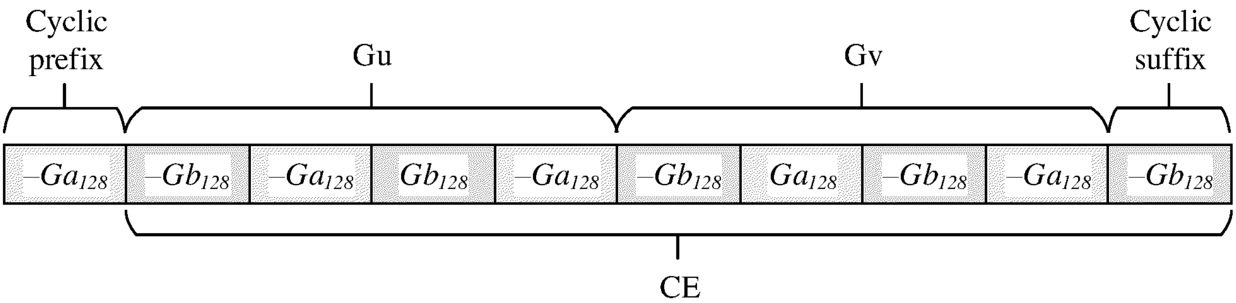


FIG. 4a

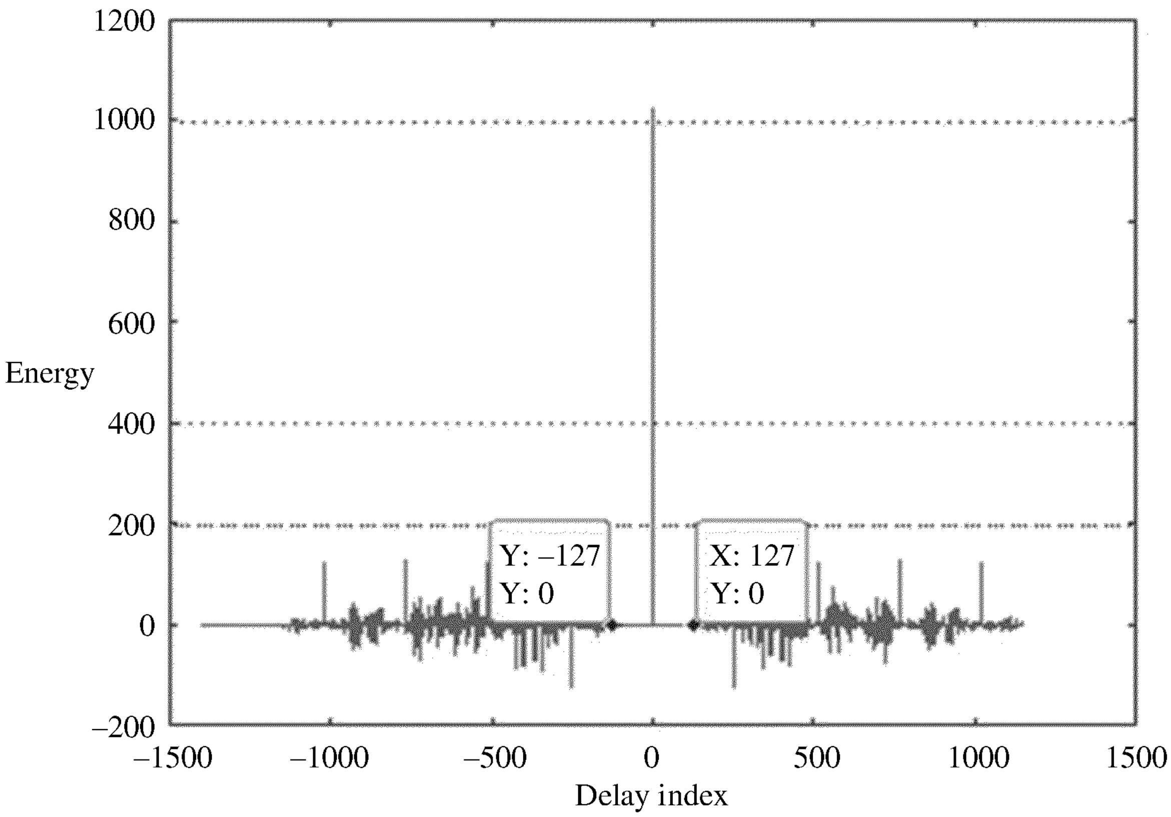


FIG. 4b

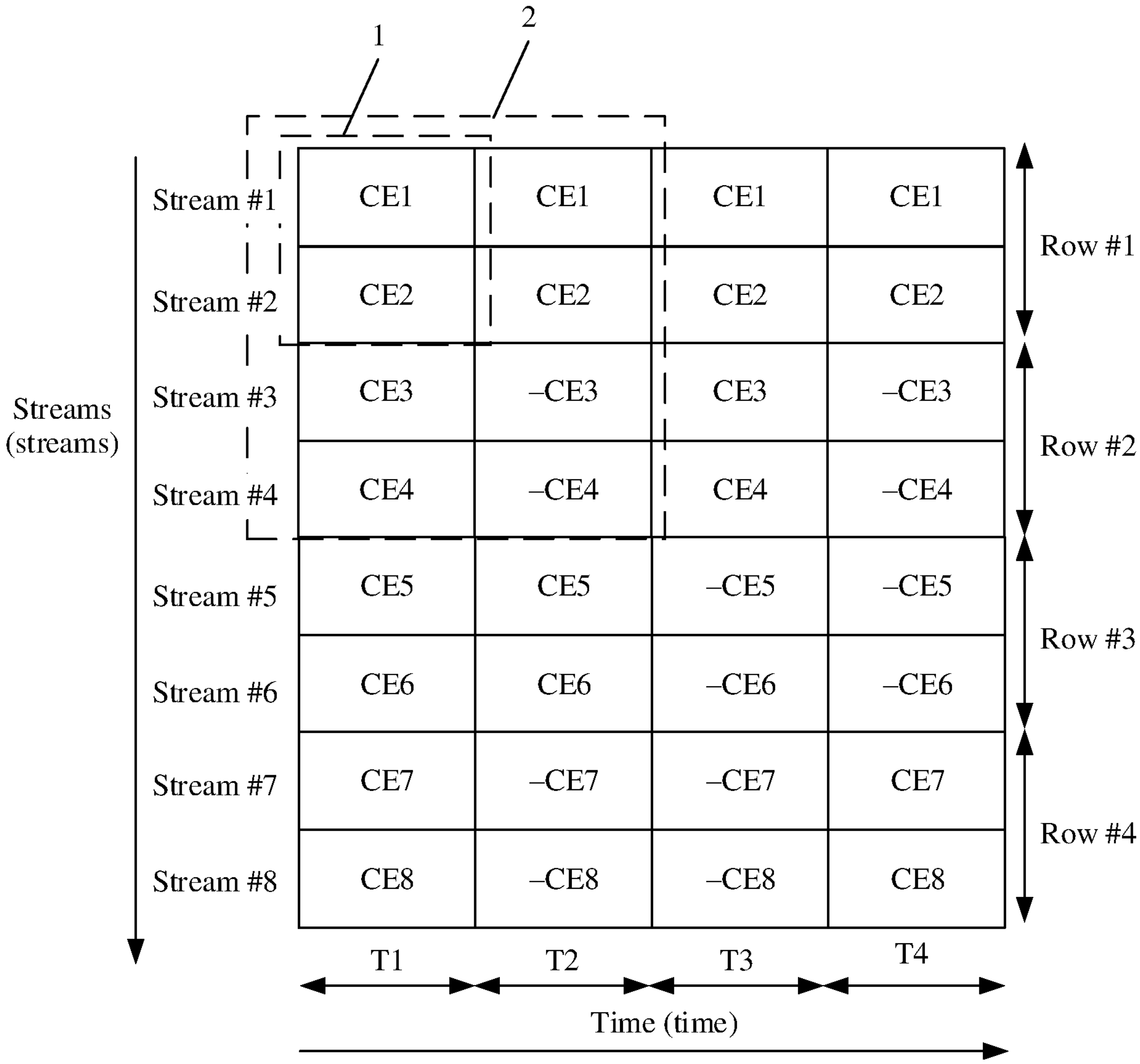
1
2
Streams (streams)
Stream #1
Stream #2
Stream #3
Stream #4
Stream #5
Stream #6
Stream #7
Stream #8
CE1 CE1 CE1 CE1
CE2 CE2 CE2 CE2
CE3 –CE3 CE3 –CE3
CE4 –CE4 CE4 –CE4
CE5 CE5 –CE5 –CE5
CE6 CE6 –CE6 –CE6
CE7 –CE7 –CE7 CE7
CE8 –CE8 –CE8 CE8
Row #1
Row #2
Row #3
Row #4
T1
T2
T3
T4
Time (time)

FIG. 4c

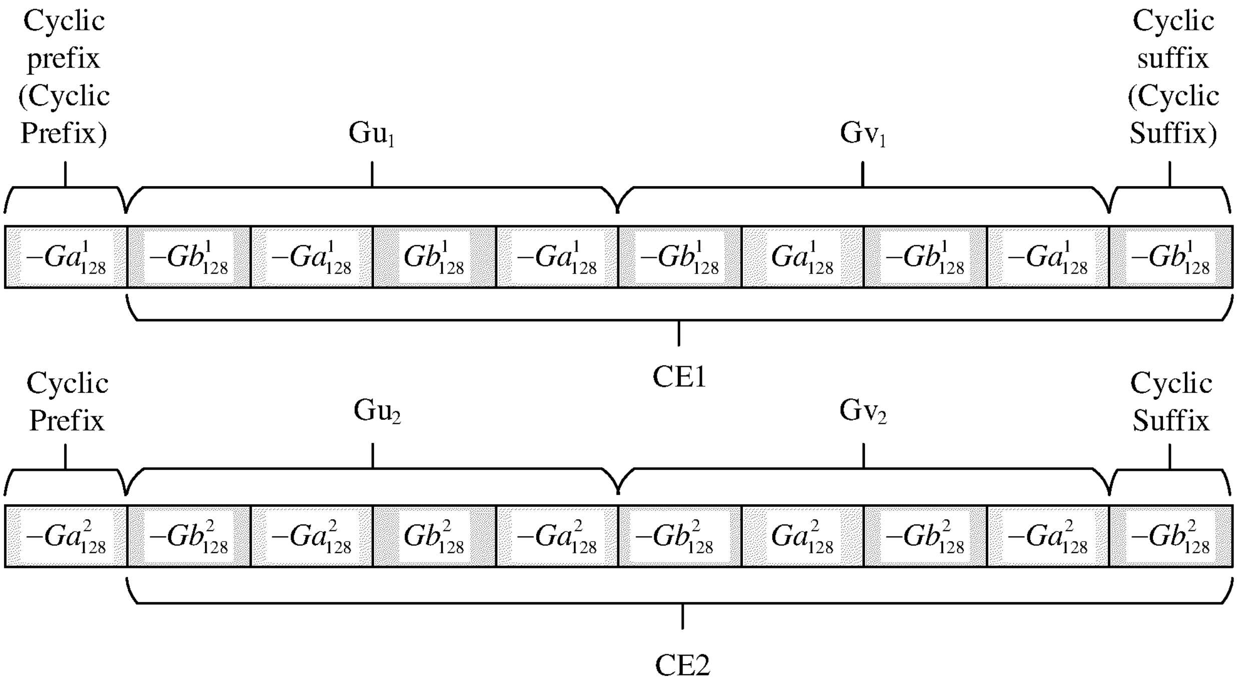

Cyclic prefix (Cyclic Prefix)
Gu1
Gv1
Cyclic suffix (Cyclic Suffix)
$-Ga^1_{128}$ $-Gb^1_{128}$ $-Ga^1_{128}$ $Gb^1_{128}$ $-Ga^1_{128}$ $-Gb^1_{128}$ $Ga^1_{128}$ $-Gb^1_{128}$ $-Ga^1_{128}$ $-Gb^1_{128}$
CE1
Cyclic Prefix
Gu2
Gv2
Cyclic Suffix
$-Ga^2_{128}$ $-Gb^2_{128}$ $-Ga^2_{128}$ $Gb^2_{128}$ $-Ga^2_{128}$ $-Gb^2_{128}$ $Ga^2_{128}$ $-Gb^2_{128}$ $-Ga^2_{128}$ $-Gb^2_{128}$
CE2


FIG. 4d

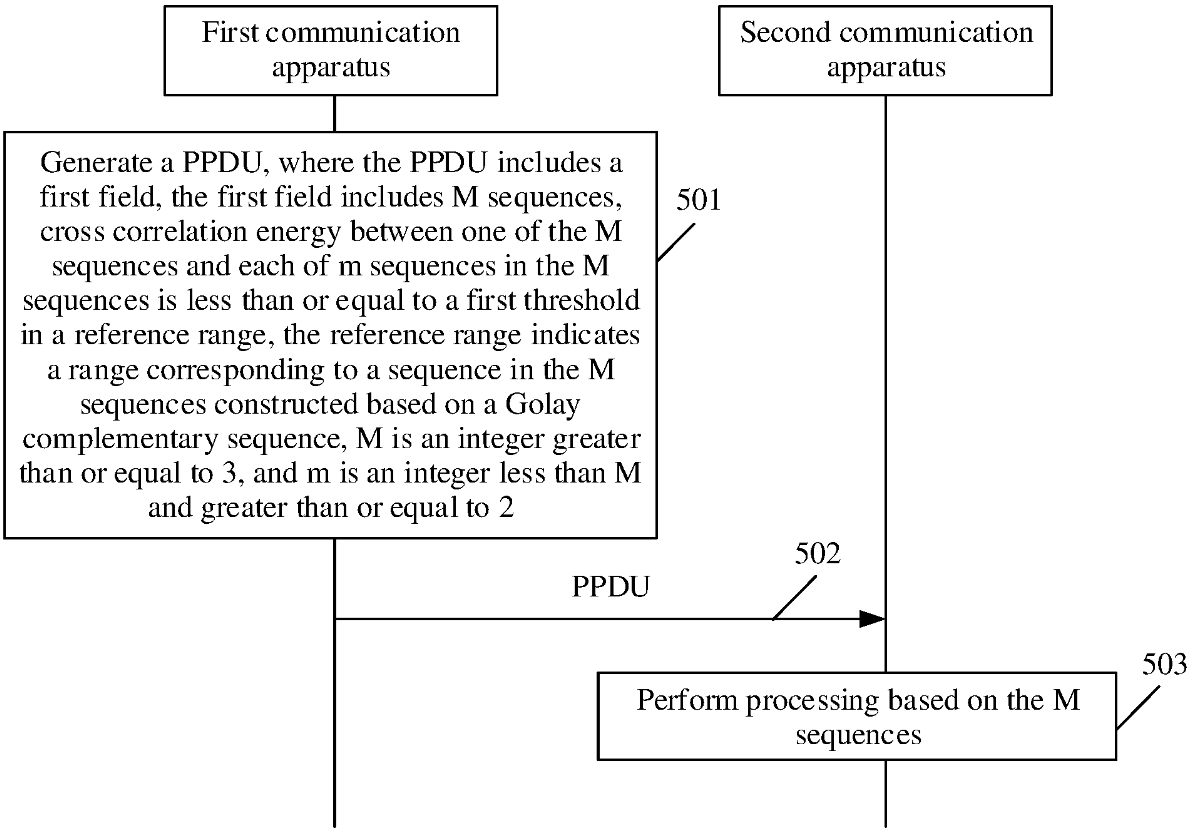

First communication apparatus
Second communication apparatus
Generate a PPDU, where the PPDU includes a first field, the first field includes M sequences, cross correlation energy between one of the M sequences and each of m sequences in the M sequences is less than or equal to a first threshold in a reference range, the reference range indicates a range corresponding to a sequence in the M sequences constructed based on a Golay complementary sequence, M is an integer greater than or equal to 3, and m is an integer less than M and greater than or equal to 2
501
PPDU
502
Perform processing based on the M sequences
503


FIG. 5

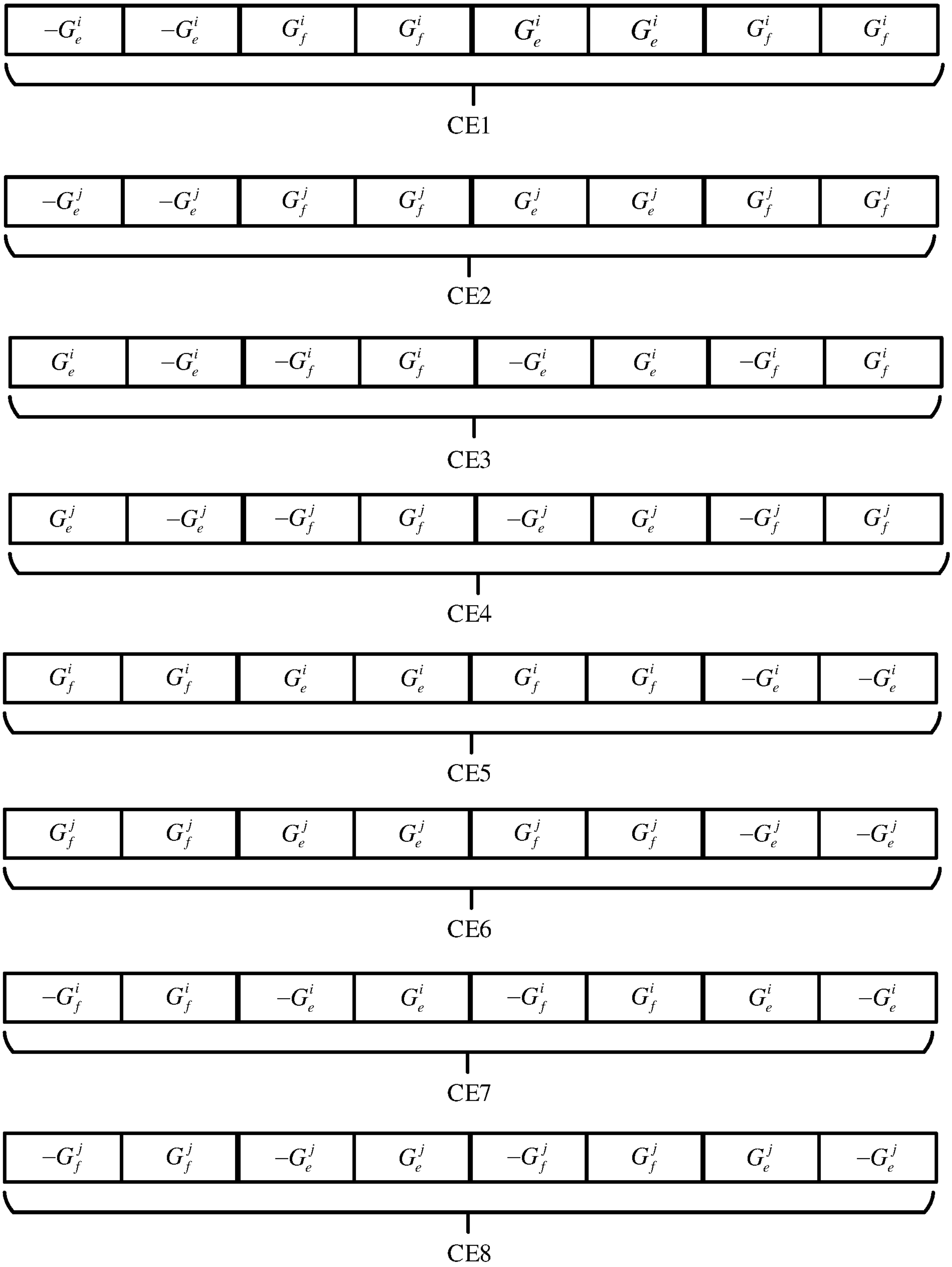
$-G_e^i$ $-G_e^i$ $G_f^i$ $G_f^i$ $G_e^i$ $G_e^i$ $G_f^i$ $G_f^i$
CE1
$-G_e^j$ $-G_e^j$ $G_f^j$ $G_f^j$ $G_e^j$ $G_e^j$ $G_f^j$ $G_f^j$
CE2
$G_e^i$ $-G_e^i$ $-G_f^i$ $G_f^i$ $-G_e^i$ $G_e^i$ $-G_f^i$ $G_f^i$
CE3
$G_e^j$ $-G_e^j$ $-G_f^j$ $G_f^j$ $-G_e^j$ $G_e^j$ $-G_f^j$ $G_f^j$
CE4
$G_f^i$ $G_f^i$ $G_e^i$ $G_e^i$ $G_f^i$ $G_f^i$ $-G_e^i$ $-G_e^i$
CE5
$G_f^j$ $G_f^j$ $G_e^j$ $G_e^j$ $G_f^j$ $G_f^j$ $-G_e^j$ $-G_e^j$
CE6
$-G_f^i$ $G_f^i$ $-G_e^i$ $G_e^i$ $-G_f^i$ $G_f^i$ $G_e^i$ $-G_e^i$
CE7
$-G_f^j$ $G_f^j$ $-G_e^j$ $G_e^j$ $-G_f^j$ $G_f^j$ $G_e^j$ $-G_e^j$
CE8

FIG. 6a

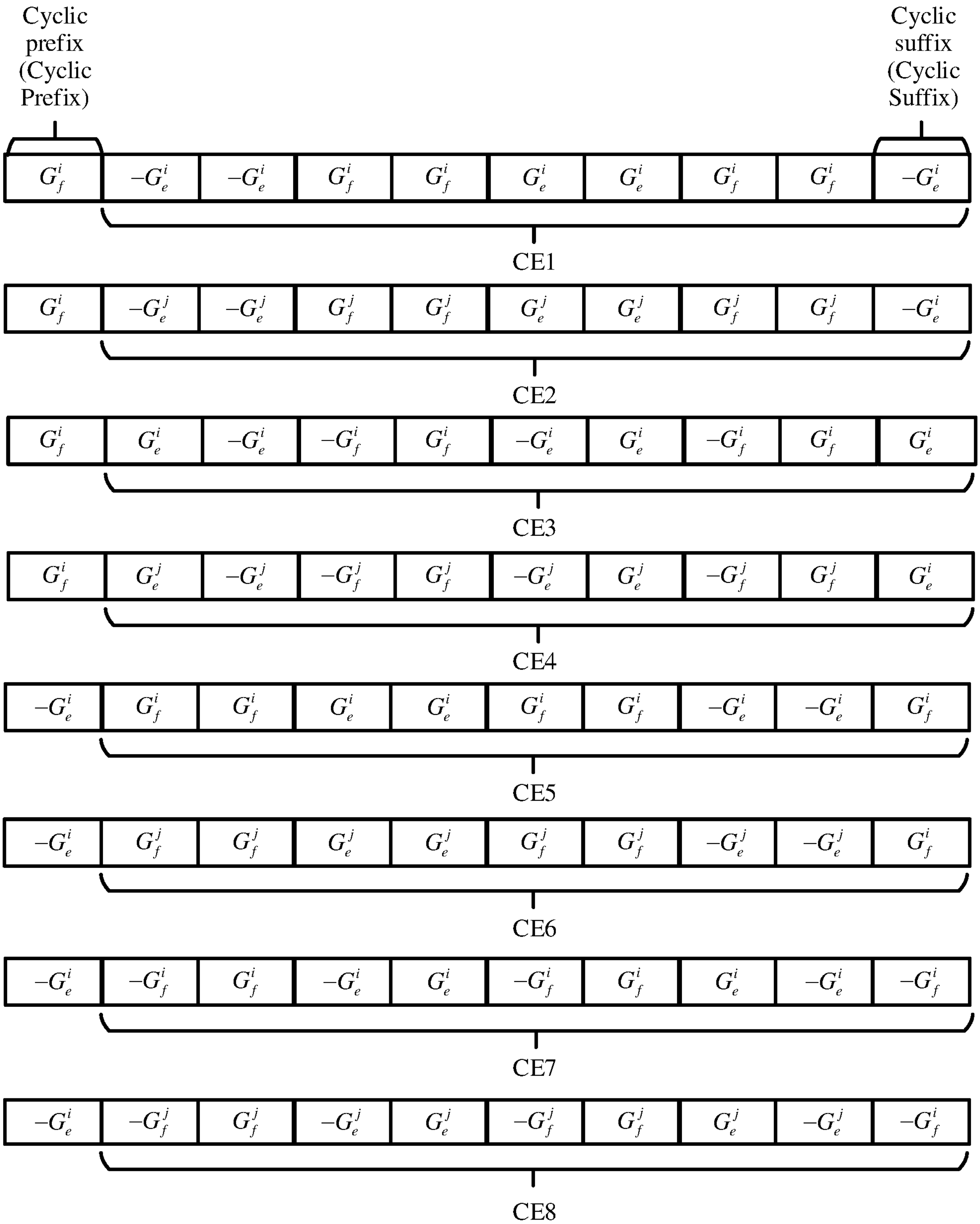
Cyclic prefix (Cyclic Prefix)
Cyclic suffix (Cyclic Suffix)
CE1
CE2
CE3
CE4
CE5
CE6
CE7
CE8

FIG. 6b

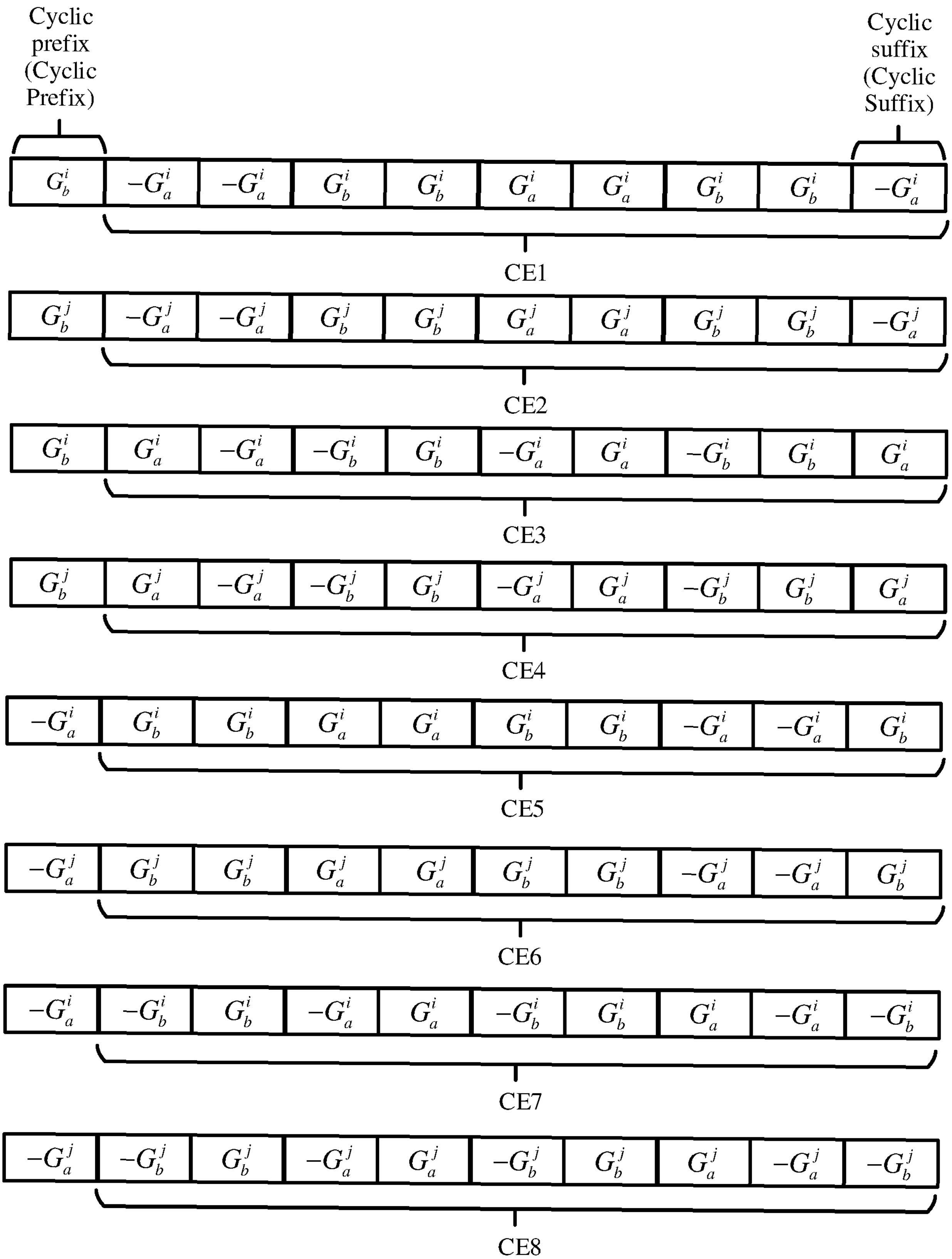

Cyclic prefix (Cyclic Prefix)
Cyclic suffix (Cyclic Suffix)
$G_b^i$ $-G_a^i$ $-G_a^i$ $G_b^i$ $G_b^i$ $G_a^i$ $G_a^i$ $G_b^i$ $G_b^i$ $-G_a^i$
CE1
$G_b^j$ $-G_a^j$ $-G_a^j$ $G_b^j$ $G_b^j$ $G_a^j$ $G_a^j$ $G_b^j$ $G_b^j$ $-G_a^j$
CE2
$G_b^i$ $G_a^i$ $-G_a^i$ $-G_b^i$ $G_b^i$ $-G_a^i$ $G_a^i$ $-G_b^i$ $G_b^i$ $G_a^i$
CE3
$G_b^j$ $G_a^j$ $-G_a^j$ $-G_b^j$ $G_b^j$ $-G_a^j$ $G_a^j$ $-G_b^j$ $G_b^j$ $G_a^j$
CE4
$-G_a^i$ $G_b^i$ $G_b^i$ $G_a^i$ $G_a^i$ $G_b^i$ $G_b^i$ $-G_a^i$ $-G_a^i$ $G_b^i$
CE5
$-G_a^j$ $G_b^j$ $G_b^j$ $G_a^j$ $G_a^j$ $G_b^j$ $G_b^j$ $-G_a^j$ $-G_a^j$ $G_b^j$
CE6
$-G_a^i$ $-G_b^i$ $G_b^i$ $-G_a^i$ $G_a^i$ $-G_b^i$ $G_b^i$ $G_a^i$ $-G_a^i$ $-G_b^i$
CE7
$-G_a^j$ $-G_b^j$ $G_b^j$ $-G_a^j$ $G_a^j$ $-G_b^j$ $G_b^j$ $G_a^j$ $-G_a^j$ $-G_b^j$
CE8


FIG. 6c

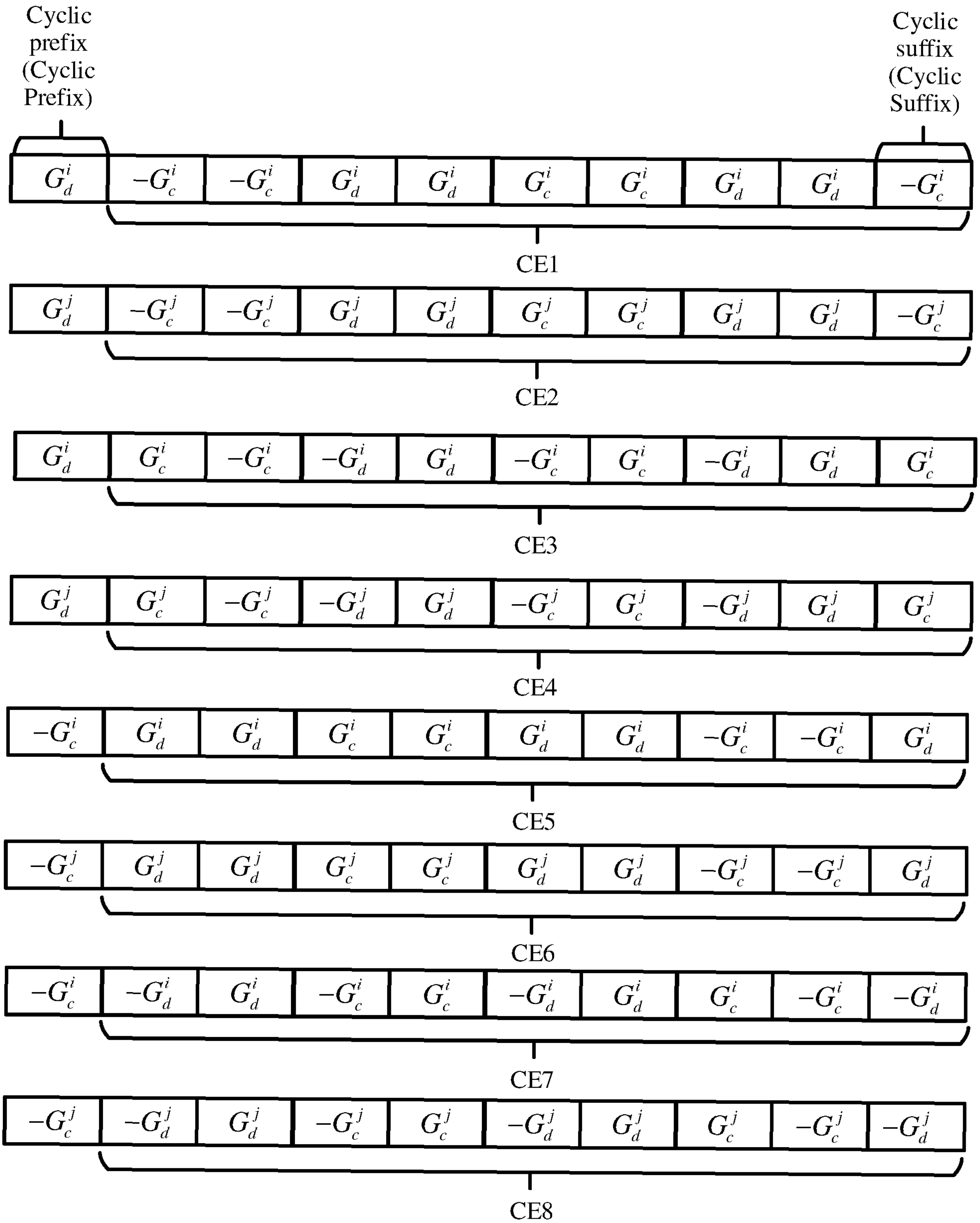
Cyclic prefix (Cyclic Prefix)
Cyclic suffix (Cyclic Suffix)
CE1
CE2
CE3
CE4
CE5
CE6
CE7
CE8

FIG. 6d

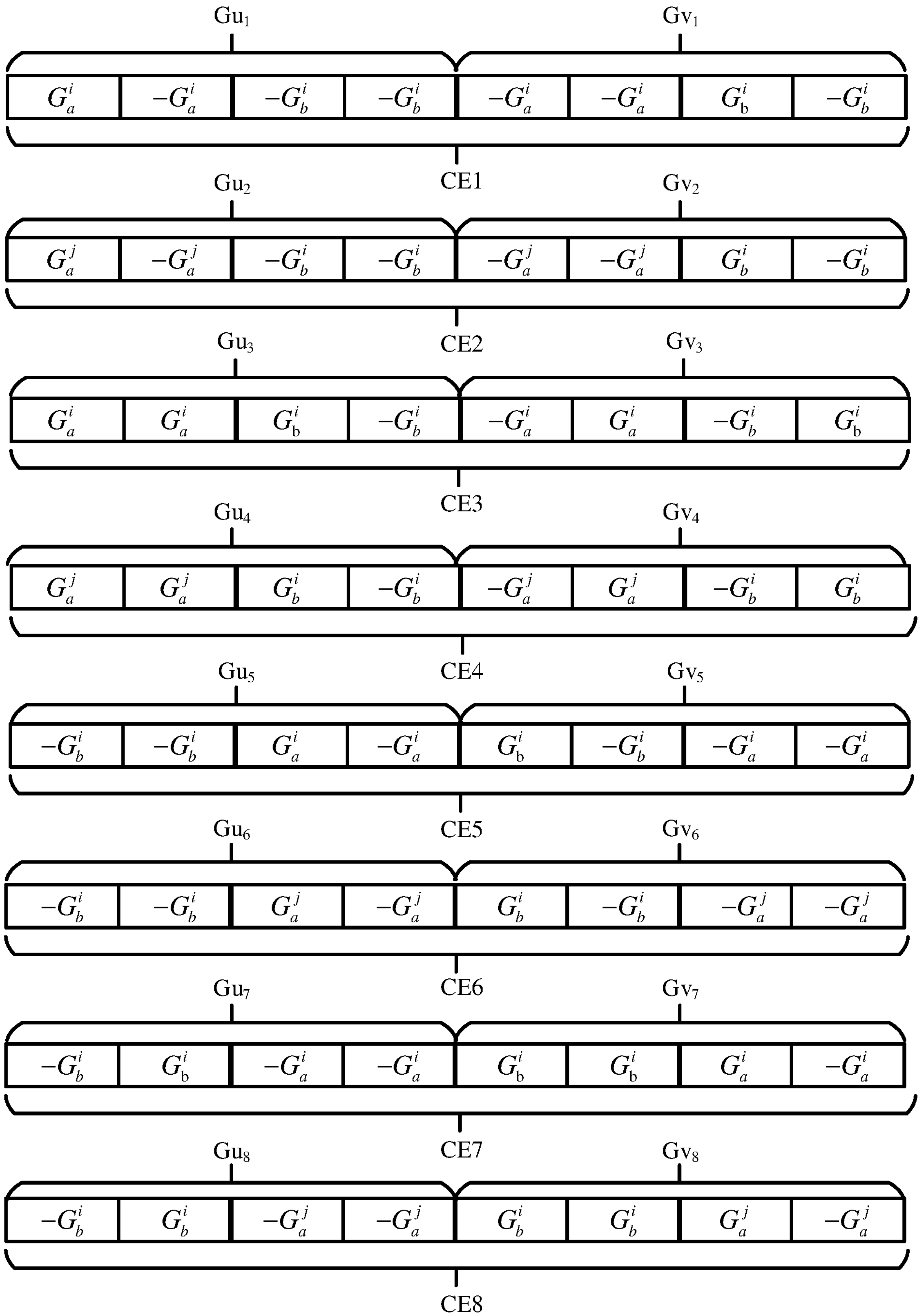
Gu1
Gv1
CE1
Gu2
Gv2
CE2
Gu3
Gv3
CE3
Gu4
Gv4
CE4
Gu5
Gv5
CE5
Gu6
Gv6
CE6
Gu7
Gv7
CE7
Gu8
Gv8
CE8

FIG. 7a

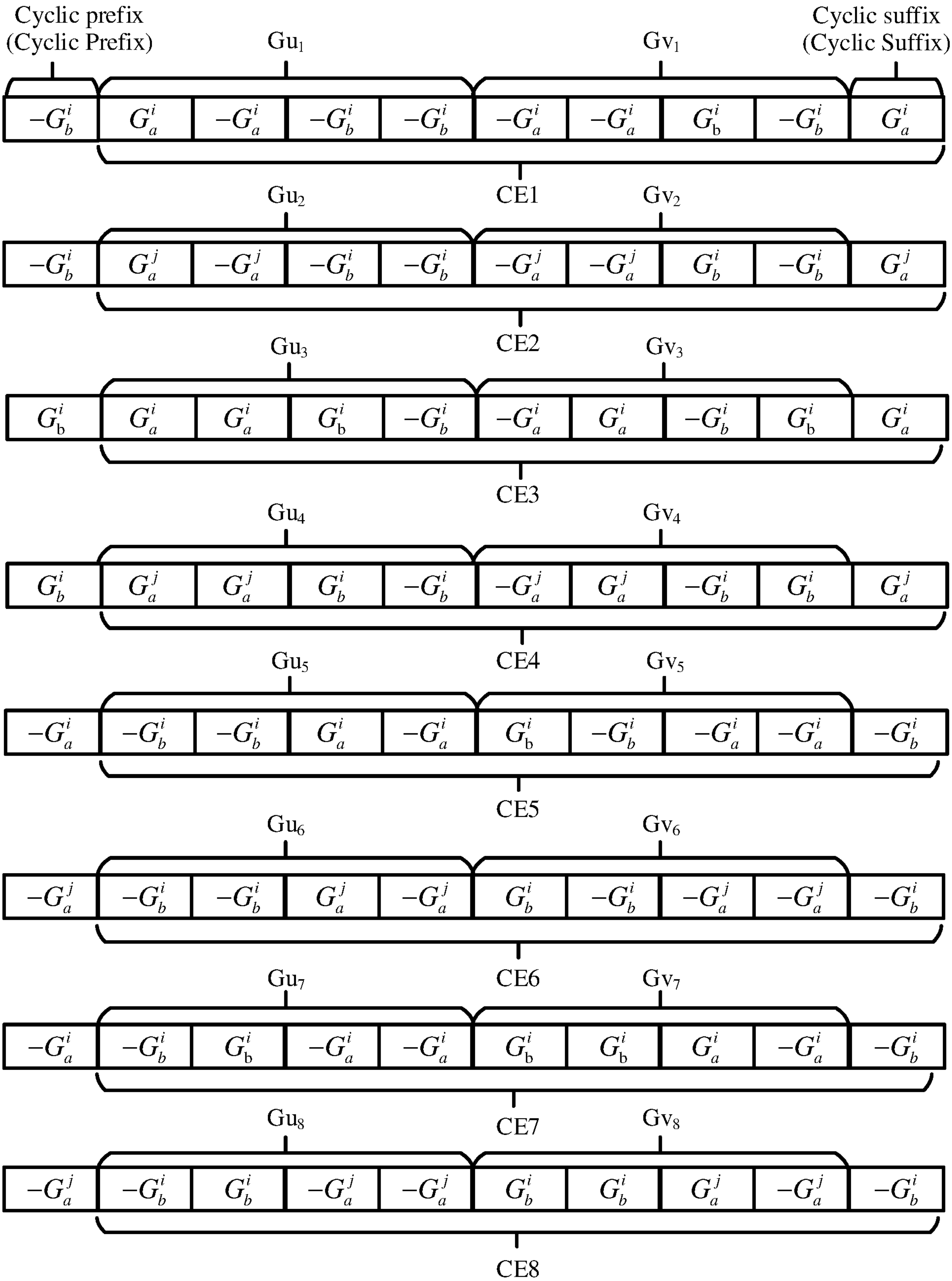
Cyclic prefix
(Cyclic Prefix)
Cyclic suffix
(Cyclic Suffix)
Gu1
Gv1
CE1
Gu2
Gv2
CE2
Gu3
Gv3
CE3
Gu4
Gv4
CE4
Gu5
Gv5
CE5
Gu6
Gv6
CE6
Gu7
Gv7
CE7
Gu8
Gv8
CE8

FIG. 7b

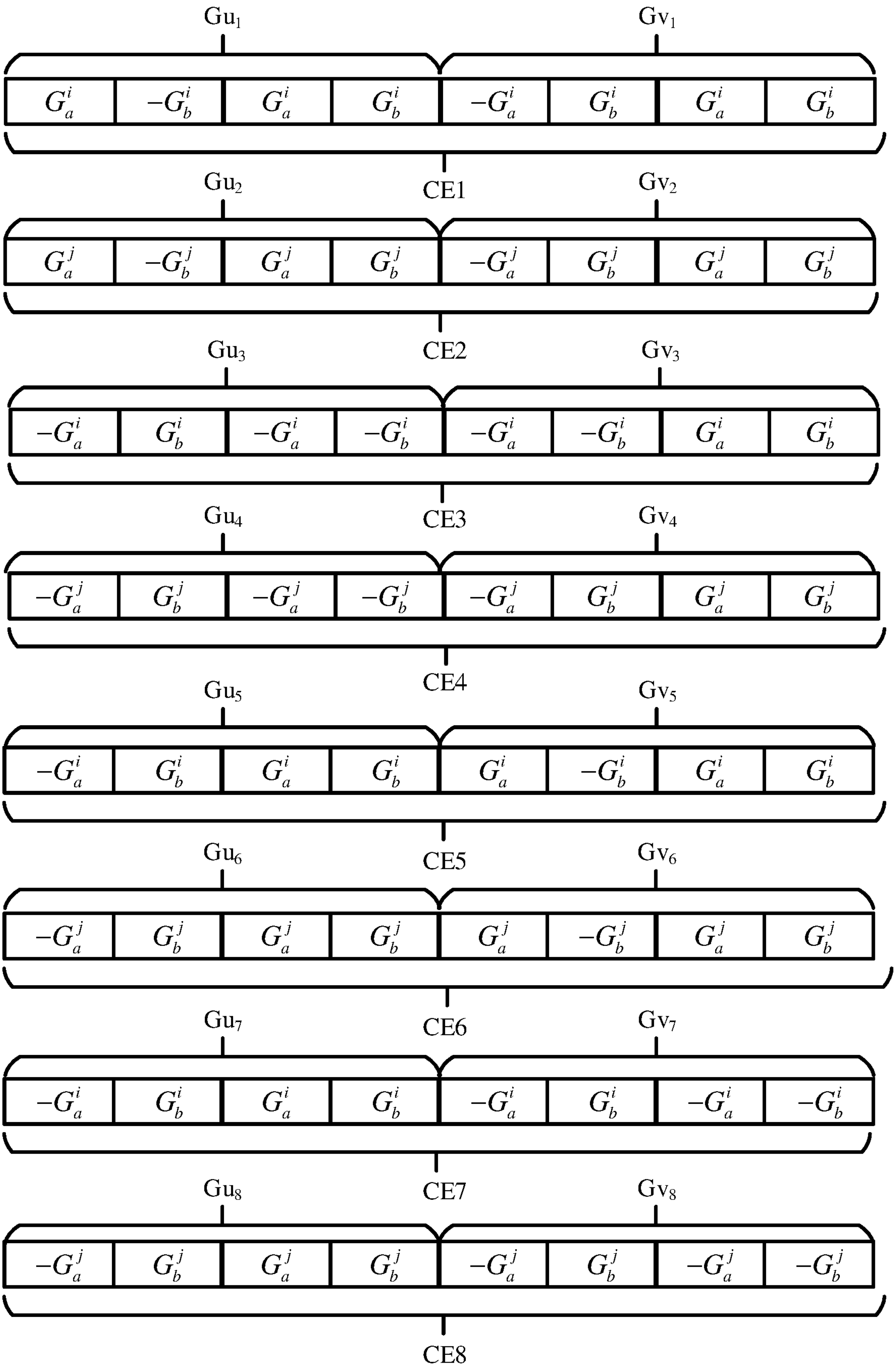
Gu1
Gv1
$G_a^i$ $-G_b^i$ $G_a^i$ $G_b^i$ $-G_a^i$ $G_b^i$ $G_a^i$ $G_b^i$
CE1
Gu2
Gv2
$G_a^j$ $-G_b^j$ $G_a^j$ $G_b^j$ $-G_a^j$ $G_b^j$ $G_a^j$ $G_b^j$
CE2
Gu3
Gv3
$-G_a^i$ $G_b^i$ $-G_a^i$ $-G_b^i$ $-G_a^i$ $-G_b^i$ $G_a^i$ $G_b^i$
CE3
Gu4
Gv4
$-G_a^j$ $G_b^j$ $-G_a^j$ $-G_b^j$ $-G_a^j$ $G_b^j$ $G_a^j$ $G_b^j$
CE4
Gu5
Gv5
$-G_a^i$ $G_b^i$ $G_a^i$ $G_b^i$ $G_a^i$ $-G_b^i$ $G_a^i$ $G_b^i$
CE5
Gu6
Gv6
$-G_a^j$ $G_b^j$ $G_a^j$ $G_b^j$ $G_a^j$ $-G_b^j$ $G_a^j$ $G_b^j$
CE6
Gu7
Gv7
$-G_a^i$ $G_b^i$ $G_a^i$ $G_b^i$ $-G_a^i$ $G_b^i$ $-G_a^i$ $-G_b^i$
CE7
Gu8
Gv8
$-G_a^j$ $G_b^j$ $G_a^j$ $G_b^j$ $-G_a^j$ $G_b^j$ $-G_a^j$ $-G_b^j$
CE8

FIG. 8a

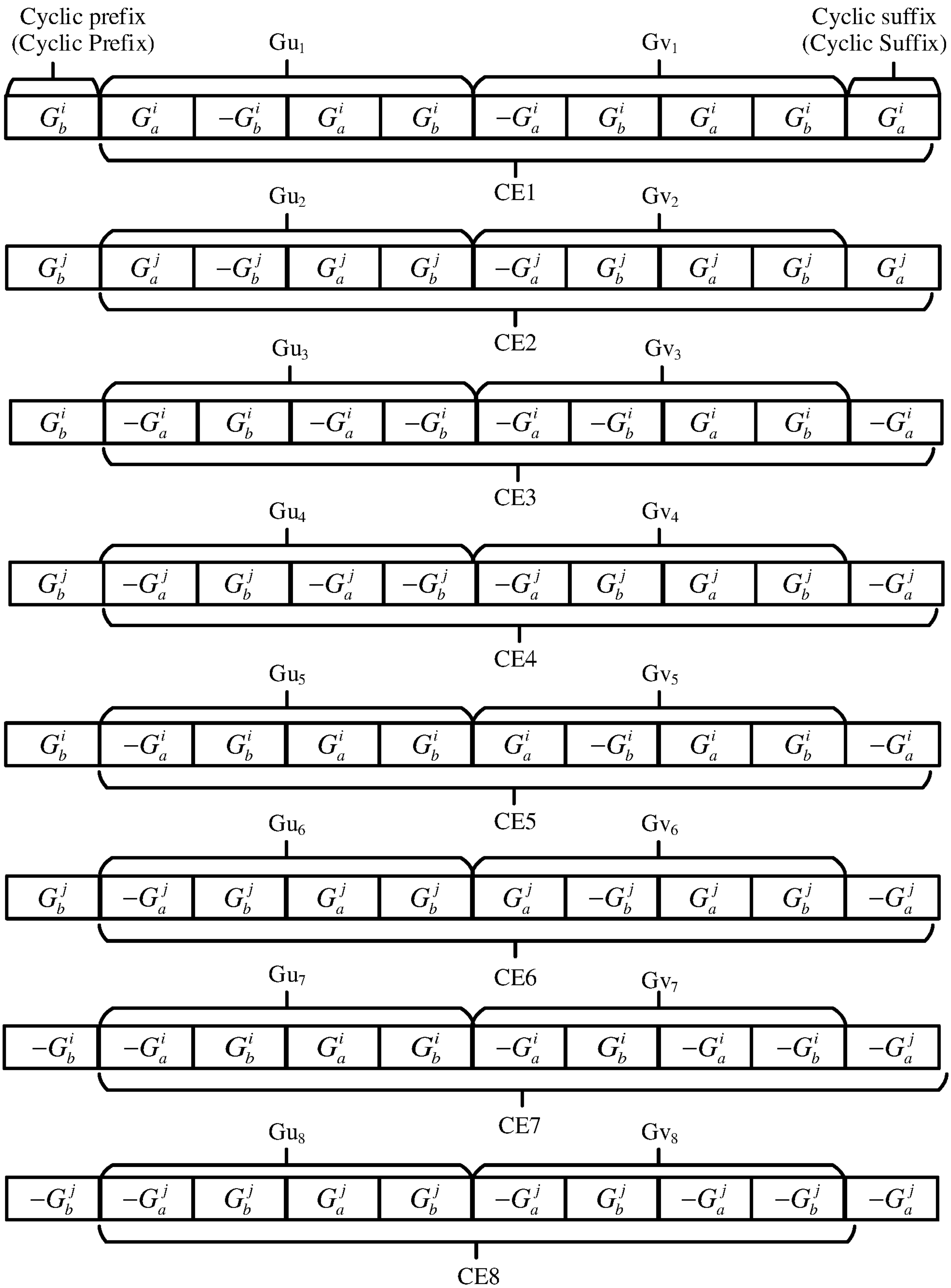
Cyclic prefix (Cyclic Prefix)
Gu1
Gv1
Cyclic suffix (Cyclic Suffix)
CE1
Gu2
Gv2
CE2
Gu3
Gv3
CE3
Gu4
Gv4
CE4
Gu5
Gv5
CE5
Gu6
Gv6
CE6
Gu7
Gv7
CE7
Gu8
Gv8
CE8

FIG. 8b

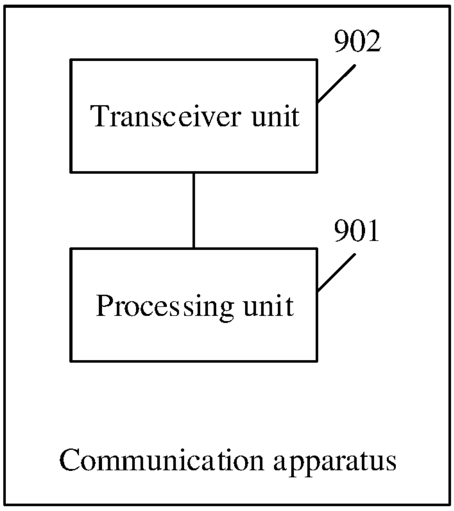
902
Transceiver unit
901
Processing unit
Communication apparatus

FIG. 9

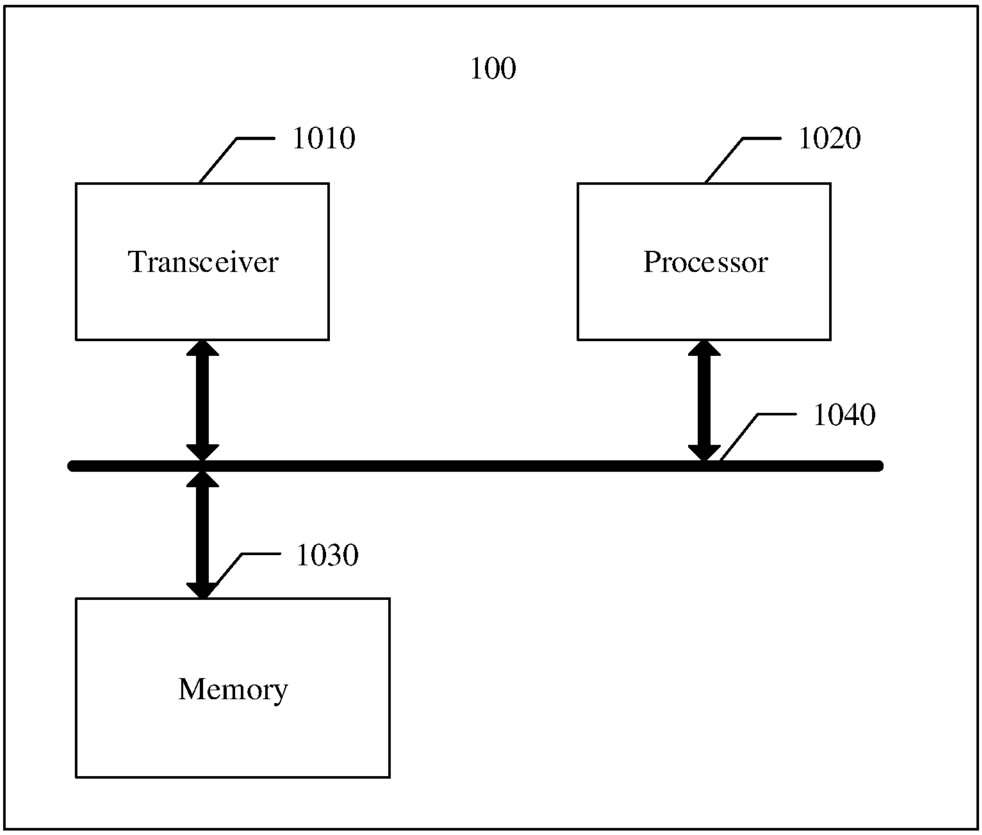
100
1010
1020
Transceiver
Processor
1040
1030
Memory

FIG. 10

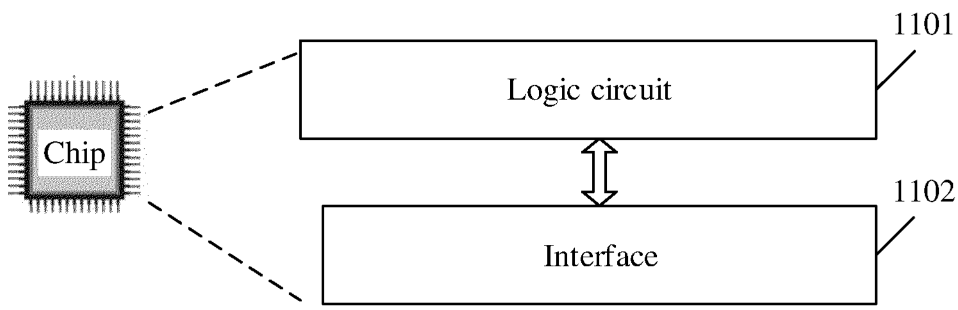


FIG. 11

## INTERNATIONAL SEARCH REPORT

International application No. **PCT/CN2022/138442**

**A. CLASSIFICATION OF SUBJECT MATTER**

H04L 69/323(2022.01)i

According to International Patent Classification (IPC) or to both national classification and IPC

**B. FIELDS SEARCHED**

Minimum documentation searched (classification system followed by classification symbols)

IPC: H04L H04W H04Q

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 格雷, 戈雷, 互补, 互相关, 物理层协议数据单元, 序列, 字段, 域, golay, complementary, cross correlation, PPDU, sequence, section, field

**C. DOCUMENTS CONSIDERED TO BE RELEVANT**

| Category* | Citation of document, with indication, where appropriate, of the relevant passages | Relevant to claim No. |
|---|---|---|
| A | CN 107592142 A (HUAWEI TECHNOLOGIES CO., LTD.) 16 January 2018 (2018-01-16) description, paragraphs [0007]-[0025] and [0040]-[0076] | 1-31 |
| A | CN 111641971 A (HUAWEI TECHNOLOGIES CO., LTD.) 08 September 2020 (2020-09-08) entire document | 1-31 |
| A | US 2019190637 A1 (INTEL CORPORATION) 20 June 2019 (2019-06-20) entire document | 1-31 |
| A | KASHER, A. et al. "DMG Multi-Static PPDU structure" *IEEE 802.11-21/1865r1,* 07 October 2021 (2021-10-07), entire document | 1-31 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 January 2023** | **20 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.
**PCT/CN2022/138442**

| Patent document cited in search report | | | Publication date (day/month/year) | Patent family member(s) | | | Publication date (day/month/year) |
|---|---|---|---|---|---|---|---|
| CN | 107592142 | A | 16 January 2018 | WO | 2018006660 | A1 | 11 January 2018 |
| CN | 111641971 | A | 08 September 2020 | WO | 2020177648 | A1 | 10 September 2020 |
| | | | | US | 2021399822 | A1 | 23 December 2021 |
| US | 2019190637 | A1 | 20 June 2019 | US | 2020313786 | A1 | 01 October 2020 |
| | | | | WO | 2018034701 | A1 | 22 February 2018 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202111521474